# EUROPEAN PATENT SPECIFICATION

(11) **EP 4 362 504 B1**
(45) Date of publication and mention of the grant of the patent: **19.08.2026**
(21) Application number: 22881381.2
(22) Date of filing: 13.10.2022
(51) Int. Cl.: H04M 1/72412, H04W 4/02, H04W 4/20, H04W 4/80, H04W 4/08, H04W 88/02, G06F 3/0481, G06F 3/0484, G06F 3/14, G06F 3/16

(54) **METHOD FOR PROVIDING USER INTERFACE ON BASIS OF LOCATIONAL RELATIONSHIP BETWEEN ELECTRONIC DEVICES, AND ELECTRONIC DEVICE THEREFOR**
VERFAHREN ZUR BEREITSTELLUNG EINER BENUTZERSCHNITTSTELLE AUF BASIS DER STANDORTBEZIEHUNG ZWISCHEN ELEKTRONISCHEN VORRICHTUNGEN UND ELEKTRONISCHE VORRICHTUNG DAFÜR
PROCÉDÉ PERMETTANT DE FOURNIR UNE INTERFACE UTILISATEUR SUR LA BASE D'UNE RELATION DE LOCALISATION ENTRE DES DISPOSITIFS ÉLECTRONIQUES, ET DISPOSITIF ÉLECTRONIQUE ASSOCIÉ

(30) Priority: 14.10.2021 KR 20210136471
(43) Date of publication of application: 01.05.2024
(73) Proprietor: Samsung Electronics Co., Ltd., Suwon-si, Gyeonggi-do 16677 (KR)
(72) Inventor: KWON, Ohyoon, Suwon-si, Gyeonggi-do 16677 (KR); KWON, Zion, Suwon-si, Gyeonggi-do 16677 (KR); BAE, Hyojin, Suwon-si, Gyeonggi-do 16677 (KR); SANG, Jungyun, Suwon-si, Gyeonggi-do 16677 (KR); SUNG, Jiyeon, Suwon-si, Gyeonggi-do 16677 (KR); SONG, Iseul, Suwon-si, Gyeonggi-do 16677 (KR); LEE, Junho, Suwon-si, Gyeonggi-do 16677 (KR); LEE, Hyeonseung, Suwon-si, Gyeonggi-do 16677 (KR); OH, Younghak, Suwon-si, Gyeonggi-do 16677 (KR)
(74) Representative: HGF
(86) International application number: PCT/KR2022/015529
(87) International publication number: WO 2023/063754

(56) References cited:
- WO-A1-2021/103846
- KR-A- 20160 070 571
- KR-A- 20200 040 554
- KR-A- 20210 120 589
- US-A1- 2011 037 712
- US-A1- 2017 366 937
- US-A1- 2020 356 221
- US-A1- 2021 103 366

## Description

### [Technical Field]

Embodiments of the disclosure provide a method for providing a user interface based on a locational relation between electronic devices, and an electronic device therefor.

### [Background Art]

With recent development in digital technologies, various electronic devices such as a mobile communication terminal, a personal digital assistant (PDA), an electronic notebook, a smartphone, a tablet personal computer (PC), a wearable device, and/or a laptop PC are widely used. To support and expand functions thereof, hardware and/or software of such electronic devices have been consciously developed.

Users can consume various media and perform productivity tasks by utilizing one or more electronic devices. For example, the users can wiredly or wirelessly connect two electronic devices to utilize the same as a dual screen, or perform multitasking of performing different tasks by using different electronic devices.

For example, in utilizing multiple electronic devices, a second electronic device may be utilized as a second display for extension of information displayed through a first display by a first electronic device. For example, users utilize a desktop computer, a laptop computer, and/or a tablet PC as a second display for display extension while using a smartphone. Alternatively, an input scheme (e.g., a digitizer, a pen, or a touch interface) that is not supported by the first electronic device may be utilized through the second electronic device. For example, the users can utilize a tablet PC in a touch or digitizer input scheme while using a desktop computer or a laptop computer which does not support a touch or a digitizer.

It is known from US 2017/366937 to provide a method for sharing data with a peripheral device.
US 2011/037712 discloses a mobile terminal configured to search for a device available for short-range communication.
US 2020/356221 discloses an electronic device which can share content with a second electronic device towards which the first electronic device is oriented.

### [Disclosure of Invention]

### [Technical Problem]

Various embodiments provide a method and a device for providing, by an electronic device, interfaces for the electronic device and another electronic device, based on a locational relation with another electronic device.

Various embodiments provide a method and a device for identifying a space and/or a location of at least one peripheral electronic device in proximity to an electronic device, based on various location identification technologies, and providing a differentiated user interface in response to the identified location and/or space of the peripheral electronic device.

Various embodiments provide a method and a device for identifying, in an environment using multiple personalized electronic devices, a two-dimensional and/or three-dimensional (e.g., 360 degrees) locational relation between the electronic devices, providing, based on the locational relation between the electronic devices, user interfaces which are appropriate for data sharing, task sharing, input method simplification, and/or screen sharing, and are divided for the electronic devices, and providing an environment enabling maximization of a multi-device experience.

Various embodiments provide a method and a device for recognizing a locational relation (e.g., a relative location and/or space) between at least two electronic devices, and providing a user interface of a first electronic device and/or a second electronic device, based on at least one of the locational relation, the number of connected electronic devices, the posture and/or orientation of each electronic device, an application executed in each electronic device, and/or display information of each electronic device.

Various embodiments provide a method and a device for recognizing a locational relation among multiple electronic devices, dividing a function that is being executed in a first electronic device into a first function for the first electronic device and a second function for a second electronic device, based on the recognized locational relation, providing a first interface corresponding to the first function by the first electronic device, and providing a second interface corresponding to the second function by the second electronic device.

### [Solution to Problem]

An electronic device according to the invention is defined in claim 1.

An operation method of an electronic device according to the invention is defined in independent claim 11.

To solve the problems above, various embodiments of the disclosure may include a non-transitory computer readable recording medium in which a program for executing the method by a processor is recorded.

An additional scope to which the disclosure is applicable is to be clearly understood by a detailed description below. However, since various changes and modifications within an idea and a scope of the disclosure can be clearly understood by those skilled in the art, the detailed description and such a specific embodiment as a preferred embodiment of the disclosure should be understood as just a given example.

### [Advantageous Effects of Invention]

According to an electronic device and a method for operating the same according to the disclosure, the location of at least one another electronic device that is in proximity to the electronic device can be identified by utilizing various location and/or direction recognition technologies (e.g., a recognition technology using UWB communication, a recognition technology using a radio detection and ranging (RADAR) device, a recognition technology using a light detection and ranging (LIDAR) device, a recognition technology using a depth (or distance) camera (or an infrared camera), and/or a human body recognition technology (e.g., a face recognition technology, a recognition technology using thermal infrared, and an iris recognition technology)). According to various embodiments, the electronic device can identify a locational relation (e.g., a relative location and/or space) between electronic devices through identification of the location of at least one another electronic device. According to various embodiments, the electronic device can provide a differentiated interface (e.g., a screen interface and/or a sound interface) to the electronic device and another electronic device, based on the locational relation between the electronic devices.

According to various embodiments, an electronic device can recognize a locational relation (e.g., a relative location and/or space) between two electronic devices, and identify a user's intention, based on at least one of various types of information such as the locational relation, the number of connected electronic devices, the posture and/or orientation of each electronic device, an application executed by each electronic device, and/or display information of each electronic device. According to various embodiments, the electronic device can provide a differentiated interface to each electronic device, based on the user's intention, and accordingly can provide a seamless interaction between the electronic devices, thereby enhancing user convenience.

According to various embodiments, an electronic device can automatically provide a user interface appropriate for the electronic devices, based on whether the electronic device and at least one another electronic device are in proximity and/or the status (e.g., movement) of each electronic device, without a separate input from a user, thereby performing automatic switching to a screen (or mode) intended by the user.

According to various embodiments, an electronic device can recognize a location relation among multiple electronic devices, divide a function (or an application) that is being executed by the electronic device into a first function for the electronic device and a second function for at least one another electronic device, based on the recognized locational relation, provide a first interface corresponding to the first function by the electronic device, and provide a second interface corresponding to the second function by another electronic device, thereby enhancing utilization and usability of the function (or the application).

In addition, various other effects directly or indirectly identified through the disclosure can be provided.

### [Brief Description of Drawings]

In relation to the description of drawings, the same or similar reference numerals will be used to refer to the same or a similar element.
FIG. 1 is a block diagram illustrating an example electronic device in a network environment according to various embodiments.
FIG. 2 illustrates an example of utilization among multiple electronic devices according to various embodiments.
FIG. 3 illustrates an operation method among multiple electronic devices according to various embodiments.
FIG. 4 is a flowchart illustrating an operation method of an electronic device according to various embodiments.
FIGS. 5A, 5B, 5C, 5D, and 5E illustrate various examples of configuring a related interface based on a locational relation by an electronic device according to various embodiments.
FIG. 6 illustrates an operation method among multiple electronic devices according to various embodiments.
FIGS. 7A and 7B illustrate examples of configuring and providing a matrix for locational relation identification by an electronic device according to an embodiment.
FIG. 8 is a flowchart illustrating an operation method of an electronic device according to various embodiments.
FIGS. 9A and 9B illustrate examples of providing an interface based on a locational relation by an electronic device according to various embodiments.
FIGS. 10A, 10B, and 10C illustrate examples of providing an interface, based on a locational relation by an electronic device according to various embodiments.
FIG. 11 illustrates an example of providing an interface based on a change in a locational relation by an electronic device according to various embodiments.
FIGS. 12A, 12B, and 12C illustrate examples of providing an interface based on a change in a locational relation by an electronic device according to various embodiments.
FIGS. 13, 14, and 15 illustrate examples of providing an interface based on a change in a locational relation by an electronic device according to various embodiments.
FIGS. 16, 17, 18, and 19 illustrate various examples of providing an interface based on an interaction between an external electronic device and an electronic device according to various embodiments.
FIG. 20 illustrates an example of providing an interface based on an interaction between an electronic device and multiple external electronic devices according to various embodiments.
FIG. 21 illustrates an example of providing an interface, based on an interface with an electronic device and multiple external electronic devices according to various embodiments.
FIGS. 22 and 23 illustrate examples of providing an interface, based on a change in a locational relation between an external electronic device and an electronic device according to various embodiments.

### [Mode for the Invention]

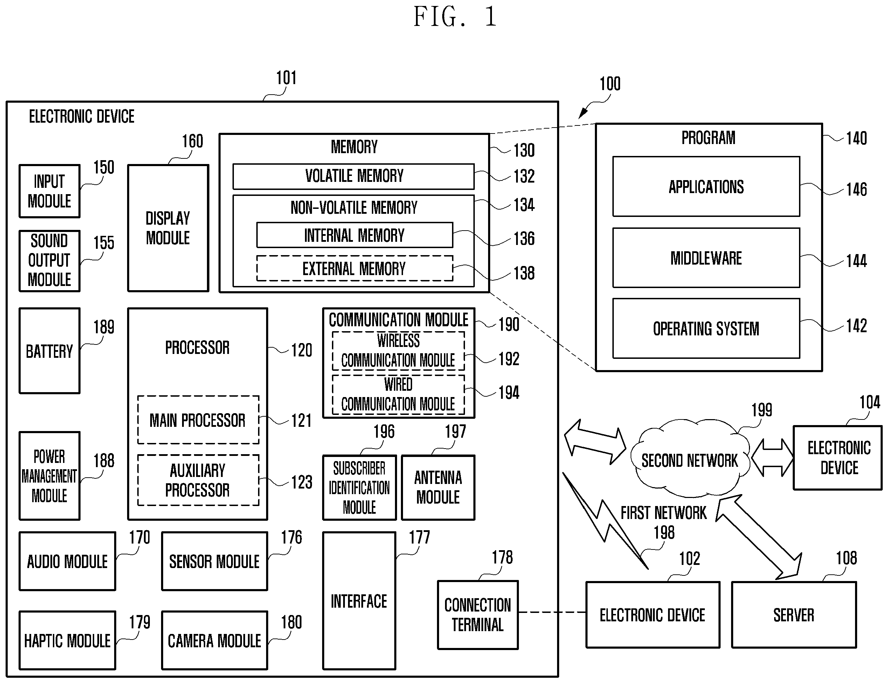

FIG 1 is a block diagram illustrating an example electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In various embodiments, at least one of the components (e.g., the connecting terminal 178) may be omitted from the electronic device 101, or one or more other components may be added in the electronic device 101. In various embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, **a** HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. **In** an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

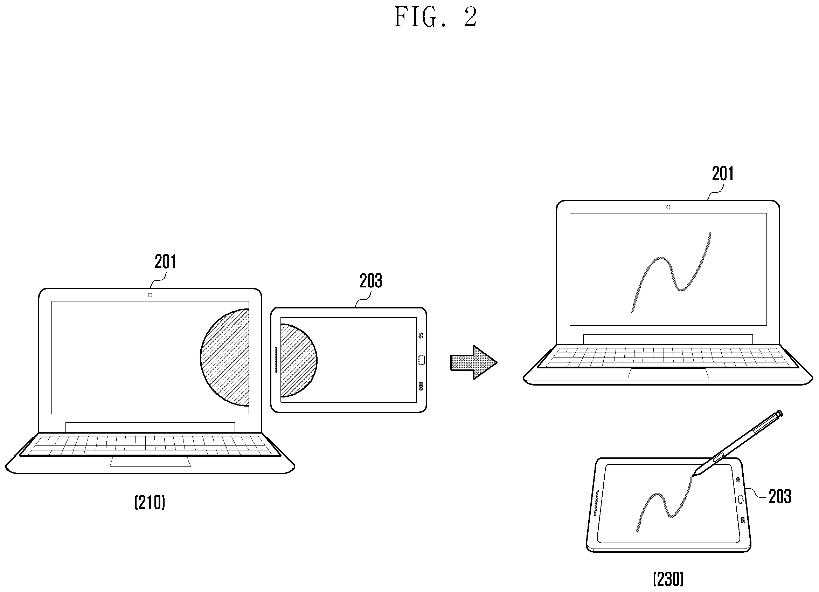

FIG. 2 illustrates an example of utilization among multiple electronic devices according to various embodiments.

Referring to FIG. 2, a first electronic device 201 (e.g., the electronic device 101 of FIG. 1) may detect whether a second electronic device 203 (e.g., the electronic device 102 of FIG. 1) is in proximity, by using a communication module (e.g., the communication module 190 of FIG. 1). According to an embodiment, the first electronic device 201 may determine that the second electronic device 203 is in proximity when the second electronic device 203 is within a designated distance threshold (e.g., about 5 cm, 10 cm, or 30 cm). For example, the first electronic device 201 may detect whether the second electronic device is in proximity, by using short-range wireless communication such as an ultra-wide band (UWB), Bluetooth, and/or Bluetooth low energy (BLE).

The first electronic device 201 may identify a status (or context) of the first electronic device 201 by using a sensor module (e.g., the sensor module 176 of FIG. 1) when the distance from the second electronic device 203 is equal to or less than a distance threshold. The status of the first electronic device 201 relates to a movement of the first electronic device 201, and may indicate a user's intention. The movement of the first electronic device 201 may be detected by the amount of a change in the location of the first electronic device 201 or by using the sensor module 176 such as an acceleration sensor or a gyro sensor. The amount of the change in the first electronic device 201 may be acquired based on an hourly change in the location, through the communication module 190.

For example, when a user walks, runs, or drives a vehicle while carrying the first electronic device 201 and the second electronic device 203, the movement of the first electronic device 201 is in a dynamic status, and thus the user may have no intention to connect the second electronic device 203 and use the same. Alternatively, when the user drives a vehicle while placing the second electronic device 203 in proximity to the first electronic device 201, the user may have no intention to connect the first electronic device 201 to the second electronic device 203 and use the same. When the first electronic device 201 is in proximity to the second electronic device 203, the first electronic device may identify whether the user has an intention to connect to the second electronic device 203, based on the movement of the first electronic device 201. When the movement of the first electronic device 201 is determined to be a static status, such as a case where the first electronic device 201 is controlled while being put on a fixed plane (e.g., a desk), the first electronic device 201 may determine that the user has no intention to connect the second electronic device 203. However, when both the first electronic device 201 and the second electronic device 203 have been stationary for an extended period of time, and one of the first electronic device 201 and the second electronic device 203 are brought in proximity to each other, the first electronic device 201 may determine that the user intended to connect the second electronic device 203.

According to an embodiment, the first electronic device 201 may be connected to the second electronic device 203 through short-range wireless communication when the status of the first electronic device 201 corresponds to a designated status (e.g., a static status). For example, the first electronic device 201 may be connected through communication which can measure a relative location (e.g., distance and/or direction) from the second electronic device 203. For example, communication which can measure the distance and/or direction (e.g., an angle of arrival (AOA)) may be UWB communication. For example, the UWB communication corresponds to a two-way ranging (hereinafter, referred to as "TWR"), and can measure the location of each electronic device.

The TWR scheme may include a single side TWR (SS-TWR) scheme or a double side TWR (DS-TWR) scheme. In the SS-TWR scheme, when the first electronic device 201 transmits a ranging poll message (or ranging poll data) to the second electronic device 203, the second electronic device 203 transmits a ranging response message to the first electronic device 201 and the first electronic device 201 identifies the distance from the second electronic device 203 (or the location of the second electronic device 203). The ranging response message may include at least one of a time point at which the ranging poll message is received, a time point at which the ranging response message is transmitted, or a horizontal or vertical angle for calculation of AOA.

In the DS-TWR scheme, when the second electronic device 203 transmits a ranging poll message, the first electronic device 201 transmits a ranging response message to the second electronic device 203 and the second electronic device 203 transmits a ranging final message to the first electronic device 201, so that the second electronic device 203 may identify the distance from the first electronic device 201. An example of the UWB communication is merely provided to help understanding of the disclosure, and is not intended to limit embodiments of the disclosure.

According to various embodiments, when the second electronic device 203 is connected, the first electronic device 201 may identify a locational relation (or location relationship) (e.g., a relative location and/or space) with the second electronic device 203 through UWB communication. According to an embodiment, the first electronic device 201 may also identify a locational relation with the second electronic device 203 through UWB communication while the second electronic device 203 is in proximity before connection to the second electronic device 203.

In an embodiment, the locational relation may include at least one of a direction in which the second electronic device 203 is located with respect to the first electronic device 201, how far the second electronic device is spaced from the first electronic device (e.g., a distance), a display orientation of the first electronic device 201, a display orientation of the second electronic device 203, the orientation of the first electronic device 201 with reference to the direction of gravity, or the orientation of the second electronic device 203 with reference to the direction of gravity.

For example, the second electronic device 203 may be located in one of all directions (e.g., 360 degrees) such as forward, backward, leftward, rightward, upward, and diagonal directions of the first electronic device 201 with reference to the first electronic device 201. For example, when the second electronic device 203 is located in front of the first electronic device 201, the second electronic device 203 may be located closer to a user than the first electronic device 201. In another example, when the second electronic device 203 is located behind the first electronic device 201, the second electronic device 203 may be located farther from the user than the first electronic device 201. **In** another example, when the second electronic device 203 is located above the first electronic device 201, the second electronic device 203 may be located, for example, above the first electronic device 201 (e.g., above a display).

**In** an embodiment, when the second electronic device 203 may be located at least one of all directions with reference to the first electronic device 201, the corresponding location (e.g., a forward, backward, leftward, rightward, upward, or diagonal direction) may be determined according to a relative relation between the first electronic device 201 and the second electronic device 203, and the distance from the user or the location of the user may not be considered. For example, when the second electronic device 203 is located in front of the first electronic device 201, the location of the user may be different from the description above. For example, the user may be located between the first electronic device 201 and the second electronic device 203, and one of the first electronic device 201 and the second electronic device 203 may be located close to the user, or each of the first electronic device and the second electronic device may be located apart from the user by an approximately similar distance.

**In** an embodiment, the first electronic device 201 may be spaced apart from the second electronic device 203 by a designated distance. For example, the first electronic device 201 may be spaced apart from the second electronic device 203 by at least one of a first distance (e.g., about less than 1 cm), a second distance (e.g., about less than 5 cm), or a third distance (e.g., about less than 10 cm).

**In** an embodiment, the display orientation may indicate whether the orientation of a display (e.g., the display module 160 of FIG. 1) of the first electronic device 201 or the second electronic device 203 is a longitudinal orientation (e.g., portrait) or a transverse orientation (e.g., landscape). **In** an embodiment, the orientation with reference to the direction of gravity may indicate whether the electronic device is in an approximately vertical direction (e.g., vertically stands or stands at an angle close to the vertical), or is in an approximately horizontal direction (e.g., is horizontally placed or is placed at an angle close to the horizontal), with reference to the direction of gravity, by using a gyro sensor or a magnetic sensor.

For example, when the electronic device 201 or 203 approximately vertically stands (e.g., vertically stands or stands at an angle close to the vertical), the electronic device 201 or 203 may be in a direction approximately identical to the direction of gravity. **In** another example, when the electronic device 201 or 203 is approximately horizontally placed (e.g., is vertically placed or is placed at an angle close to the horizontal), the electronic device 201 or 203 may be in a direction approximately perpendicular to the direction of gravity. According to an embodiment, when the electronic device 201 is approximately horizontally placed, the electronic device 201 may be placed, for example, on a surface such a desk, and the approximately horizontal surface may be approximately perpendicular to the direction of gravity.

According to an embodiment, the first electronic device 201 may receive, from the second electronic device 203, information on the display orientation of the second electronic device 203 (e.g., a mode of displaying the portrait or the landscape) and/or the orientation of the second electronic device 203 with reference to the direction of gravity. According to an embodiment, the first electronic device 201 may transmit, to the second electronic device 203, information on the display orientation of the first electronic device 201 and/or the orientation of the first electronic device 201 with reference to the direction of gravity.

According to various embodiments, the first electronic device 201 may share, with the second electronic device 203, information on an operation that is being executed (e.g., application information and/or display information of the first electronic device 201). The first electronic device 201 may transmit, to the second electronic device 203, display information and/or information on an application being executed in the first electronic device 201. **In** an embodiment, the first electronic device 201 may receive, from the second electronic device 203, display information and/or information on an application being executed in the second electronic device 203.

**In** an embodiment, the application information may include information related to an application which is executed by an electronic device 101 (e.g., the first electronic device 201 or the second electronic device 203), and has an execution screen being displayed through a display (e.g., the display module 160 of FIG. 1) of the electronic device 101, and may mean an application that is being executed in the foreground.

According to an embodiment, the application information may include an identifier for identifying an application, a name, and/or a display size of an execution screen of the application. In an embodiment, the display information may include at least one of the resolution and/or a display mode of the display module 160 of the electronic device 101 (e.g., the first electronic device 201 or the second electronic device 203). In an embodiment, the display mode may include at least one of a normal mode, an extension mode, or a multi-window mode.

According to various embodiments, the first electronic device 201 may provide an interface (e.g., a screen interface and/or a sound interface) which is distinguished between the first electronic device 201 and the second electronic device 203, at least based on a locational relation (e.g., relative location and/or space) with the second electronic device 203, an application executed in the first electronic device 201 or the second electronic device 203, display information of the first electronic device 201 or the second electronic device 203, the number of connected electronic devices (e.g., the number of the second electronic devices 203), the status of the first electronic device 201 or the second electronic device 203, and/or the orientation of the first electronic device 201 or the second electronic device 203 with reference to the direction of gravity.

According to an embodiment, when providing the interface, the first electronic device 201 may also provide an interface for the first electronic device 201 and the second electronic device 203 in consideration of the location relative to the user (e.g., the distance from the user, the direction of the user, and/or a gaze direction of the user), together with various types of information described above. Hereinafter, an example of implementing an interface based on the location relative to the user will be described below.

In an embodiment, a screen interface may indicate an interface (e.g., a user interface (UI)) related to display of a function execution screen or an application execution screen through a display (e.g., the display module 160 of FIG. 1). **In** an embodiment, a sound interface may indicate an interface (e.g., an audio interface) related to a sound output by using an audio module (e.g., the audio module 170 of FIG. 1). **In** an embodiment, the screen interface may be configured based on the display information of the first electronic device 201 and/or the second electronic device 203.

According to various embodiments, when there is no first application that is being executed in the first electronic device 201, the second electronic device 203 may search for whether there is a second application which can replace the first application. The second electronic device 203 may search for a second application corresponding to the first application, and execute the found second application. For example, the second application may be an application that is identical to or different from the first application, may indicate an application that can be associated with the first application.

According to an embodiment, the first electronic device 201 may provide a first interface when recognizing that the second electronic device 203 is located on the left side of the first electronic device 201, and provide a second interface when recognizing that the second electronic device 203 is located on the right side of the first electronic device 201. According to various embodiments, the first electronic device 201 may provide a third interface when recognizing that the second electronic device 203 is located in front of the first electronic device 201, and provide a fourth interface when recognizing that the second electronic device 203 is located behind the first electronic device.

The first interface to the fourth interface are merely described to help understanding of the disclosure, and are not intended to limit the embodiments of the disclosure. For example, the first electronic device 201 may provide an interface (e.g., a fifth interface) that is different from the first interface to the fourth interface when recognizing that the second electronic device 203 is located above the first electronic device 201.

According to an embodiment, the first interface to the fourth interface may correspond to different execution screens (e.g., execution screens corresponding to different functions related to the same application) and/or sound (e.g., output sounds corresponding to different functions related to the same application) of the same application, or different execution screens and/or sounds of different applications. For example, the first electronic device 201 and the second electronic device 203 may provide different execution screens from each other, wherein the first electronic device displays an interface as a main view of a productivity application through a display of the first electronic device 201, and the second electronic device 203 provides an interface (e.g., a keyboard) supporting an input related to the main view. The first interface to the fourth interface may be configured with different interfaces (e.g., screen interfaces and/or sound interfaces).

According to an embodiment, the first electronic device 201 may provide a first user interface when the second electronic device 203 is located on the left side of the first electronic device 201 and the orientation of the second electronic device 203 with reference to the direction of gravity is approximately vertical. According to an embodiment, the first electronic device 201 may provide a fifth user interface when the second electronic device 203 is located on the left side of the first electronic device 201 and the orientation of the second electronic device 203 with reference to the direction of gravity is approximately horizontal. According to an embodiment, the first electronic device 201 may provide a second user interface when the second electronic device 203 is located on the right side of the first electronic device 201 and the orientation of the second electronic device 203 with reference to the direction of gravity is approximately vertical. According to an embodiment, the first electronic device 201 may provide a sixth user interface when the second electronic device 203 is located on the right side of the first electronic device 201 and the orientation of the second electronic device 203 with reference to the direction of gravity is approximately horizontal.

According to an embodiment, the first electronic device 201 may provide a third user interface when the second electronic device 203 is located in front of the first electronic device 201 and the orientation of the second electronic device 203 with reference to the direction of gravity is approximately vertical. According to an embodiment, the first electronic device 201 may provide a seventh user interface when the second electronic device 203 is located in front of the first electronic device 201 and the orientation of the second electronic device 203 with reference to the direction of gravity is horizontal. According to an embodiment, the first electronic device 201 may provide a fourth user interface when the second electronic device 203 is disposed above the first electronic device 201 and the orientation of the second electronic device 203 with reference to the direction of gravity is approximately vertical. According to an embodiment, the first electronic device 201 may provide an eighth user interface when the second electronic device 203 is disposed above the first electronic device 201 and the orientation of the second electronic device 203 with reference to the direction of gravity is approximately horizontal.

According to an embodiment, the first interface to the eighth interface may correspond to different execution screens and/or different sounds of the same application or different applications. According to an embodiment, the first interface to the eighth interface may be configured with different interfaces (e.g., screen interfaces and/or sound interfaces) of the same application or different applications.

According to various embodiments, the first electronic device 201 may provide different user interfaces, based on a locational relation (e.g., a relative location and/or space) for the second electronic device 203.

In example 210, a screen or desktop is displayed continuously on the screens of the first electronic device 201 and the second electronic device 203. In example 230, the display of electronic device 201 reflects output resulting from input at the touchscreen of electronic device 203.

According to an embodiment, as illustrated in example <210>, when the second electronic device 203 is in a first relative location with respect to the first electronic device 201 (e.g., when the second electronic device is on the left side with reference to the first electronic device 201 or is on the right side with reference to the direction in which a user views the first electronic device 201), the first electronic device 201 may display a first user interface related to one part of an execution screen of a first application through a display (e.g., the display module 160 of FIG. 1) of the first electronic device 201, and the second electronic device 203 may display a second user interface related to the other part of the execution screen of the first application through a display (e.g., the display module 160 of FIG. 1) of the second electronic device 203. For example, when recognizing the first relative location with respect to the second electronic device 203, the first electronic device 201 may execute a dual screen mode by utilizing the second electronic device 203 as a second display.

According to an embodiment, as illustrated in example <230>, when the second electronic device 203 is in a second relative location with respect to the first electronic device 201 (e.g., when the second electronic device is in front of the first electronic device 201), the first electronic device 201 may display a user interface related to an execution screen of a first application through a display (e.g., the display module 160 of FIG. 1) of the first electronic device 201, and the second electronic device 203 may operate as an assistant input device of the first electronic device 201.

For example, when recognizing the second relative location with respect to the second electronic device 203, the first electronic device 201 may utilize the second electronic device 203 as an input unit corresponding to the first application of the first electronic device 201, and the first electronic device 201 may apply a user input (e.g., drawing) that has been input from the second electronic device 203 to the first application of the first electronic device 201 and display the same. For example, when recognizing the second relative location with respect to the second electronic device 203, the first electronic device 201 may execute an editing or drawing mode in which the second electronic device 203 is utilized as an editing or an input device.

According to various embodiments, the first electronic device 201 may change an interface, based on a locational relation (e.g., a relative location and/or space) of the second electronic device 203. For example, while the second electronic device 203 is located on the left side of the first electronic device 201 and the first electronic device 201 displays a first user interface corresponding to the location, the location of the second electronic device 203 may be moved (or changed). For example, when the second electronic device 203 is located on the right side of the first electronic device 201 as the location of the second electronic device 203 is moved, the first electronic device 201 may change the interface to a second user interface that is different from the first user interface.

An electronic device 101 according to an embodiment of the disclosure may include a communication module (e.g., the communication module 190 of FIG. 1), a display (e.g., the display module 160 of FIG. 1), and a processor (e.g., the processor 120 of FIG. 1) operatively connected to the communication module and the display, wherein the processor is configured to detect proximity of at least one external electronic device (e.g., the second electronic device 203 of FIG. 2) through the communication module, identify a locational relation with the external electronic device, based on the detection of the proximity of the external electronic device, share operation information and/or status information with the external electronic device, and provide an interface for each of the electronic device and the external electronic device, based on at least one of the locational relation, the operation information, the status information, and/or information on a number of external electronic devices.

According to an embodiment, the processor may operate to provide an interface informing of the proximity of the external electronic device, based on the detection of the proximity of the external electronic device.

According to an embodiment, the processor may operate to identify a status of the electronic device when the proximity of the external electronic device is detected, and establish a connection with the external electronic device, based on that the status of the electronic device is a designated status.

According to an embodiment, the processor may control the external electronic device to provide another interface, based on the locational relation between the electronic device and the external electronic device.

According to an embodiment, the processor may operate to cause the external electronic device to provide a first interface when the external electronic device is at a first location with respect to the electronic device, and operate to cause the external electronic device to provide a second interface that is different from the first interface when the external electronic device is at a second location with respect to the electronic device, the second location being different from the first location. According to an embodiment, the first interface and the second interface may be different from each other, and each of the first interface and the second interface may include a screen interface and/or a sound interface.

According to an embodiment, the processor may operate to detect a change in the locational relation between the electronic device and the external electronic device, and change, based on the change in the locational relation, an interface of the external electronic device to an interface corresponding to the changed locational relation, so as to provide the changed interface.

According to an embodiment, the processor may operate to detect execution of a multi-device mode, and search for one or more external electronic devices that are in proximity to the electronic device within a designated distance threshold or less, via designated communication, based on the execution of the multi-device mode. According to an embodiment, the electronic device and the external electronic device may indicate user account-based devices which are grouped by a user account.

According to an embodiment, the processor may operate to collect data related to the electronic device and the external electronic device, and extract and analyze status information, operation information, and/or a relative location of the external electronic device, from the collected data. According to an embodiment, the data may include location data for determination of the locational relation with the external electronic device, and operation data for interface configuration.

According to an embodiment, the processor may operate to map the relative location of the external electronic device to a designated matrix for locational relation identification, based on a result of the analysis, and identify the locational relation with the external electronic device, based on analysis of the matrix.

According to an embodiment, the processor may operate to configure the matrix, display the matrix through the display, and inform a user of the relative location of the external electronic device.

According to an embodiment, the processor may determine, based on at least one of the locational relation, the operational information, the status information, and/or the information on the number of external electronic devices, a first function for the electronic device and a second function for the external electronic device, the functions being associated with a function that is being executed by the electronic device, configure a first interface and a first control command which correspond to the first function related to the electronic device, and a second interface and a second control command which correspond to the second function related to the external electronic device, operate to cause the electronic device to execute the first function and provide the first interface corresponding to the first function, based on the first control command, and operate to cause the external electronic device to execute the second function and provide the second interface corresponding to the second function, based on transmission of the second control command to the external electronic device.

Hereinafter, an operation method of the electronic device 101 according to various embodiments is described in detail. According to an embodiment, operations performed by the electronic device 101 may be executed by the processor 120 including various processing circuitry and/or executable program elements of the electronic device 101. According to an embodiment, the operations performed by the electronic device 101 may be executed by instructions which are stored in the memory 130 and which, when executed, cause the processor 120 to operate.

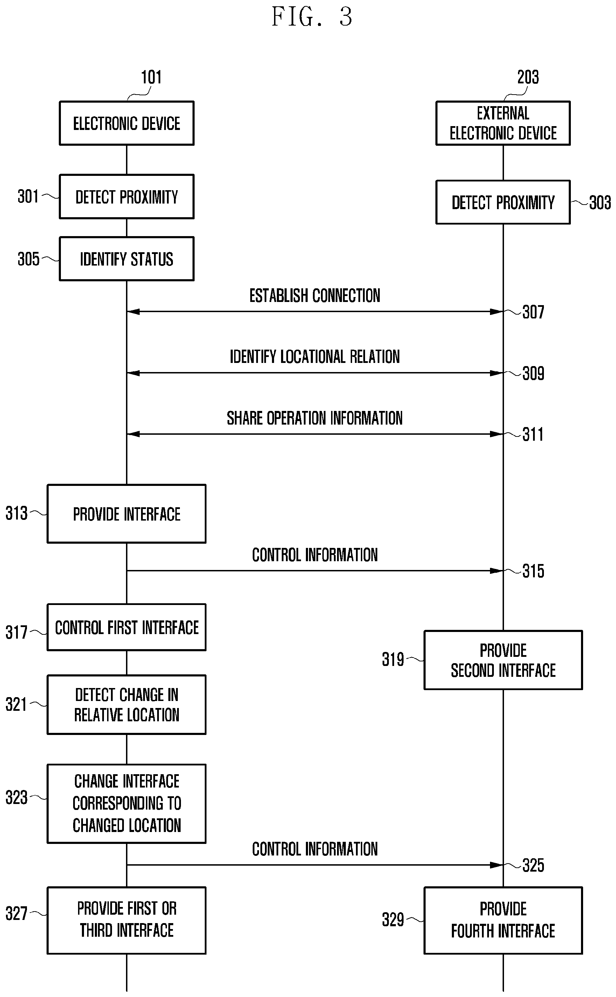

FIG. 3 illustrates an operation method among multiple electronic devices according to various embodiments.

According to an embodiment, an example of FIG. 3 illustrates that there is only one external electronic device 203 that is in proximity to an electronic device 101, but the example is merely provide to help understanding of the disclosure, and does not limit embodiments of the disclosure. For example, in FIG. 3, the external electronic device in proximity to the electronic device 101 may include multiple external electronic devices, and the electronic device 101 may perform an operation described in FIG. 3 for each of the multiple electronic devices, and may include an operation of identifying the number of the connected multiple external electronic devices 203.

Referring to FIG. 3, in operation 301, an electronic device 101 (e.g., the first electronic device 201 of FIG. 2) may detect proximity of an external electronic device 203 (e.g., the second electronic device 203 of FIG. 2). For example, the electronic device 101 may detect whether the external electronic device 203 is in proximity, by using short-range wireless communication such as UWB, Bluetooth, and/or low power Bluetooth.

In operation 303, the external electronic device 203 may detect the proximity of the electronic device 101. For example, the external electronic device 203 may detect whether the electronic device 101 is in proximity, by using short-range wireless communication such as UWB, Bluetooth, and/or low power Bluetooth.

In an embodiment, operations 301 and 303 may be simultaneously performed, operation 301 may precede operation 303, or operation 303 may precede operation 301. The description above is merely provided to help understanding of the disclosure, and embodiments of the disclosure are not limited by the description.

In operation 305, the electronic device 101 may identify the status of the electronic device 101 by using a sensor module (e.g., the senor module 176 of FIG. 1) when the distance from the external electronic device 203 is equal to or less than a designated distance threshold. In an embodiment, the distance threshold may mean the distance close enough for the electronic device 101 to be connected to the external electronic device 203 and used. The distance threshold may be configured by a user or the electronic device 101.

In an embodiment, the status of the electronic device 101 corresponds to a movement of the electronic device 101, and may be detected based on a location change amount of the electronic device 101 or sensing information acquired using the sensing module 176 such as an acceleration sensor or a gyro sensor. The location change amount of the electronic device 101 may be acquired based on an hourly change in the location through the communication module 190.

For example, the electronic device 101 may identify whether the status of the electronic device 101 corresponds to a designated state (e.g., a static state). Even though the electronic device 101 is in proximity to the external electronic device 203 while a user is driving a vehicle, walking, or running (e.g., in a dynamic state), the user may have no intention to use those two electronic devices by connecting the same. When the electronic device 101 is in proximity to the external electronic device 203, the electronic device may identify, based on the movement of the electronic device 101, whether the user has an intention to establish a connection to the external electronic device 203. When the movement of the electronic device 101 is determined as a static state, such as in a case in which the electronic device 101 is controlled by the user while being placed on a fixed plane (e.g., on a desk), the electronic device 101 may determine that the user has an intention to establish a connection to the external electronic device 203.

In operation 307, when the status of the electronic device 101 is the designated status, the electronic device 101 may be connected to the external electronic device 203. The electronic device 101 may be connected via communication which enables measurement of a relative location (e.g., distance or direction) with respect to the external electronic device 203. For example, the communication which enabling measurement of the distance and/or direction may be UWB communication. An example of the UWB communication is merely provided to help understanding of the disclosure, and does not limit the embodiments of the disclosure. An operation of measuring the distance or the direction via UWB is well known in the art, and thus a detailed description thereof can be omitted.

In operation 309, the electronic device 101 may identify a locational relation (e.g., a relative location and/or space) with the external electronic device 203. According to an embodiment, the electronic device 101 may identify the relative location with respect to the external electronic device 203. In an embodiment, the locational relation may include at least one of information (e.g., direction) on in which direction the external electronic device 203 is located with respect to the electronic device 101, information (e.g., distance) on how far the external electronic device is spaced apart, a display orientation of the electronic device 101, a display orientation of the external electronic device 203, the orientation of the electronic device 101 with reference to the direction of gravity, or the orientation of the external electronic device 203 with reference to the direction of gravity. Alternatively, the locational relation may relate to the direction in which the electronic device 101 is located with respect to the external electronic device 203, or the distance by which the electronic device is spaced apart from the external electronic device.

For example, the external electronic device 203 may be located in any one of forward, backward, leftward, rightward, upward, and diagonal directions of the electronic device 101 with reference to the electronic device 101. For example, when the external electronic device 203 is located in front of the electronic device 101, the external electronic device 203 may be located closer to the user than the electronic device 101. **In** another example, when the external electronic device 203 is located behind the electronic device 101, the external electronic device 203 may be located farther from the user than the electronic device 101. **In** another example, when the external electronic device 203 is located above the electronic device 101, the external electronic device 203 may be located, for example, above the electronic device 101 (e.g., above a display).

**In** an embodiment, the electronic device 101 may be spaced apart from the external electronic device 203 by a designated distance. For example, the electronic device 101 may be spaced apart from the external electronic device 203 by at least one of a first distance (e.g., about less than 1 cm), a second distance (e.g., about less than 5 cm), or a third distance (e.g., about less than 10 cm).

**In** an embodiment, the display orientation may indicate whether the orientation of a display (e.g., the display module 160 of FIG. 1) of the electronic device 101 or the external electronic device 203 is a longitudinal orientation (e.g., portrait) or a transverse orientation (e.g., landscape). **In** an embodiment, the orientation with reference to the direction of gravity may indicate whether the electronic device is in an approximately vertical direction (e.g., vertically stands or stands at an angle close to the vertical), or is in an approximately horizontal direction (e.g., is horizontally placed or is placed at an angle close to the horizontal), with reference to the direction of gravity, by using a gyro sensor or a magnetic sensor.

**In** operation 311, the electronic device 101 may share operation information (e.g., application information and/or display information) with the external electronic device 203. **In** an embodiment, the electronic device 101 may transmit, to the external electronic device 203, application information relating to an application that is currently being executed in the electronic device 101 and/or display information of the electronic device 101. **In an** embodiment, the electronic device 101 may also receive, from the external electronic device 203, information an application that is being executed in the external electronic device 203 and/or display information of the external electronic device 203.

**In** an embodiment, the application information may include an identifier for identifying an application, a name, and/or a display size of an execution screen of the application. **In** an embodiment, the display information may include at least one of the resolution and/or a display mode of the display module 160.

**In** operation 313, the electronic device 101 may control an interface (e.g., a screen interface and/or a sound interface) for the electronic device 101 and the external electronic device 203, based on at least one of a locational relation (e.g., the relative location and/or space) with the external electronic device 203, operation information (e.g., application information and/or display information), various related information according to the locational relation (e.g., status information (e.g., at least one piece of information related to the display orientation of the electronic device 101, the display orientation of the external electronic device 203, the orientation of the electronic device 101 with reference to the direction of gravity, and/or the orientation of the external electronic device 203 with reference to the direction of gravity)), and/or information on the number of the external electronic devices 203 (e.g., the number of connected electronic devices).

**In** an embodiment, the screen interface may indicate an interface (e.g., a user interface) related to display of an application execution screen or a function execution screen displayed on a display (e.g., the display module 160 of FIG. 1) of the electronic device 101 and/or the external electronic device 203. **In** an embodiment, the sound interface may indicate an interface (e.g., an audio interface) related to a sound output by using an audio module (e.g., the audio module 170 of FIG. 1) of the external electronic device 101 and/or the external electronic device 203. **In** an embodiment, the information on the number of the external electronic devices 203 may correspond to, for example, the number of the external electronic devices 203 connected to the electronic device 101.

According to an embodiment, the electronic device 101 may operate to provide different interfaces for the electronic device 101 and the external electronic devices 203, based on at least one of the locational relation with the external electronic device 203, the operation information, and/or the various types of related information (e.g., status information). According to an embodiment, the electronic device 101 may generate control information for control of the interface, based on at least one of the locational relation, the operation information, and/or the various types of related information.

According to an embodiment, the control information may include screen information (e.g., display data), audio information (e.g., sound data), and/or execution control information (e.g., information for controlling execution of an application or a function), which are related to the provided interface. For example, in an example in which an application executed in the electronic device 101 is a note application, when the location of the external electronic device 203 is on the left side of the electronic device 101, the electronic device 101 may provide related control information so as to provide the interface with a writing field for note-taking. In another example, when the location of the external electronic device 203 is on the right side of the electronic device 101, the electronic device 101 may provide related control information so as to provide the interface with a note list including at least one note stored in a memory (e.g., the memory 130 of FIG. 1) of the electronic device 101. In another example, when the location of the external electronic device 203 is in front of the electronic device 101, the electronic device 101 may provide related control information so as to provide the interface with a display field for displaying a written note.

In operation 315, the electronic device 101 may share control information with the external electronic device 203. According to an embodiment, the electronic device 101 may transmit, to the external electronic device 203, control information for controlling an interface of the external electronic device 203, by using a designated communication module (e.g., the communication module 190 of FIG. 1), so as to control the external electronic device 203 to provide an interface, based on the control information.

**In** operation 317, the electronic device 101 may provide a first interface for the electronic device 101, based on the control information. **In** an embodiment, the first interface may include a screen interface, and may additionally or alternatively include a sound interface. For example, the electronic device 101 may provide user an interface display (e.g., a screen display) through a display (e.g., the display module 160 of FIG. 1) of the electronic device 101 and an audio interface output (e.g., a sound output) by using an audio module (e.g., the audio module 170 of FIG. 1) of the electronic device 101, based on the control information.

**In** operation 319, the external electronic device 203 may provide a second interface for the external electronic device 203, based on the control information. According to an embodiment, the external electronic device 203 may receive the control information from the electronic device 101, and provide the second interface, based on the control information. **In** an embodiment, the second interface may include a screen interface and/or a sound interface.

For example, the external electronic device 203 may provide a user interface display (e.g., a screen display) through a display (e.g., the display module 160 of FIG. 1) of the external electronic device 203 and/or an audio interface output (e.g., a sound output) related to a sound received (e.g., streamed) from the external electronic device 101 by using an audio module (e.g., the audio module 170 of FIG. 1) of the external electronic device 203, based on the control information of the electronic device 101. **In** an embodiment, the external electronic device 203 may perform switching so that the external electronic device 203 operates as an input device for the electronic device 101, based on the control information of the electronic device 101, and provide a screen interface related to the corresponding input device (e.g., a gesture input device or a touch input device).

**In** operation 321, the electronic device 101 may detect a change in a locational relation (e.g., a relative location and/or space) with the external electronic device 203. According to an embodiment, the electronic device 101 may continuously monitor the locational relation with the external electronic device 203 (or may perform communication such as an exchange of information related to the location) while being connected to the external electronic device (or while performing the above-described operations), and detect a change in the relative location of the external electronic device 203, based on a result of the monitoring.

For example, the external electronic device 203 may be located on the right side of the electronic device 101, and then may move toward one of the leftward, forward, backward, upward, and diagonal directions of the electronic device 101. **In** an embodiment, the electronic device 101 may detect the change in the locational relation (e.g., the relative distance and/or direction) with the external electronic device 203 by using communication (e.g., UWB communication) enabling measurement of the change in the location (e.g., the relative distance and/or direction) of the external electronic device 203. According to an embodiment, the electronic device 101 may also detect a change in a display orientation or the orientation of the external electronic device 203 with reference to the direction of gravity.

**In** operation 323, the electronic device 101 may control a change of an interface (e.g., a screen interface and/or a sound interface) for the electronic device 101 and/or the external electronic device 203 in response to the changed locational relation. According to an embodiment, the electronic device 101 may generate the control information for control of the change (or reconfiguration) of the interface, based on at least one various types of information related to the locational relation. According to an embodiment, the control information may include screen information (e.g., display data), audio information (e.g., sound data), and/or execution control information (e.g., information for controlling execution of an application or a function), which are related to the provided interface.

**In** operation 325, the electronic device 101 may share the control information with the external electronic device 203. According to an embodiment, the electronic device 101 may transmit the control information for the control of the interface change of the external electronic device 203 by using a designated communication module (e.g., the communication module 190 of FIG. 1), and control the external electronic device 203 to provide an interface based on the control information.

**In** operation 327, the electronic device 101 may provide a first or a third interface for the electronic device 101, based on the control information. According to an embodiment, the electronic device 101 may maintain the first interface or may change the first interface to the third interface and provide the same.

For example, in relation to the change in the locational relation with the external electronic device 203, when only an interface of the external electronic device 203 is changed based on the control information, the electronic device 101 may perform control to maintain the first interface of the electronic device 101 and change the second interface of the external electronic device 203 to the fourth interface. In another example, in relation to the change in the locational relation with the external electronic device 203, when all interfaces of the external electronic device 203 and the electronic device 101 are changed based on the control information, the electronic device 101 may perform control to change the first interface of the electronic device 101 to the third interface and provide the same, and to change the second interface of the external electronic device 203 to the fourth interface.

For example, the electronic device 101 may perform control to provide the first interface and the second interface in response to the left location of the external electronic device 203, and then when the external electronic device 203 moves to the right side of the electronic device 101, the electronic device 101 may maintain the provision of the first interface, and control the external electronic device 203 to change the interface from the second interface to the fourth interface. According to an embodiment, the first interface, the second interface, the third interface, and the fourth interface may be different from each other. According to an embodiment, the electronic device 101 may perform control to change the interface to another interface (e.g., the fifth interface) corresponding to the second interface of the external electronic device 203 even when there is no locational relation with the external electronic device 203 but the display information of the external electronic device 203 is changed (e.g., even when the external electronic device in the approximately horizontal orientation approximately vertically stands).

In operation 329, the external electronic device 203 may provide the fourth interface for the external electronic device 203, based on the control information. According to an embodiment, the external electronic device 203 may receive the control information from the electronic device 101, and may change the interface from the second interface to the fourth interface, based on the control information, and provide the same. According to an embodiment, the external electronic device 203 may perform switching so that the external electronic device 203 operates as an input device for the electronic device 101, based on the control information of the electronic device 101, and may provide an interface related to the corresponding input device (e.g., a gesture input device or a touch input device).

According to an embodiment, FIG. 3 illustrates that the electronic device 101 controls the interface, but according to another embodiment of the disclosure, the external electronic device 203 may also control the interface, based on at least one of the locational relation with the electronic device and various types of related information. The description above is merely provided to help understanding of the disclosure, and does not limit the embodiments of the disclosure.

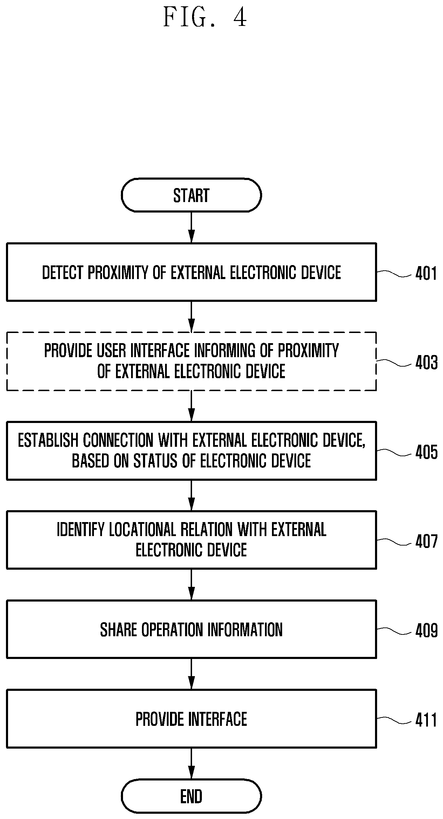

FIG. 4 is a flowchart illustrating an operation method of an electronic device according to various embodiments.

Referring to FIG. 4, in operation 401, a processor (e.g., the processor 120 of FIG. 1) of an electronic device 101 (e.g., the first electronic device 201 of FIG. 2) may detect proximity of an external electronic device (e.g., the second electronic device 203 of FIG. 2). The processor 120 may detect the proximity of the external electronic device 203 by using a communication module (e.g., the communication module 190 of FIG. 1). For example, the processor 120 may detect whether the external electronic device 203 is in proximity by using short-range wireless communication such as UWB, Bluetooth, and/or low power Bluetooth.

In operation 403, the processor 120 may provide a user interface informing of the proximity of the external electronic device 203. For example, the processor 120 may display the user interface informing of the proximity of the external electronic device 203 through a display (e.g., the display module 160 of FIG. 1) to provide a user with a guide. According to an embodiment, the processor 120 may also inform of the proximity of the external electronic device 203 through vibration or voice. According to implementation, operation 403 can be omitted.

In operation 405, the processor 120 may establish a connection with the external electronic device 203 based on the status of the electronic device 101. The processor 120 may identify the status of the electronic device 101 when the distance from the external electronic device 203 is equal to or less than a designated distance threshold. **In** an embodiment, the distance threshold may mean a distance close enough for the electronic device 101 to be connected to the external electronic device 203 and used. The distance threshold may be configured by a user or the electronic device 101. The status of the electronic device 101 indicates the movement of the electronic device 101, and may include a dynamic status having a large number of movements and a static status having less or no movement. The processor 120 may identify the status of the electronic device 101, based on sensing information acquired using a senor module (e.g., the sensor module 176 of FIG. 1) such as an acceleration senor or a gyro sensor. According to implementation, the processor 120 may directly perform an operation for connection with the external electronic device 203, based on the detection of the proximity of the external electronic device 203 without performing an operation of identifying the status of the electronic device 101.

For example, when the movement of the electronic device 101 is identified as a dynamic status as the user walks, runs, or drives a vehicle, the processor 120 may determine that the user has no intention to connect and utilize multiple electronic devices. For example, when the movement of the electronic device 101 is identified as a static status, such as in a case where the electronic device 101 is placed on a fixed plane (e.g., on a desk), the processor 120 may determine that the user has an intention to connect and utilize the multiple electronic devices.

The processor 120 may connect the electronic device 101 and the external electronic device 203 when the status of the electronic device 101, identified through the sensor module 176, corresponds to a designated status (e.g., a static status). The processor 120 may establish a connection via communication, for example, UWB communication, which enables measurement of a relative location (e.g., distance and/or direction) with respect to the external electronic device 203. The UWB communication is described as an example, and embodiments of the disclosure are not limited by the example. According to various embodiments, the communication for measurement of the relative location (e.g., distance or direction) may be a communication scheme (e.g., radar communication or lidar communication) other than the UWB communication.

In operation 407, the processor 120 may identify a locational relation (e.g., a relative location and/or space) with the external electronic device 203. According to an embodiment, the processor 120 may identify a relative location with the external electronic device 203 via the UWB communication. In an embodiment, the locational relation may include at least one of information (e.g., direction) on in which direction the external electronic device 203 is located with respect to the electronic device 101, information (e.g., distance) on how far the external electronic device is spaced apart from the electronic device, a display orientation of the electronic device 101, a display orientation of the external electronic device 203, the orientation of the electronic device 101 with reference to the direction of gravity, or the orientation of the external electronic device 203 with reference to the direction of gravity.

According to an embodiment, when detecting the proximity of multiple external electronic devices 203, the processor 120 may identify a locational relation for each of the multiple external electronic devices 203. According to an embodiment, when detecting the proximity of multiple external electronic devices 203, the processor 120 may identify the number of the multiple external electronic devices 203. In an embodiment, the number of the external electronic devices 203 may correspond to, for example, the number of the external electronic devices connected to the electronic device 101.

For example, the external electronic device 203 may be located in a forward, backward, leftward, rightward, upward, or diagonal direction of the electronic device 101. In an embodiment, the external electronic device 203 may be spaced apart from the electronic device 101 by a distance threshold (e.g., about less than 1 cm, about less than 5 cm, or about less than 10 cm).

In an embodiment, the display orientation may indicate whether the orientation of the display module 160 of the electronic device 101 or the external electronic device 203 is a longitudinal orientation (e.g., portrait) or a transverse orientation (e.g., landscape). In an embodiment, the orientation of the electronic device 101 with reference to the direction of gravity may indicate whether the electronic device 101 approximately vertically stands or is approximately horizontally placed. **In** an embodiment, the processor 120 may detect the orientation of the electronic device 101 with reference to the direction of gravity by using a gyro sensor or a magnetic sensor.

**In** an embodiment, the processor 120 may receive, from the external electronic device 203, the display orientation of the external electronic device 203 and/or the orientation of the external electronic device 203 with reference to the direction of gravity. According to an embodiment, the processor 120 may also transmit, to the external electronic device 203, the display orientation of the electronic device 101 or the orientation of the electronic device 101 with reference to the direction of gravity.

**In** operation 409, the processor 120 may share operation information (e.g., application information and/or display information) with the external electronic device 203. **In an** embodiment, the application information may be information on an application executed (or being executed) in the electronic device 101 or the application executed in the external electronic device 203.

**In** an embodiment, the application information corresponds to information currently displayed on a display (e.g., the display module 160 of FIG. 1) of the electronic device 101 or displayed on the display of the external electronic device 203, and may mean, for example, an application that executed in the foreground. The application information may include an identifier for identifying the application, a name, and/or the size of a display of an execution screen of the application.

**In** an embodiment, the display information may include at least one of the resolution and the display mode of the display module 160 of the electronic device 101 or the display of the external electronic device 203. The display mode may include at least one of a normal mode, an extension mode, or a multi-window mode.

According to an embodiment, the processor 120 may transmit, to the external electronic device 203, the information on the application that is being executed in the electronic device 101 and the display information of the electronic device 101. According to an embodiment, the processor 120 may receive, from the external electronic device 203, the information on the application that is being executed in the external electronic device 203 and the display information of the external electronic device 203.

In operation 411, the processor 120 may operate to provide an interface (e.g., a screen interface and/or a sound interface) for the electronic device 101 and the external electronic device 203, based on at least one of the locational relation (e.g., the relative location and/or space) with the external electronic device 203, the operation information (e.g., the application information and/or the display information), the status information (e.g., various types of related information according to the locational relation (e.g., information related to at least one of the display orientation of the electronic device 101, the display orientation of the external electronic device 203, the orientation of the electronic device 101 with reference to the direction of gravity, and/or the orientation of the external electronic device 203 with reference to the direction of gravity)), and/or the information on the number of the external electronic devices 203.

According to an embodiment, the processor 120 may operate to provide different interfaces according to the locational relation with the external electronic device 203. According to an embodiment, with respect to the multiple external electronic devices 203, the processor 120 may operate to provide different interfaces for multiple external electronic devices 203, based on the locational relation with each of the multiple external electronic devices 203.

For example, the processor 120 may operate to provide a first interface through the external electronic device 203 when the external electronic device 203 is located on the left side of the electronic device 101, provide a second interface through the external electronic device 203 when the external electronic device 203 is located on the right side of the electronic device 101, provide a third interface through the external electronic device 203 when the external electronic device 203 is located below the electronic device 101, and provide a fourth interface through the external electronic device 203 when the external electronic device 203 is located above the electronic device 101.

According to an embodiment, the first interface to the fourth interface may correspond to different execution screens (e.g., execution screens corresponding to different functions related to the same application) and/or sound (e.g., output sounds corresponding to different functions related to the same application) of the same application, or different execution screens and/or sounds of different applications. The first interface to the fourth interface may be configured by different interfaces (e.g., screen interfaces and/or sound interfaces).

According to an embodiment, in a case where the external electronic device 203 is located on the left side of the electronic device 101, the processor 120 may operate to provide a first interface when the orientation of the external electronic device 203 with reference to the direction of gravity is approximately vertical, and provide a fifth interface when the orientation of the external electronic device 203 with reference to the direction of gravity is approximately horizontal. According to an embodiment, in a state in which the external electronic device 203 is located on the right side of the electronic device 101, the processor 120 may operate to provide a second interface when the orientation of the external electronic device 203 with reference to the direction of gravity is approximately vertical, and provide a sixth interface when the orientation of the external electronic device 203 with reference to the direction of gravity is approximately horizontal.

According to an embodiment, in a state in which the external electronic device 203 is located below the electronic device 101, the processor 120 may provide a third interface when the orientation of the external electronic device 203 with reference to the direction of gravity is approximately vertical, and provide a seventh interface when the orientation of the external electronic device 203 with reference to the direction of gravity is approximately horizontal. According to an embodiment, in a state in which the external electronic device 203 is located above the electronic device 101, the processor 120 may provide a fourth interface when the orientation of the external electronic device 203 with reference to the direction of gravity is approximately vertical, and provide an eighth interface when the orientation of the external electronic device 203 with reference to the direction of gravity is approximately horizontal.

According to an embodiment, the first interface to the eighth interface may correspond to different execution screens and/or different sounds of the same application or different applications. According to an embodiment, the first interface to the eighth interface may be configured by different interfaces (e.g., screen interfaces and/or sound interfaces) for the same application or different applications.

According to various embodiments, the processor 120 may change an interface for the electronic device 101 and/or at least one external electronic device 203, based on the change in the locational relation between the electronic device 101 and at least one external electronic device 203.

For example, in a state in which the external electronic device 203 is located on the left side of the electronic device 101, the location of the external electronic device 203 may be moved (or changed) while a first interface (e.g., a screen interface and/or sound interface) for the external electronic device 203 is provided. As the external electronic device 203 moves, for example, when the external electronic device 203 is located on the right side of the electronic device 101, the processor 120 may operate to change the interface for the external electronic device 201 to a second interface (e.g., a screen interface and/or a sound interface) different from the first interface.

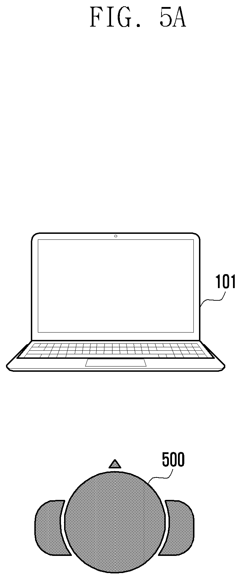

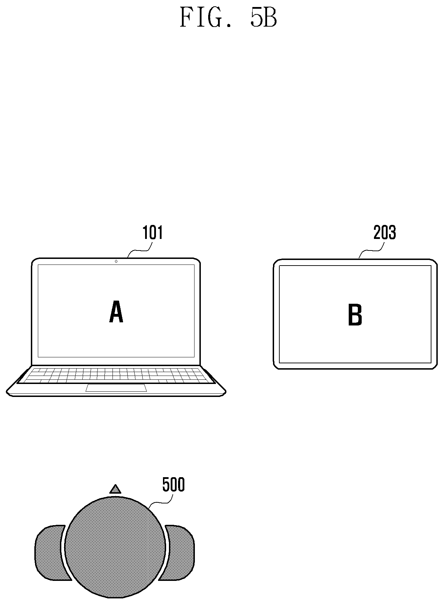

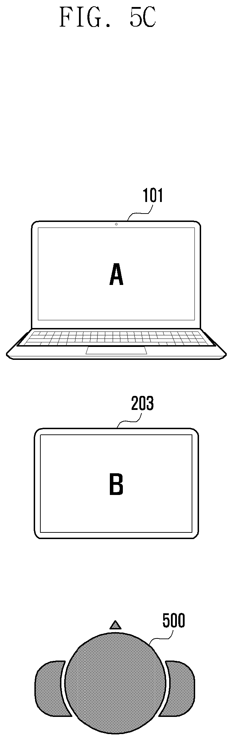

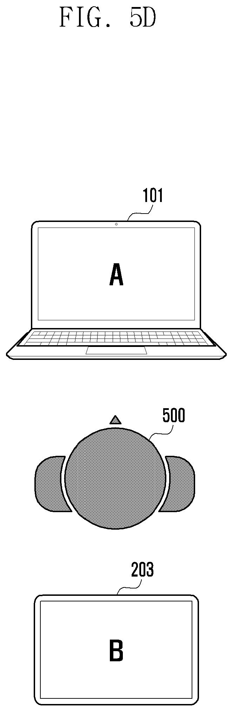

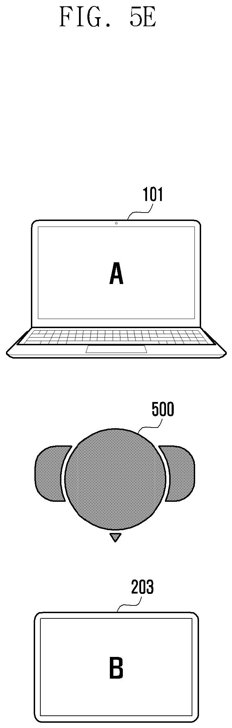

FIGS. 5A, 5B, 5C, 5D, and 5E illustrate various examples of configuring a related interface based on a locational relation by an electronic device according to various embodiments.

In an embodiment, FIG. 5A may illustrate the status in which the electronic device 101 operates in a standalone mode. In an embodiment, FIG. 5B may illustrate the status in which an external electronic device 203 is located in proximity to an electronic device 101 at a first location with respect to the electronic device 101 (e.g., on the left side with reference to the electronic device 101 or the right side of the electronic device 101 with reference to the front of a user 500). In an embodiment, FIG. 5C may illustrate the status in which the external electronic device 203 is located (or is moved) to be in proximity to the electronic device 101 at a second position with respect to the electronic device 101 (e.g., in the front with reference to the electronic device 101 and in the frontal direction of the user 500). In an embodiment, FIG. 5D may illustrate the state in which the external electronic device 203 is located in proximity to the electronic device 101 at a third position with respect to the electronic device 101 (e.g., in the direction of the back of the user 500 and in the front with reference to the electronic device 101, wherein the distance between the electronic device and the external electronic device is farther compared to that in FIG. 5C). In an embodiment, FIG. 5E may illustrate the status in which the external electronic device 203 is located in proximity to the electronic device 101 and the user 500 views the external electronic device 203 at a third location (e.g., the back of the user 500 with reference to the user 500 or the front with reference to the electronic device 101, wherein the distance between the electronic device and the external electronic device is farther compared to that in FIG. 5C) with respect to the electronic device 101.

Referring to FIG. 5A, the electronic device 101 may provide an interface corresponding to execution of an application (or a function) of the user 500 when performing a standalone operation. For example, the electronic device 101 may be in the status of executing a home screen, a productivity application (e.g., a Word application), a drawing application (e.g., note application or drawing editing application), a game application, or a media playback application (e.g., a video player), and outputting sound and/or displaying the corresponding screen through a display (e.g., the display module 160 of FIG. 1).

Referring to FIG. 5B, FIG. 5B may illustrate an example of a case of locating the external electronic device 203 in proximity to the electronic device 101 while the electronic device 101 is being used as shown in the example of FIG. 5A. According to an embodiment, the electronic device 101 may detect the proximity of the external electronic device 203 and identify a locational relation with the external electronic device 203.

In an embodiment, the electronic device 101 may operate to configure an interface for the electronic device 101 and an interface for the external electronic device 203, based on the locational relation with the external electronic device 203, and provide the corresponding interface through each of the electronic device 101 and the external electronic device 203.

According to an embodiment, in FIG. 5B, the external electronic device 203 may be located in proximity to a first location with respect to the electronic device 101 (e.g., on the left side with reference to the electronic device and on the right side of the electronic device 101 with reference to the front of the user 500). For example, the user 500 may locate the external electronic device 203 in proximity to the left side of the electronic device 101 while using the electronic device 101. According to an embodiment, the electronic device 101 may operate to provide a first interface through the electronic device 101 and provide a second interface associated with the first interface through the external electronic device 203.

For example, the electronic device 101 may display (e.g., maintain the status of FIG. 5A) a home screen as the first interface through a display (e.g., the display module 160 of FIG. 1) of the electronic device 101, and the external electronic device 203 may display a screen (e.g., home screen extension or home screen duplication) different from the home screen, as the second interface through a display (e.g., the display module 160 of FIG. 1) of the external electronic device 203.

**In** another example, the electronic device 101 may display a main view of a productivity application as the first interface through the display of the electronic device 101, and the external electronic device 203 may display a slide preview or a tool bar of the productivity application as the second interface through the display of the external electronic device 203.

**In** another example, the electronic device 101 may display a main view of a drawing application as the first interface through the display of the electronic device 101, and the external electronic device 203 may display a preview or a tool bar of another application (e.g., the productivity application) as the second application.

**In** another example, the electronic device 101 may provide a main screen and a main sound of a game application as the first interface through the display of the electronic device 101, and the external electronic device 203 may provide a sub screen different from the main screen (e.g., a side-view mirror view shown in a side-view mirror of a car in a racing game), as the second interface.

In another example, the electronic device 101 may provide a playback screen and a main sound of a media playback application as the first interface through the display of the electronic device 101, and the external electronic device 203 may provide an output of a sound (e.g., a sound at the lateral side) at the first location (e.g., the lateral side), as the second interface.

Referring to FIG. 5C, FIG. 5C may illustrate an example of a case of changing the location of the external electronic device 203 while the user 500 uses the electronic device 101 and the external electronic device 203 through interaction therebetween as shown in the example of FIG 5B. According to an embodiment, the electronic device 101 may operate to detect a change in the locational relation with the external electronic device 203 (e.g., a change in a relative location of the external electronic device 203), reconfigure an interface for the electronic device 101 and/or an interface for the external electronic device 203, based on the changed locational relation, and provide the corresponding interface through each of the electronic device 101 and the external electronic device 203.

According to an embodiment, in FIG. 5C, the external electronic device 203 may move from the first location to a second location with respect to the electronic device 101 (e.g., the front with reference to the electronic device 101 and the frontal direction of the user 500). For example, the user 500 may move the external electronic device 203 toward the frontal direction of the user 500 and the front of the electronic device 101 device while using the electronic device 101 and the external electronic device 203 as shown in the example of FIG. 5B. According to an embodiment, the electronic device 101 may operate to provide the first interface or provide the interface through the electronic device 101 by changing the first interface to the third interface, and provide the interface through the external electronic device 203 by changing the second interface to the fourth interface.

For example, the electronic device 101 may display (e.g., maintain the status in FIG. 5B) a home screen as the first interface through a display (e.g., the display module 160 of FIG. 1) of the electronic device 101, and the external electronic device 203 may provide a screen (e.g., a task manager screen or an application tray screen) that is different from the home screen, as the fourth interface through a display (e.g., the display module 160 of FIG. 1) from the external electronic device 203. For example, the external electronic device 203 may change the second interface as shown in the example of FIG. 5B to the fourth interface and provide the same.

**In** another example, the electronic device 101 may display a main view of a productivity application as the first interface through the display of the electronic device 101, and the external electronic device 203 may provide a fourth interface which can support an input related to the first interface. For example, the external electronic device 203 may operate to be switched to an input device (e.g., a keyboard) for additional functions (e.g., a clipboard function or an image drawing or editing function), and may change the second interface as shown in the example of FIG. 5B to the fourth interface and provide same.

**In** another example, the electronic device 101 may display a main view of a drawing application as the first interface through the display of the electronic device 101, and the external electronic device 203 may provide the fourth interface which can support an input related to the first interface. For example, the external electronic device 203 may operate to be switched to an input device (e.g., a drawing tablet) for a drawing function, and may change the second interface as shown in the example of FIG. 5B to the fourth interface and provide the same.

**In** another example, the electronic device 101 may provide a main screen and a main sound of a game application as the first interface through the display of the electronic device 101, and the external electronic device 203 may provide another sub screen (e.g., a dashboard screen or a control pad screen for game control in a racing game) related to the first interface, as the fourth interface.

For example, the external electronic device 203 may operate to be switched to an input device (e.g., a control pad) for game control, and may change the second interface as shown in the example of FIG. 5B to the fourth interface to provide the same. **In** another example, the external electronic device 203 may operate to be switched to an assistant display device for game-related additional screen (or sub screen), and may change the second interface as shown in the example of FIG. 5B to the fourth interface (e.g., a room mirror view shown in the room mirror) and provide the same.

In another example, the electronic device 101 may provide a playback screen and a main sound of a media playback application as the first interface through the display of the electronic device 101, and the external electronic device 203 may provide another sub screen (e.g., a controller screen for video control) related to the first interface, as the fourth interface. For example, the external electronic device 203 may operate to be switched to a controller for function control (e.g., volume control, brightness control, play speed control, fast-forward, and/or rewind) of a video being played in the electronic device 101, and may change the second interface in the example of FIG. 5B to the fourth interface and provide the same.

Referring to FIG. 5D, FIG. 5D may indicate an example of a case of changing the location of the external electronic device 203 while the user 500 uses the electronic device 101 and the external electronic device 203 through an interaction therebetween as shown in the example of FIG. 5B or FIG. 5C. According to an embodiment, the electronic device 101 may detect a change in the locational relation with the external electronic device 203 (e.g., a change in a relative location of the external electronic device 203). According to an embodiment, the electronic device 101 may operate to reconfigure an interface for the electronic device 101 and/or an interface for the external electronic device 203, based on the changed locational relation, and provide the corresponding interface through each of the electronic device 101 and the external electronic device 203.

Hereinafter, FIG. 5D illustrates, as an example, that the location change of the external electronic device 203 is performed at the first location as shown in FIG. 5B, but the description is merely provided to help understanding of the disclosure, and does not limit the embodiments of the disclosure. For example, the location change of the external electronic device 203 may be performed at the second location as shown in FIG. 5C, or the location may be changed from the first location as shown in FIG. 5B to the second location as shown in FIG. 5C, and changed again to the third location as shown in FIG. 5D.

According to an embodiment, in FIG. 5D, the external electronic device 203 may be moved from the first location to the third location (e.g., the backward direction of the user 500 and in the front with reference to the electronic device 101, wherein the distance between the electronic device and the external electronic device 101 is farther compared to that in FIG. 5C). For example, the user 500 may move the external electronic device 203 to the front of the electronic device 101 and the backward direction of the user 500 while using the electronic device 101 and the external electronic device 203. According to an embodiment, the electronic device 101 may operate to provide the first interface or provide the interface through the electronic device 101 by changing the first interface to the third interface, and may operate to provide the interface through the external electronic device 203 by changing the second interface to the fourth interface.

For example, the electronic device 101 may display (e.g., maintain the status of FIG. 5B) a home screen as the first interface through a display (e.g., the display module 160 of FIG. 1) of the electronic device 101, and the external electronic device 203 may provide the fourth interface which can support a sound output related to the first interface. For example, with respect to the electronic device 101, the external electronic device 203 may operate to be switched to a sound output device such as an external speaker or a woofer, stop displaying the second interface as shown in the example of FIG. 5B, and change the interface to the fourth interface to provide the same.

In another example, the electronic device 101 may display a main view of a productivity application as the first interface through the display of the electronic device 101, and the external electronic device 203 may provide another sub screen (e.g., a slideshow screen) related to the first interface, as the fourth interface. For example, the external electronic device 203 may change the second interface as shown in the example of FIG. 5B to the fourth interface and provide the same.

In another example, the electronic device 101 may display a main view of a drawing application as the first interface through the display of the electronic device 101, and the external electronic device 203 may provide another screen (e.g., a full screen preview) related to the first interface, as the fourth interface. For example, the external electronic device 203 may change the second interface as shown in the example of FIG. 5B to the fourth interface and provide the same.

In another example, the electronic device 101 may provide a main screen and a main sound of a game application as the first interface through the display of the electronic device 101, and the external electronic device 203 may provide a fourth interface which can support both a display of another sub screen (e.g., a room mirror view shown in the room mirror in a car game) related to the first interface and an output of sound related to the first interface. For example, the external electronic device 203 may operate to be switched to an assistant display device and a sound output device for the electronic device 101, and may change the display of the second interface as shown in the example of FIG. 5B to the fourth interface supporting both the sub screen display and the sub sound output and provide the same.

In another example, the electronic device 101 may provide a playback screen and a main sound of a media playback application as the first interface through the display of the electronic device 101, and the external electronic device 203 may provide the fourth interface which can support an output of a sound (e.g., a sound at the back side) at a third location (e.g., in the backward direction of the user 500). For example, the external electronic device 203 may operate to be switched to a sound output device such as a rear speaker for the electronic device 101, stop providing the second interface as shown in the example of FIG. 5B (e.g., stop outputting a sound at the lateral side), and change the interface to the fourth interface and provide the same (e.g., an output of a sound at the back side).

Referring to FIG. 5E, FIG. 5E may illustrate an example of a case of changing a gaze direction of the user 500 to the external electronic device 203 while the user 500 uses the electronic device 101 and the external electronic device 203 through an interaction therebetween as shown in the example of FIG. 5D. According to an embodiment, the electronic device 101 and/or the external electronic device 203 may detect the change in the gaze direction of the user 500. According to an embodiment, the electronic device 101 and/or the external electronic device 203 may reconfigure an interface for the electronic device 101 and/or an interface for the external electronic device 203, based on the gaze direction of the user 500. According to an embodiment, the electronic device 101 and/or the external electronic device 203 may operate to provide the corresponding interface to each of the electronic device 101 and the external electronic device 203.

According to an embodiment, in FIG. 5E, the gaze direction may switch from a first gaze direction in which the user 500 views the electronic device 101 as shown in the example of FIG. 5E to a second gaze direction in which the external electronic device 203 located at the back of the user 500 views. For example, while using the electronic device 101 and the external electronic device 203 as shown in the example of FIG. 5D, the user 500 may stop controlling the electronic device 101 and turn toward the direction in which the external electronic device 203 is located to view the external electronic device 203.

According to an embodiment, the electronic device 101 may stop providing the first interface through the electronic device 101, or may provide the interface by changing the first interface to the third interface and operate to maintain or change the fourth interface through the external electronic device 203. According to an embodiment, in an operation scenario switching from FIG. 5D to FIG. 5E, roles between the electronic device 101 and the external electronic device 203 may be changed, and the operation may be performed so that each corresponding interface is provided through the role change. For example, the operation may be performed so that the external electronic device 203 of FIG. 5E provides the interface of the electronic device 101 of FIG. 5D, and the electronic device 101 of FIG. 5E provides the interface of the external electronic device 203 of FIG. 5D.

For example, the electronic device 101 may stop displaying a home screen display (e.g., stop displaying the first interface) through a display (e.g., the display module 160 of FIG. 1) of the electronic device 101 (or may turn off the display). The external electronic device 203 may display a home screen of the electronic device 101 through the display (e.g., the display module 160 of FIG. 1) of the external electronic device 203, as the fourth interface. For example, the electronic device 101 and the external electronic device 203 may mirror the home screen of the electronic device 101 on the external electronic device 203 through screen mirroring. The external electronic device 203 may stop providing the fourth interface as shown in the example of FIG. 5D (e.g., stop operating a sound output device), and provide the mirrored home screen (e.g., the first screen) as another fourth interface.

**In** another example, the electronic device 101 may stop displaying a main view of a productivity application (e.g., stop displaying the first application) through the display of the electronic device 101 (or turn off the display), or may lock the productivity application. The external electronic device 203 may display the main view of the productivity application as the fourth interface through the display of the external electronic device 203. For example, the electronic device 101 and the external electronic device 203 may mirror the main view of the productivity application of the electronic device 101 on the external electronic device 203 through the screen mirroring. The external electronic device 203 may stop providing the fourth interface as shown in the example of FIG. 5D (e.g., stop displaying a slideshow screen), and provide the mirrored main view (e.g., the first interface) as another fourth interface.

**In** another example, the electronic device 101 may stop displaying a main view of the drawing application (e.g., stop displaying the first application) through the display of the electronic device 101 (e.g., or turn off the display), or lock the drawing application. The external electronic device 203 may display the main view of the drawing application as the fourth interface through the display of the external electronic device 203. For example, the electronic device 101 and the external electronic device 203 may mirror the main view of the drawing application of the electronic device 101 on the external electronic device 203 through the screen mirroring. The external electronic device 203 may stop providing the fourth interface as shown in the example of FIG. 5D (e.g., stop displaying the full screen preview display), and provide the mirrored main view (e.g., the first interface) as another fourth interface.

**In** another example, the electronic device 101 may stop outputting a main screen display or a main sound of a game application (e.g., stop providing the first interface) through the display of the electronic device 101 (or turn off the display). The external electronic device 203 may provide the main screen and the main sound of the game application as the fourth interface through the display of the external electronic device 203. For example, the external electronic device 203 may operate to continuously (or seamlessly) execute the game execution state of the electronic device 101 and provide the same through a remote play function. The external electronic device 203 may stop providing the fourth interface as shown in the example of FIG. 5D (e.g., stop displaying a sub screen and stop outputting a sub sound), and provide another fourth interface (e.g., a main screen display and a main sound output) according to the remote play.

In another example, the electronic device 101 may stop displaying a playback screen and stop outputting a main sound of a media playback application (e.g., stop displaying the first interface) through the display of the electronic device 101 (or turn off the display). The external electronic device 203 may provide the playback screen and the main sound of the media playback application as the fourth interface through the display of the external electronic device 203. For example, the external electronic device 203 may operate to continuously (or seamlessly) execute the media playback status of the electronic device 101 and provide the same through a remote play function. The external electronic device 203 may stop providing the fourth interface as shown in the example of FIG. 5D (e.g., stop outputting a sound at the back side), and provide another fourth interface (e.g., a playback screen display and a main sound output) according to the remote play.

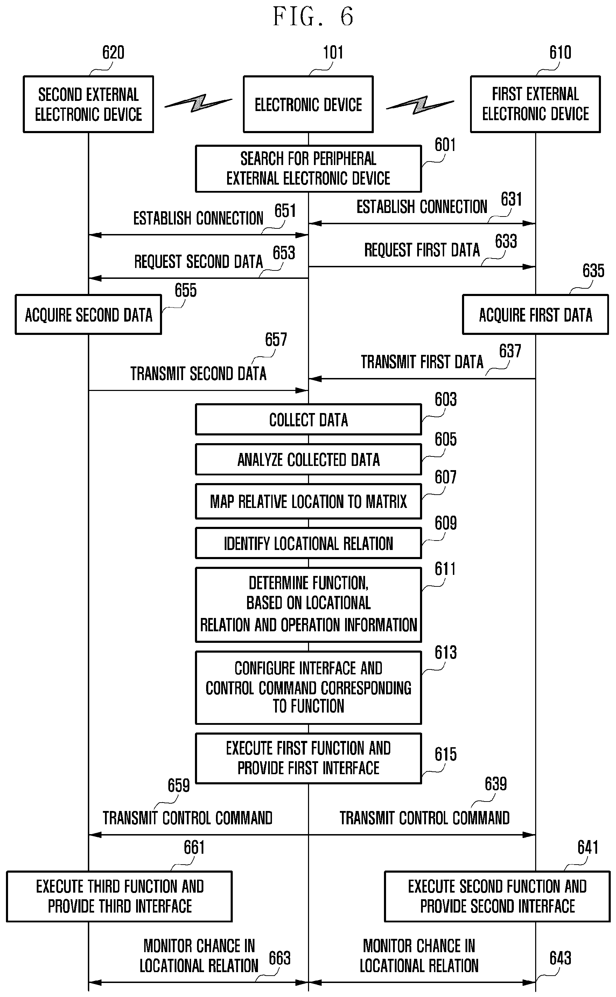

FIG. 6 illustrates an operation method among multiple electronic devices according to various embodiments.

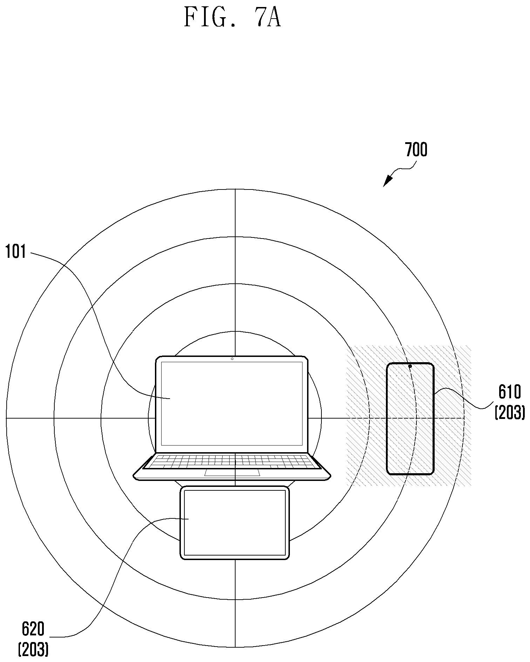

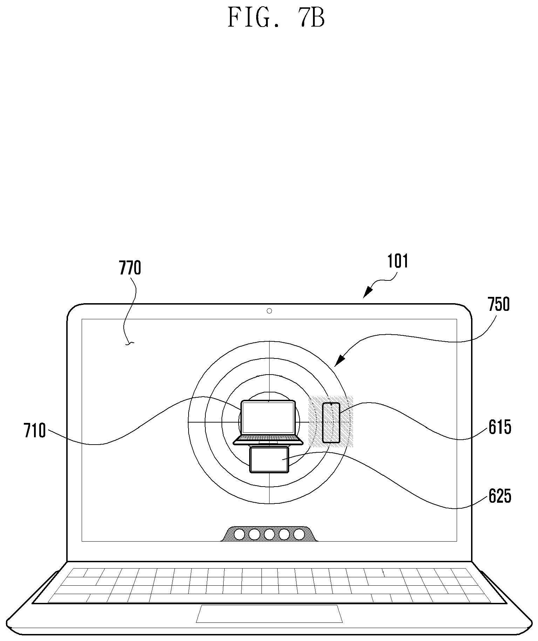

FIGS. 7A and 7B illustrate examples of configuring and providing a matrix for locational relation identification by an electronic device according to an embodiment.

According to an embodiment, in the example of FIG. 6, it is illustrated that there are two external electronic devices 203 in proximity to an electronic device 101, such as a first external electronic device 610 and a second external electronic device 620, but the example is merely provided to help understanding of the disclosure, and does not limit the embodiments of the disclosure.

Referring to FIG. 6, in operation 601, the electronic device 101 may search for a peripheral external electronic device. For example, the electronic device 101 may be in the status (e.g., a turn-on status) of performing a designated operation according to an interaction with a user, and the electronic device 101 may detect the proximity of one or more external electronic devices 203 (e.g., the first external electronic device 610 and the second external electronic device 620) during the operation. According to an embodiment, the electronic device 101 may detect whether the external electronic device 203 is in proximity by using short-range wireless communication such as UWB, Bluetooth, and/or low power Bluetooth.

In operations 631 and 651, the electronic device 101 may establish a connection with each of the first external electronic device 610 and the second external electronic device 620. For example, when the distance from the first external electronic device 610 is equal to or less than a designated distance threshold, the electronic device 101 may establish a connection with the first external electronic device 610 via designated wireless communication. In addition, when the distance from the second external electronic device 620 is equal to or less than a designated distance threshold, the electronic device 101 may establish a connection with the second external electronic device 620 via wireless communication. In an embodiment, operations 611 and 651 may be performed in parallel, individually, or sequentially, based on the order in which the first external electronic device 610 and the second external electronic device 620 are in proximity to the electronic device 101.

In operation 633, the electronic device 101 may request, from the first external electronic device 610, first data (e.g., location data and/or operation data) related to the first external electronic device 610, based on the connection with the first external electronic device 610. For example, the electronic device 101 may request, from the first external electronic device 610, the location data required to determine a locational relation (e.g., a first locational relation) with the first external electronic device 610 and the operation data for interface configuration.

In an embodiment, the location data required to determine the locational relation may include data exchanged by designated communication (e.g., UWB communication) for measuring a relative location (e.g., distance and/or direction) between the electronic device 101 and the first external electronic device 610. In an embodiment, the operation data for the interface configuration may include at least one piece of data related to operation information (e.g., application information and/or display information) of the first external electronic device 610 and/or status information of the first external electronic device 610 (e.g., information on a display orientation of the first external electronic device 610 and/or information on the orientation of the first external electronic device with reference to the direction of gravity)).

According to an embodiment, the location data may further include other data which can identify the relative location (e.g., distance and/or direction) of the first external electronic device 610. For example, the first external electronic device 610 may capture an image of a user by using a camera, recognize a gaze direction of the user, determine the relative location of the first external electronic device 610 with respect to the user according to the recognition, and provide the electronic device 101 with a result of the determination as the location data. In another example, the first external electronic device 620 may determine the relative location of the first external electronic device 610 for the user through user location recognition using a signal reflected from the user without a contact with a human body (or in a contactless manner) by using a UWB pulse, or user location recognition through sound wave (e.g., ultrasonic wave) location recognition, and may provide the electronic device 101 with a result of the determination as the location data.

According to an embodiment, the first external electronic device 610 may provide the electronic device 101 with, as the location data, data (e.g., raw data) for a user location recognized by the first external electronic device 610, rather than the result of the determination of the relative location, and may also cause the relative location to be determined by the electronic device 101. In the disclosure, the examples of a technology of using a camera, a technology of using a UWB pulse, or a sound wave location recognition technology for the location data are merely provided to help understanding of the disclosure, and do not limit the embodiments of the disclosure. In addition, these technologies are well known in the art, and thus a detailed description thereof can be omitted.

In operation 653, the electronic device 101 may request, from the second external electronic device 620, second data (e.g., location data and/or operation data) related to the second external electronic device 620, based on the connection with the second external electronic device 620. For example, the electronic device 101 may request, from the second external electronic device 620, location data required to determine the locational relation (e.g., a second locational relation) with the second external electronic device 620 and operation data for interface configuration.

**In** an embodiment, the location data may include, for example, data exchanged by designated communication (e.g., UWB communication) for measuring the relative location (e.g., distance and/or direction) between the electronic device 101 and the second external electronic device 620. **In** an embodiment, the operation data may include, for example, at least one piece of data related to operation data (e.g., application information and/or display information) of the second external electronic device 620 and status information of the second external electronic device 620 (e.g., the display orientation of the second external electronic device 620 and/or the orientation of the second external electronic device with reference to the direction of gravity). According to an embodiment, the location data may include, as described above, recognition data based on location recognition on the user by the second external electronic device 620, and/or result data obtained by determining the relative location indicating the location of the second external electronic device 620 with respect the user, based on the location recognition.

**In** operation 635, the first external electronic device 610 may collect first data. According to an embodiment, the first external electronic device 610 is in proximity of the electronic device 101 and is connected thereto, the first external electronic device may receive, from the electronic device 101, a request for data (e.g., location data and/or location data) related to the first external electronic device 610. The first external electronic device 610 may perform an operation for acquiring the first data, based on the reception of the request.

For example, the first external electronic device 610 may activate a function (or an application) and/or a hardware element (or a module) (e.g., a camera or a sensor module) related to the acquisition of the first data, and acquire the first data through the function and/or the hardware element.

For example, the first external electronic device 610 may acquire, as the first data, at least one piece of data related to data exchanged via designated communication (e.g., UWB communication) for measuring the relative location (e.g., distance and/or direction) with respect to the electronic device 101, operation information (e.g., application information and/or display information) of the first external electronic device 610, the display orientation of the first external electronic device 610, and/or the orientation of the first external electronic device 610 with reference to gravity. According to an embodiment, the first external electronic device 610 may measure the relative location with respect to the user by using a technology of using a camera, a technology of using a UWB pulse, and/or a sound wave location recognition technology, and acquire the measured data as the first data.

In operation 637, the first external electronic device 610 may transmit the first data to the electronic device 101 via the designated communication.

In operation 655, the second external electronic device 620 may collect second data. According to an embodiment, the second external electronic device 620 is in proximity to the electronic device 101 and is connected thereto, the second external electronic device may receive, from the electronic device 101, a request for data (e.g., location data and/or operation data) related to the second external electronic device 620. The second external electronic device 620 may perform an operation for acquiring the second data, based on the reception of the request.

For example, the second external electronic device 620 may activate a function (or an application) and/or a hardware element (or a module) (e.g., a camera or a sensor module) related to the acquisition of the second data, and acquire the second data through the function and/or the hardware element. For example, the second external electronic device 620 may acquire, as the second data, at least one piece of data related to data exchanged via designated communication (e.g., UWB communication) for measuring the relative location (e.g., distance and/or direction) with respect to the electronic device 101, operation information (e.g., application information and/or display information) of the second external electronic device 620, the display orientation of the second external electronic device 620, and/or the display orientation of the second external electronic device 620. According to an embodiment, the second external electronic device 620 may measure the relative location with respect to the user by using a technology of using a camera, a technology of using a UWB pulse, and/or a technology of using a sound wave location recognition, and acquire the measured data as the second data.

In operation 657, the second external electronic device 620 may transmit the second data to the electronic device 101 via the designated communication.

In operation 603, the electronic device 101 may collect data. For example, the electronic device 101 may collect the data, at least based on the first data received from the first external electronic device 610 and/or the second data received from the second external electronic device 620.

In operation 605, the electronic device 101 may analyze the collected data. For example, the electronic device 101 may extract and analyze the relative location (e.g., distance and/or direction) of the external electronic device 203 (e.g., the first external electronic device 610 and/or the second external electronic device 620), the operation information of the external electronic device 203, and/or the status information of the external electronic device 203, from the collected data.

In operation 607, the electronic device 101 may map the relative location of the external electronic device 203 to a designated matrix (or device map) for locational relation identification, based on a result of the analysis. The example thereof is illustrated in FIG. 7A.

In an embodiment, FIG. 7A may illustrate an example of a matrix 700 for virtually mapping the location of the external electronic device 203 through providing for identification of a locational relation with the external electronic device 203 through internal (or background) processing by the electronic device 101 and virtual mapping of.

Referring to FIG. 7A, the electronic device 101 may map the electronic device 101 (or an object corresponding to the electronic device 101) to the center of the matrix 700, map the external electronic device 203 (or an object corresponding to the external electronic device 203) to the location corresponding to the relative location (e.g., distance and/or direction) of the external electronic device 203 in a peripheral space (e.g., two-dimensional space or three-dimensional space) of the electronic device 101, and provide the same. For example, the electronic device 101 may map an object of the first external electronic device 610 to the left side of the electronic device 101 according to the relative location of the first external electronic device 610 with reference to an object of the electronic device 101, and map an object of the second external electronic device 620 to the front of the electronic device 101 according to the relative location of the second external electronic device 620.

According to an embodiment, when configuring the matrix 700, the electronic device 101 may display (e.g., overlay or provide a pop-up display) the matrix 700 on a screen 770 that is being executed, through a display (e.g., the display module 160 of FIG. 1) of the electronic device 101, and provide the user with a guide to the relative location of the external electronic device 203. The example thereof is illustrated in FIG. 7B.

FIG. 7B may illustrate an example of a matrix interface 750 for visually providing the user with a matrix 700 configured by the electronic device 101. In an embodiment, the matrix interface 750 may be provided to be editable by a user. According to an embodiment, the user may identify the location of a first object 710 of the electronic device 101, the location of a second object 615 of the first external electronic device 610, and the location of a third object 625 of the second external electronic device 620, and intuitively identify locational relations among the electronic devices 101, 610, and 620, through the matrix interface 750 displayed through a display of the electronic device 101.

According to an embodiment, when wrong locational relations of the electronic devices 101, 610, and 620 are provided, the user may selectively move an object (e.g., the second object 615 and/or the third object 625) of the external electronic device 203 on the matrix interface 750 and correct the locational relations. For example, the user can drag and drop one of the objects 710, 615, and 625 to the appropriate location, either using a mouse or their finger. According to an embodiment, the electronic device 101 may correct the locational relations among the electronic devices 101, 610, and 620 to correspond to the correction made by the user.

According to an embodiment, the matrix 700 is described to help understanding of the disclosure, and the electronic device 101 may calculate mapping and locational relations of the external electronic device 203 by internal algorithm processing. According to an embodiment, the electronic device 101 may identify, for example, a relative location with respect to the external electronic device 203 through analysis of collected data, and may also directly perform operation 609, instead of performing (or by omitting) operation 607. For example, operation 607 is provided to provide more intuitive and correct location relations, and according to the implementation, operation 607 can be omitted.

In operation 609, the electronic device 101 may identify a locational relation (e.g., a relative location and/or space) with the external electronic device 203. According to an embodiment, the electronic device 101 may identify a relative location of the first external electronic device 610 and a relative location of the second external electronic device 620, based on the analysis of the collected data and the analysis of the matrix 700. In an embodiment, the locational relation may relate to information (e.g., direction) on in which direction the external electronic device 203 is located with respect to the electronic device 101 and/or information (e.g., distance) on how far the external electronic device 203 is spaced apart from the electronic device.

In operation 611, the electronic device 101 may determine a function for the electronic device 101 and the external electronic device 203 (e.g., the first external electronic device 610 and the second external electronic device 620). For example, the electronic device 101 may determine a function corresponding to each of the electronic device 101 and the external electronic device 203, at least based on a locational relation, operation information, status information, and/or information on the number of external electronic devices 203. For example, the electronic device 101 may divide (or segment) a function that is being executed in the electronic device 101 into a first function (e.g., a function for (or a function allocated to) the electronic device 101) associated with the function that being executed, a second function (e.g., a function for the first external electronic device 610) associated with the function that is being executed, and a third function (e.g., a function for the second external electronic device 620) associated with the function that is being executed.

**In** operation 613, the electronic device 101 may configure an interface and a control command (or control information) corresponding to the function. According to an embodiment, the electronic device 101 may configure an interface and a control command corresponding to each of the divided functions. For example, the electronic device 101 may generate a first interface and a first control command corresponding to the first function related to the electronic device 101, a second interface and a second control command corresponding to the second function related to the first external electronic device 610, and a third interface and a third control command corresponding to the third function related to the second external electronic device 620.

According to an embodiment, the electronic device 101 may operate to provide different interfaces for the electronic device 101 and the external electronic device 203, based on a location relation with the external electronic device 203 (e.g., the first external electronic device 610 or the second external electronic device 620), operation information, status information, and/or information on the number of the external electronic devices 203.

According to an embodiment, the electronic device 101 may generate a control command (e.g., control information) for control (e.g., display control or output control) of different interfaces, the command corresponding to each of the interfaces. According to an embodiment, the control command may include screen information (e.g., display data), audio information (e.g., sound data), and/or execution control information (e.g., information for controlling execution of an application or a function), which are related to the provided interface.

For example, in an example of a case wherein an application executed in the electronic device 101 is a note application, the electronic device 101 may divide the note application of the electronic device 101 into three functions (e.g., a first function for the electronic device 101, a second function for the first external electronic device 610, and a third function for the second external electronic device 620), based on the number of the external electronic devices 203 (two external electronic devices which are the first external electronic device 610 and the second external electronic device 620).

According to an embodiment, the first function may be a function of displaying a main screen of the note application in the electronic device 101. According to an embodiment, the second function may be a function of providing, by the first external electronic device 610, an interface related to a writing field for taking a note, provided through the electronic device 101, according to the locational relation (e.g., the left side of the electronic device 101) with the first external electronic device 610. According to an embodiment, the third function may be a function of providing, by the second external electronic device 620, an interface related to a note list including at least one note stored in a memory (e.g., the memory 130 of FIG. 1) of the electronic device 101 according to the locational relation (e.g., the right side of the electronic device 101) with the second external electronic device 620.

According to an embodiment, in relation to the first function, the second function, and the third function divided for the electronic devices 101, 610, and 620, respectively, the electronic device 101 may generate a control command for controlling each device to execute each function.

In operation 615, the electronic device 101 may execute the first function, and provide a first interface corresponding to the execution of the first function. For example, the electronic device 101 may execute the first function allocated (or distributed) to the electronic device 101, based on a control command related to the electronic device 101, and provide a first interface (e.g., a screen interface and/or a sound interface) corresponding to the first function.

In operations 639 and 659, the electronic device 101 may share the control command with each of the first external electronic device 610 and the second external electronic device 620. In operation 639, the electronic device 101 may share, with the first external electronic device 610, a control command for controlling the first external electronic device 610 to execute the second function and provide the second interface. In operation 659, the electronic device 101 may share, with the second external electronic device 620, a control command for controlling the second external electronic device 620 to execute the third function and provide the third interface.

According to an embodiment, the electronic device 101 may transmit, to the first external electronic device 610, the control command for controlling the function and/or the interface of the first external electronic device 610, by using a designated communication module (e.g., the communication module 190 of FIG. 1), so as to control the first external electronic device 610 to execute the function and provide the interface, based on the control command. According to an embodiment, the electronic device 101 may transmit, to the second external electronic device 620, the control command for controlling the function and/or the interface of the second external electronic device 620, by using a designated communication module (e.g., the communication module 190 of FIG. 1), so as to control the second external electronic device 620 to execute the function and provide the interface, based on the control command.

**In** operations 641 and 661, the external electronic device 203 (e.g., the first external electronic device 610 and the second external electronic device 620) may execute a related function and provide a related interface corresponding to the execution of the related interface, based on the control command.

According to an embodiment, in operation 641, the first external electronic device 610 may execute the second function allocated (or distributed) to the first external electronic device 610 and provide a second interface (e.g., a screen interface and/or a sound interface) corresponding to the second function, based on the control command received from the electronic device 101. According to an embodiment, in operation 661, the second external electronic device 620 may execute the third function allocated (or distributed) to the second external electronic device 620 and provide a third interface (e.g., a screen interface and/or a sound interface) corresponding to the third function, based on the control command received from the electronic device 101.

**In** operations 643 and 663, the electronic device 101 may monitor a change in a locational relation (e.g., a relative location and/or space) with the external electronic device 203 (e.g., the first external electronic device 610 and the second external electronic device 620). According to an embodiment, the electronic device 101 may continuously monitor a locational relation with the external electronic device 203 (or perform communication such as an exchange of information related to the location) while being connected to the external electronic device 203 (or while performing the above-described operations).

According to an embodiment, the electronic device 101 may detect a change in the relative location of the external electronic device 203, based on a result of the monitoring. In an embodiment, the electronic device 101 may monitor a change in the locational relation (e.g., a relative distance and/or direction) with the external electronic device 203 by using communication (e.g., UWB communication) which can measure a change in the location (e.g., the relative distance and/or direction) of the external electronic device 203. According to an embodiment, the electronic device 101 may detect a change in the status information (e.g., a display orientation or the orientation with reference to the direction of gravity) of the external electronic device 203.

Although not shown, according to an embodiment, when detecting the change in the locational relation, the electronic device 101 may control a change in a function and/or an interface (e.g., a screen interface and/or a sound interface) for the electronic device 101 and/or the corresponding external electronic device 203 in response to the changed locational relation with the corresponding external electronic device 203.

According to an embodiment, the electronic device 101 may generate a control command for controlling the change (or reconfiguration) of the interface of the corresponding external electronic device 203 and transmit the same to the corresponding external electronic device 203. According to an embodiment, the control command may include screen information (e.g., display data), audio information (e.g., sound data), and/or execution control information (e.g., information for controlling execution of an application or a function), which are related to the provided interface.

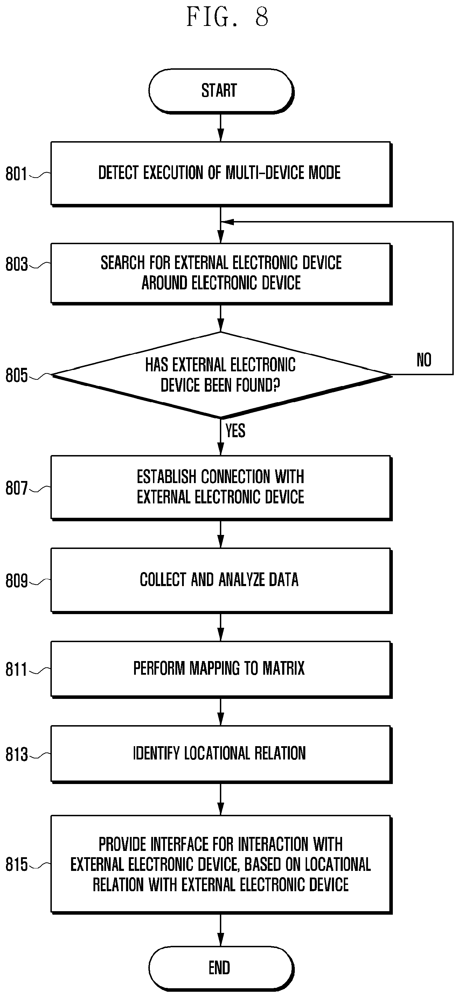

FIG. 8 is a flowchart illustrating an operation method of an electronic device according to various embodiments.

Referring to FIG. 8, in operation 801, a processor 120 of an electronic device 101 may detect execution of a multi-device mode. According to an embodiment, the processor 120 may be in the status of performing a designated operation by a user, and may execute the multi-device mode, based on a user input that is input to execute the multi-device mode during the operation.

**In** operation 803, the processor 120 may search for a peripheral external electronic device, based on the execution of the multi-device mode. For example, the processor 120 may search for one or more external electronic devices 203 (e.g., the first external electronic device 610 and the second external electronic device 620) that are in proximity in the electronic device 101, through designated communication. According to an embodiment, the processor 120 may search for the external electronic device 203 (or may detect whether the external electronic device 203 is in proximity) by using short-range wireless communication such as UWB, Bluetooth, and/or low power Bluetooth.

According to an embodiment, the processor 120 may search for whether user account based-external electronic devices 203 which are grouped by (or logged in with) a user account, among various external electronic devices, within a proximity distance. For example, the electronic device 101 and the external electronic device 203 may indicate user account-based devices which are grouped by a user account.

**In** operation 805, the processor 120 may determine whether at least on one external electronic device is found, based on the found result.

**In** operation 805, when there is not external electronic device 203 found, the processor 120 may proceed to operation 803 and perform operations subsequent to operation 803. For example, the processor 120 may perform an operation of searching for an external electronic device while the multi-device mode is executed (or until the multi-device mode ends).

When the external electronic device 203 is found in operation 805, the processor 120 may establish a connection with the external electronic device 203 in operation 807. For example, when the electronic device 101 and the first external electronic device 610 are in proximity to each other by a distance equal to less than a designated distance threshold, the processor 120 may be connected with the first external electronic device 610 through designated wireless communication. For example, when the electronic device 101 and the second external electronic device 620 are in proximity to each other by a distance equal to less than a designated distance threshold, the processor 120 may be connected with the second external electronic device 620 through designated wireless communication. In an embodiment, the processor 120 may establish the connection in parallel, individually, or sequentially, based on the order in which the first external electronic device 610 and the second external electronic device 620 are in proximity to the electronic device 101.

**In** operation 809, the processor 120 may collect and analyze data, based on the connection with the external electronic device 203. For example, the processor 120 may collect each of data for the electronic device 101 and data for the external electronic device 203, and analyze the collected data.

According to an embodiment, the processor 120 may request, from the first external electronic device 610, first data (e.g., location data and/or operation data) related to the first external electronic device 610, based on the connection with the first external electronic device 610, and acquire the first data from the first external electronic device 610. According to an embodiment, the processor 120 may request, from the second external electronic deice 620, second data (e.g., location data and/or operation data) related to the second external electronic device 620, based on the connection with the second external electronic device 620, and acquire the second data from the second external electronic device 620.

For example, the processor 120 may request, from each connected external electronic device 203, location required to determine a locational relation with the external electronic device 203 and operation data for configuration of an interface. **In** an embodiment, the location data required for determination of the locational relation may include, for example, data exchanged by designated communication (e.g., UWB communication) for measuring a relative location (e.g., distance and/or direction) between the electronic device 101 and the external electronic device 203. **In** an embodiment, the operation data for configuration of an interface may include at least one piece of data related to operation information (e.g., application information and/or display information) of the external electronic device 203 and/or status information (e.g., information on a display orientation of the external electronic device 203 and/or information on the orientation of the external electronic device with reference to the direction of gravity).

According to an embodiment, the location data may further include other data which can identify the relative location (e.g., distance and/or direction) of the external electronic device 203. For example, the external electronic device 203 may capture an image of a user by using a camera, recognize a gaze direction of the user, determine a relative location of the external electronic device 203 with respect to the user according to the recognition of the gaze direction, and provide the electronic device 101 with a result of the determination, as the location data. In another example, the external electronic device 203 may determine the relative location of the external electronic device 203 with respect to the user through user location recognition using a signal reflected from the user without a contact with a human body (or in a contactless manner) by using a UWB pulse, or user location recognition through sound wave (e.g., ultrasonic wave) location recognition, and provide the electronic device 101 with a result of the determination, as the location data.

In the disclosure, examples of a technology using a camera, a technology using a UWB pulse, or a sound wave location recognition technology for the location data are merely provided to help understanding of the disclosure, and do not limit the embodiments of the disclosure.

According to an embodiment, the processor 120 may analyze the collected data. For example, the processor 120 may extract, from the collected data, the relative location (e.g., location and/or direction) of the external electronic device 203 (e.g., the first external electronic device 610 and/or the second external electronic device 620), operation information of the external electronic device 203, and/or status information of the external electronic device 203, and analyze the collected data.

In operation 811, the processor 120 may map, based on a result of the analysis, the relative location of the external electronic device 203 to a designated matrix 700 (or a device map) for identification of the locational relation. The example of the matrix is described in FIG. 7A above.

Referring to FIG. 7A, the processor 120 may map the electronic device 101 (or an object corresponding to the electronic device 101) to the center of the matrix 700, map the external electronic device 203 (or an object corresponding to the external electronic device 203) to the location corresponding to the relative location (e.g., distance and/or direction) of the external electronic device 203 in a peripheral space (e.g., two-dimensional space or three-dimensional space) of the electronic device 101, and provide the same. For example, the processor 120 may map an object of the first external electronic device 610 to the left side of the electronic device 101 according to the relative location of the first external electronic device 610 with reference to an object of the electronic device 101, and map an object of the second external electronic device 620 to the front of the electronic device 101 according to the relative location of the second external electronic device 620.

According to an embodiment, when configuring the matrix 700, the processor 120 may display (e.g., overlay or provide a pop-up display) the matrix 700 on a screen 770 that is being executed, through a display (e.g., the display module 160 of FIG. 1) of the electronic device 101, and provide the user with a guide to the relative location of the external electronic device 203. The example thereof is illustrated in FIG. 7B above. According to an embodiment, the user may identify the location of the first object 710 of the electronic device 101, the location of the second object 615 of the first external electronic device 610, and the location of the third object 625 of the second external electronic device 620, and intuitively identify locational relations among the electronic devices 101, 610, and 620, through the matrix interface 750 displayed through a display of the electronic device 101.

According to an embodiment, the matrix 700 is described to help understanding of the disclosure, and the electronic device 101 may calculate mapping and locational relations of the external electronic device 203 by internal algorithm processing. According to an embodiment, the electronic device 101 may identify, for example, a relative location with respect to the external electronic device 203 through analysis of collected data, and may also directly perform operation 813, instead of performing (or by omitting) operation 811. For example, operation 811 may be provided to provide more intuitive and correct location relations, and according to the implementation, operation 811 can be omitted.

**In** operation 813, the processor 120 may identify a locational relation (e.g., a relative location and/or space) with the external electronic device 203. According to an embodiment, the electronic device 101 may identify a relative location of the first external electronic device 610 and a relative location of the second external electronic device 620, based on the analysis of the collected data or the analysis of the matrix 700. **In** an embodiment, the locational relation may relate to information (e.g., direction) on in which direction the external electronic device 203 is located with respect to the electronic device 101 and/or information (e.g., distance) on how far the external electronic device is spaced apart from the electronic device.

**In** operation 815, the processor 120 may provide an interface for an interaction with the external electronic device 203, based on the locational relation between the electronic device 101 and the external electronic device 203 (e.g., the first external electronic device 610 and the second external electronic device 620).

According to an embodiment, the processor 120 may determine a function for each of the electronic device 101 and the external electronic device 203. For example, the processor 120 may determine a function corresponding to each of the electronic device 101 and the external electronic device 203, at least based on a locational relation, operation information, status information, and/or information on the number of external electronic devices 203. For example, the processor 120 may divide (or segment) a function that is being executed in the electronic device 101 into a first function (e.g., a function for (or a function allocated to) the electronic device 101) associated with the function that being executed, a second function (e.g., a function for the first external electronic device 610) associated with the function that is being executed, and a third function (e.g., a function for the second external electronic device 620) associated with the function that is being executed.

According to an embodiment, the processor 120 may configure an interface and a control command (or control information) corresponding to the function. According to an embodiment, the processor 120 may configure an interface and a control command corresponding to each of the divided functions. According to an embodiment, the processor 120 may generate a first interface and a first control command corresponding to the first function related to the electronic device 101, a second interface and a second control command corresponding to the second function related to the first external electronic device 610, and a third interface and a third control command corresponding to the third function related to the second external electronic device 620.

According to an embodiment, the processor 120 may operate to provide different interfaces for the electronic device 101 and the external electronic device 203, based on a location relation with the external electronic device 203 (e.g., the first external electronic device 610 or the second external electronic device 620), operation information, status information, and/or information on the number of the external electronic devices 203.

According to an embodiment, the processor 120 may generate a control command (e.g., control information) for control (e.g., display control or output control) of different interfaces, the command corresponding to each of the interfaces. According to an embodiment, the control command may include screen information (e.g., display data), audio information (e.g., sound data), and/or execution control information (e.g., information for controlling execution of an application or a function), which are related to the provided interface.

According to an embodiment, the processor 120 may operate to execute the first function allocated (or distributed) to the electronic device 101, based on a control command related to the electronic device 101, and provide a first interface (e.g., a screen interface and/or a sound interface) corresponding to the first function. According to an embodiment, the processor 120 may share the control command with the external electronic device 203 (e.g., the first external electronic device 610 and the second external electronic device 620). For example, the processor 120 may share (or transmit), with (or to) the first external electronic device 610, a control command for controlling the first external electronic device 610 to execute the second function and provide the second interface. For example, the processor 120 may share (or transmit), with (or to) the second external electronic device 620, a control command for controlling the second external electronic device 620 to execute the third function and provide the third interface.

According to an embodiment, the processor 120 may transmit, to each external electronic device 203, the control command for controlling the function and/or the interface of the external electronic device 203 (e.g., the first external electronic device 610 and the second external electronic device 620), by using a designated communication module (e.g., the communication module 190 of FIG. 1), so as to control the external electronic device 203 to execute the function and provide the interface, based on the corresponding control command.

According to an embodiment, the external electronic device 203 (e.g., the first external electronic device 610 and the second external electronic device 620) receiving the control command from the electronic device 101 may execute a related function and provide a related interface corresponding to the execution of the related function, based on the control command.

According to an embodiment, the first external electronic device 610 may execute the second function allocated (or distributed) to the first external electronic device 610 and provide a second interface (e.g., a screen interface and/or a sound interface) corresponding to the second function, based on the control command received from the electronic device 101. According to an embodiment, the second external electronic device 620 may execute the third function allocated (or distributed) to the second external electronic device 620 and provide a third interface (e.g., a screen interface and/or a sound interface) corresponding to the third function, based on the control command received from the electronic device 101.

Although not shown, according to an embodiment, when detecting a change in the locational relation with at least one external electronic device 203, the processor 120 may control a change in a function and/or an interface (e.g., a screen interface and/or a sound interface) for the electronic device 101 and/or the corresponding external electronic device 203 in response to the changed locational relation with the corresponding external electronic device 203.

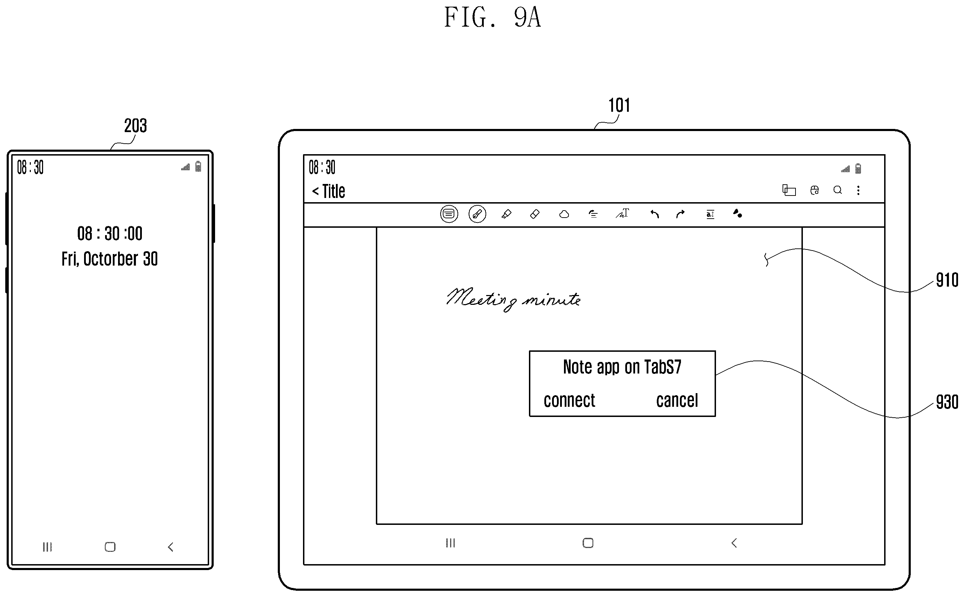

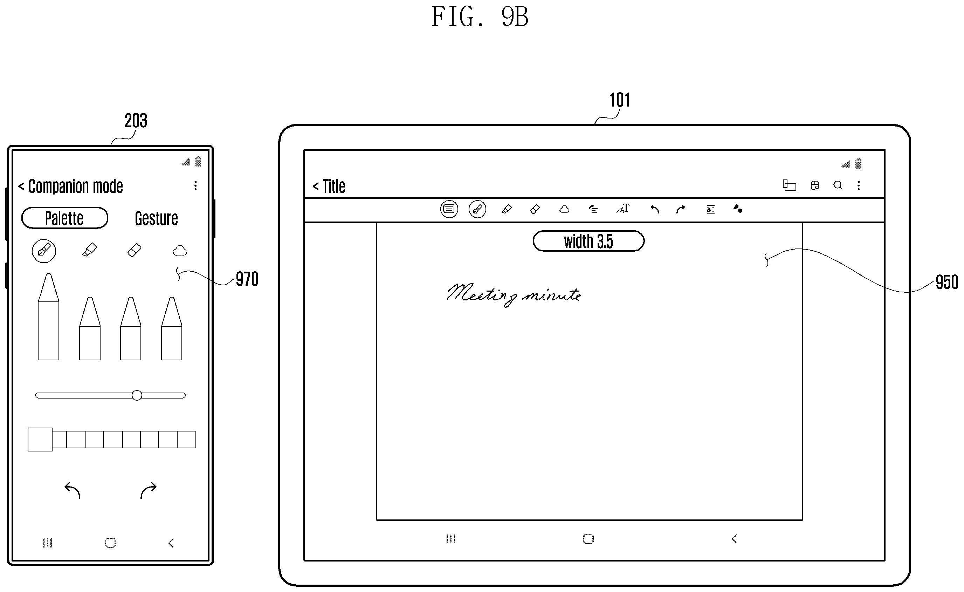

FIGS. 9A and 9B illustrate examples of providing an interface based on a locational relation by an electronic device according to various embodiments.

Referring to FIG. 9A, an electronic device 101 (e.g., the first electronic device 201 of FIG. 2) and an external electronic device 203 (e.g., the second electronic device 203) may be in proximity to each other. In an embodiment, the electronic device 101 may be a tablet PC, and the external electronic device 203 may be a smartphone. This example is merely provided to help understanding of the disclosure, and the embodiments of the disclosure are not limited by the description.

When the external electronic device 203 is in proximity, the electronic device 101 may establish a connection with the external electronic device 203, and identify a locational relation with the external electronic device 203 through communication (e.g., UWB communication) which can measure a relative location (e.g., distance and/or direction). The electronic device 101 may share operation information (e.g., application information and/or display information) and/or status information with the external electronic device 203. The electronic device 101 may be the status of displaying an execution screen of an application (e.g., a note application) as a user interface 910.

The electronic device 101 may identify operation information and/or status information of the external electronic device 203. The electronic device 101 may identify, based on a result of the identification, a function (or a task) which can be executed in the external electronic device 203 in association with an application (or a user interface 910) that is being executed in the electronic device 101, and provide a user interface 930 for a result of the identification through a display (e.g., the display module 160 of FIG. 1) of the electronic device 101.

For example, the electronic device 101 may determine execution of a multi-device mode, based on the proximity of the external electronic device 203 in the status of displaying an execution screen 910 of the note application. The electronic device 101 may operate to process a task of the electronic device 101 through collaboration (or sharing) with the external electronic device 203 according to the multi-device mode. The electronic device 101 may determine a function to be performed in the external electronic device 203 for collaboration (or sharing) of the task, at least based on the locational relation, the operation information, and/or the status information. The electronic device 101 may provide information on at least one function (or task) which can be executed in the external electronic device 203 through the user interface 930 (e.g., a tool bar or a multi-device menu), based on the determination.

Referring to FIG. 9B, the electronic device 101 may provide a first user interface 920, based a locational relation with the external electronic device 203, and the external electronic device 203 may provide a second user interface 970. For example, the first user interface 950 corresponds to a display and/or input mode of an application (e.g., a note application) executed in the electronic device 101, and may perform, for example, drawing (e.g., meeting minute), based on a user input (e.g., touch). For example, the second user interface 970 is one of control modes (e.g., palette mode) of the application (e.g., the note application) executed in the electronic device 101, and may provide, for example, control information such as a type, a thickness, and a shape of a pen, as a user interface.

According to an implementation example, the electronic device 101 may operate to directly provide the first user interface 950 and the second user interface 970, instead of providing the user interface 930 for an application which can be executed in the external electronic device 203 (e.g., by omitting the user interface 930). The description is provided only to help understanding of the disclosure, and the embodiments of the disclosure are not limited by the description.

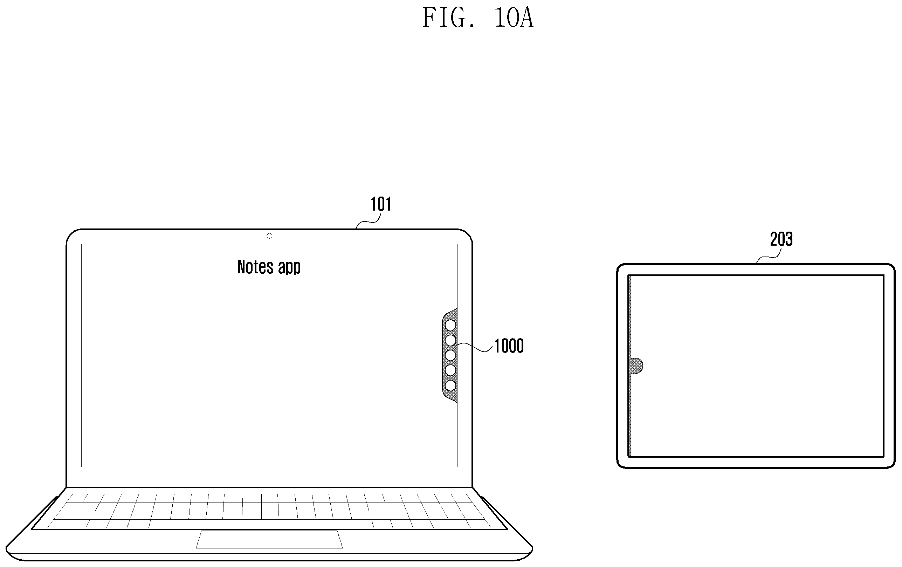

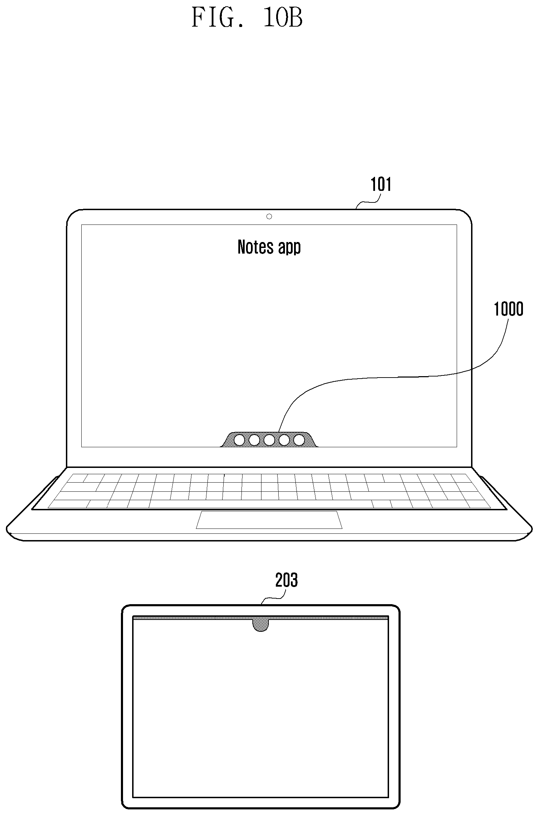

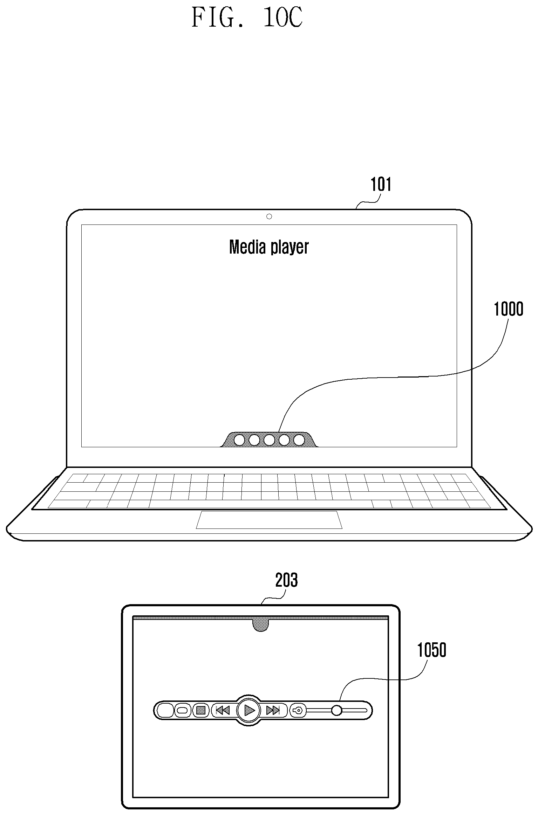

FIG. 10A, 10B, and 10C illustrate examples of providing an interface, based on a locational relation by an electronic device according to various embodiments.

In an embodiment, FIGS. 10A, 10B, and 10C may illustrate examples of providing a recommendation function for an external electronic device 203 through a multi-device menu according to a locational relation between an electronic device 101 and the external electronic device 203 and an application (or a function) executed in the electronic device 101.

Referring to FIGS. 10A, 10B, and 10C, the electronic device 101 and the external electronic device 203 may be in proximity to each other. In an embodiment, the electronic device 101 may be a laptop computer, and the external electronic device 203 may be a tablet PC. This example is merely provided to help understanding of the disclosure, and the embodiments of the disclosure are not limited by the description.

When the external electronic device 203 is in proximity, the electronic device 101 may establish a connection with external electronic device 203, and identify a locational relation with the external electronic device 203 through communication (e.g., UWB communication) which can measure a relative location (e.g., distance and/or direction). The electronic device 101 may acquire operation information (e.g., application information and/or display information) and/or status information of the external electronic device 203. The electronic device 101 may be the status of displaying an execution screen of an application (e.g., a note application) as a user interface. The electronic device 101 may identify the operation information and/or the status information of the external electronic device 203.

Based on a result of the identification, the electronic device 101 may identify at least one function (or task) which can be executed in the external electronic device 203, in connection with an application (or a user interface) that is being executed in the electronic device 101. The electronic device 101 may configure a multi-device menu 1000 of a result of the identification and provide a user interface of the menu through a display (e.g., the display module 160 of FIG. 1) of the electronic device 101.

For example, the electronic device 101 may determine execution of a multi-device model, based on the proximity of the external electronic device 203 in the status of displaying an execution screen of the note application. The electronic device 101 may operate to process a task of the electronic device 101 through collaboration (or sharing) with the external electronic device 203 according to the multi-device mode. The electronic device 101 may determine a function to be performed in the external electronic device 203 for collaboration (or sharing) of the task, at least based on the locational relation, the operation information, and/or the status information. The electronic device 101 may provide information on at least one function (or task) which can be executed in the external electronic device 203 through a user interface (e.g., a tool bar or a multi-device menu 1000), based on the determination.

According to an embodiment, the electronic device 101 may provide the multi-device menu 1000 including at least one function which can be performed by collaboration (or sharing) of a task with the external electronic device 203, in association with the application that is being executed. According to an embodiment, based on the locational relation with the external electronic device 203, the multi-device menu 1000 may be disposed to be sided toward the direction in which the external electronic device 203 is located, and provided. For example, when the external electronic device 203 is located on the left side with reference to the electronic device 101 (or on the right side with reference to the user), the electronic device 101 may provide the menu at the edge on the left side of the display with reference to the electronic device 101 (or at the edge on the right side with reference to the user) (e.g., see FIG. 10A). In another example, when the external electronic device 203 is located in the front with reference to the electronic device 101 (or the front with reference to the user), the electronic device 101 may provide the menu at the edge at the lower end of the display with reference to the electronic device 101 (e.g., see FIG. 10B).

According to an embodiment, when recognizing that the external electronic device 203 is located on the left side of the electronic device 101, the electronic device 101 may provide the multi-device menu 1000 at the edge on the left side of the display with reference to the electronic device 101. When providing the multi-device menu 1000, the electronic device 100 may recommend, based on the locational relation with the external electronic device 203, at least one of multiple functions which can be executed in the external electronic device 203, the functions being included in the multi-device menu 1000.

In an embodiment, an example, in which a note application is executed in the electronic device 101 and a function executable in the external electronic device 203 in association with the note application may include, for example, a first function (e.g., a second screen), a second function (e.g., a virtual keyboard), a third function (e.g., a stylus pad), and a fourth function (e.g., media control), may be provided. This example is merely provided to help understanding to the disclosure and does not limit the embodiments of the disclosure, and a combination of various function are possible based on the type (or the property) of the application executed in the electronic device 101.

Referring to FIG. 10A, when the electronic device 101 has identified that the external electronic device 203 is disposed alongside the electronic device 101 and is located on the left side of the electronic device 101, based on the locational relation with the external electronic device 203, the electronic device may provide a recommendation of a first function (e.g., a second screen) among multiple functions of the multi-device menu 1000. For example, when the recommendation is made, an object (e.g., icon and/or text) of the first function of the multi-device menu 1000 is provided differently from another object (e.g., is provided with a highlighting effect).

Referring to FIG. 10B, when identifying, based on the locational relation with the external electronic device 203, that the external electronic device 203 is located in the front of the electronic device 101, the electronic device 101 may provide a recommendation of a second function (e.g., a stylus pad) among multiple functions of the multi-device menu 1000. For example, when the recommendation is made, an object (e.g., icon and/or text) of the first function of the multi-device menu 1000 is provided differently from another object (e.g., is provided with a highlighting effect).

Referring to FIG. 10C, when identifying, based on the locational relation with the external electronic device 203, that a media application (e.g., a media player) is executed and the external electronic device 203 is located in the front of the electronic device 101, the electronic device 101 may provide a recommendation of a fourth function (e.g., media control) among multiple functions of the multi-device menu 1000. For example, when the recommendation is made, an object (e.g., icon and/or text) of the first function of the multi-device menu 1000 is provided differently from another object (e.g., is provided with a highlighting effect).

According to an embodiment, the function recommendation in the electronic device 101, based on the multi-device menu 1000, may be provided by the electronic device 101 as shown in the examples of FIGS. 10 and 10B. According to another embodiment, the function recommendation in the electronic device 101, based on the multi-device menu 1000, may be provided by both the electronic device 101 and the external electronic device 203 through an interaction therebetween, as shown in the example of FIG. 10C.

For example, as shown in the example of FIG. 10C, when the electronic device 101 recommends the function, the external electronic device 203 may provide an execution object related to the corresponding function through a display of the external electronic device 203. As shown in the example of FIG. 10C, the electronic device 101 may execute a media application, recommend a fourth function (e.g., media control) as a recommended function, and execute, in response to the recommendation of the fourth function of the electronic device 101, an execution object (e.g., a controller 1050 for media control) related to the fourth function through the display of the external electronic device 203, so as to provide the same.

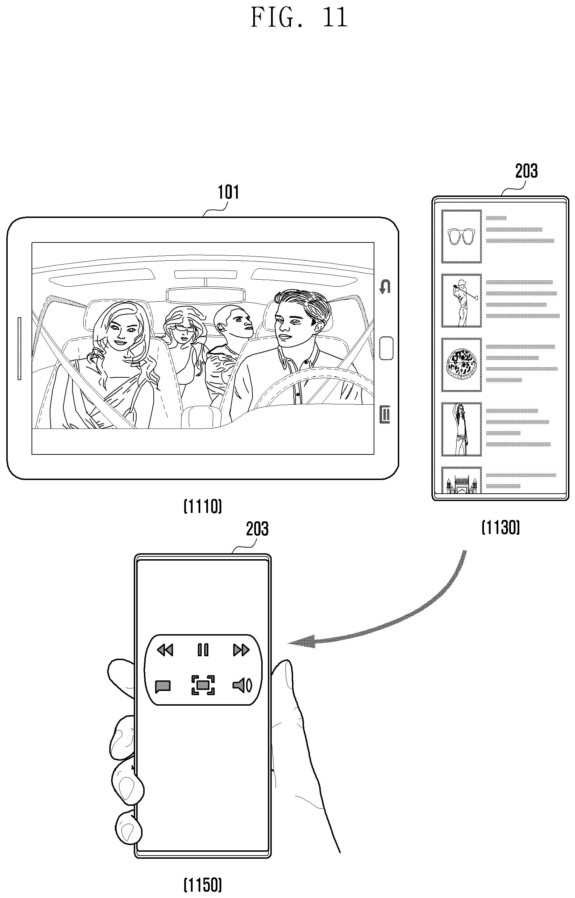

FIG. 11 illustrates an example of providing an interface based on a change in a locational relation by an electronic device according to various embodiments.

Referring to FIG. 11, when detecting proximity of an external electronic device 203, an electronic device 101 may establish a connection with the external electronic device 203. The electronic device 101 may establish the connection with the external electronic device 203 via designated communication (e.g., UWB communication). The electronic device 101 may identify a locational relation with the external electronic device 203 via the designated communication and share operation information and/or status information with the external electronic device 203.

For example, the electronic device 101 may provide (or display) an execution screen of an application of playing a content (e.g., video), as a first user interface 1110. When the external electronic device 203 is disposed on the left side of the electronic device 101 while the electronic device 101 provides the first user interface 1110, the external electronic device 203 may provide a second user interface 1130 including a list of contents. The first user interface 1110 may be another user interface of the same application as that of the second user interface 1130.

According to an embodiment, when the external electronic device 203 moves to the front of the electronic device 101 and is disposed while the electronic device 101 provides the first user interface 1110, the external electronic device 203 may provide a third user interface 1150 for performing control (e.g., previous content ( ◁ ◁), stop playing (∥), and next content (▷ ▷ ) **of** the content playing. The third user interface 1150 may be another user interface of the same application as that of the second user interface 1130.

For example, when the locational relation with the external electronic device 203 is changed, the electronic device 101 may control an interface of the external electronic device 203 to be changed based on the changed locational relation. For example, when the external electronic device 203 moves from the left side of the electronic device 101 to the front thereof, the second interface 1130 of the external electronic device 203 may be changed to the third user interface 1150 and provided. **In** another example, when the external electronic device 203 moves from the front of the electronic device 101 to the left side again, the interface of the external electronic device 203 may be changed from the third user interface 1150 to the second user interface 1130 and provided.

According to an embodiment, the electronic device 101 may detect a change in the locational relation with the external electronic device 203 in real time. According to an embodiment, the change in the locational relation may correspond to at least one of a change in the location of the electronic device or a change in the location of the external electronic device 203.

According to an embodiment of the disclosure, the external electronic device 203 may be located in at least one of forward, backward, leftward, rightward, upward, and diagonal (or oblique) directions of the electronic device 101.

For example, the external electronic device 203 may be located on the right side of the electronic device 101 and then move toward one of leftward, forward, backward, upward, and diagonal (or oblique) directions of the electronic device 101. Alternatively, the external electronic device 101 may be located on the left side of the electronic device 101 and then move toward one of rightward, forward, backward, upward, and diagonal (or oblique) directions of the electronic device 101. Alternatively, the external electronic device 203 may be located in the front of the electronic device 101 and then move toward one of leftward, rightward, backward, upward, and diagonal (or oblique) directions of the electronic device 101. Alternatively, the external electronic device 203 may be located behind the electronic device 101 and then move toward leftward, rightward, forward, upward, and diagonal (or oblique) directions of the electronic device 101.

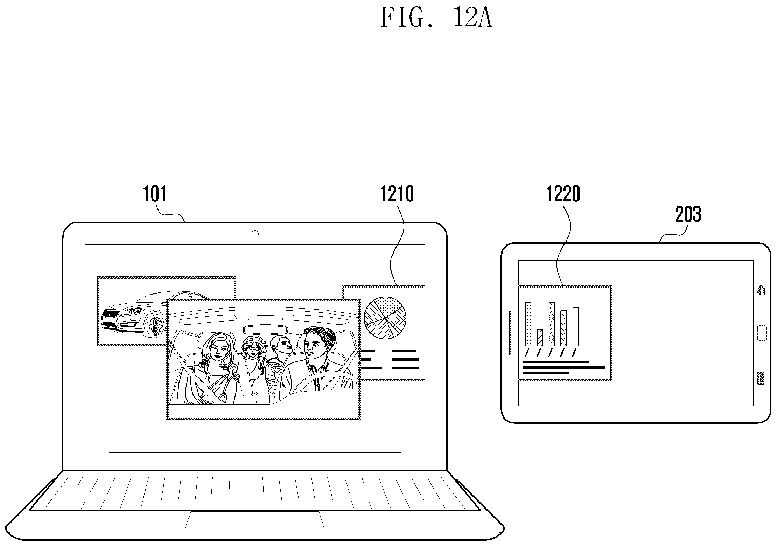

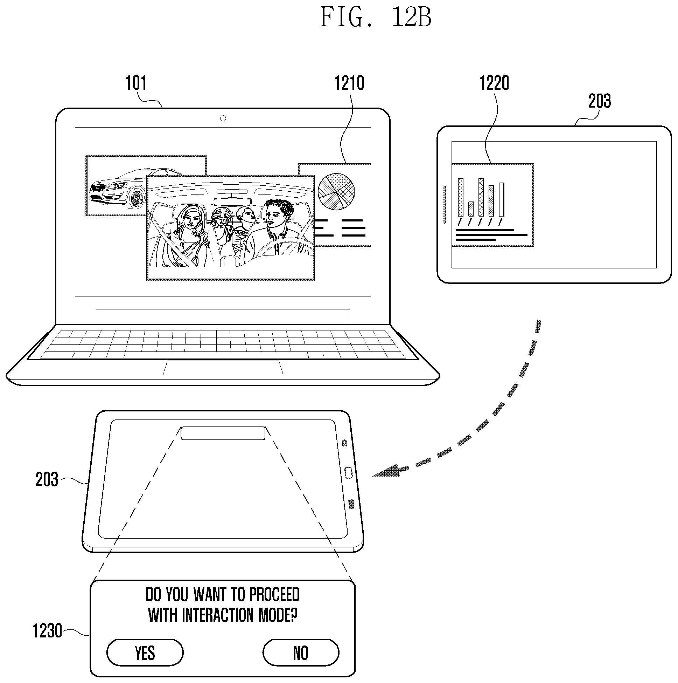

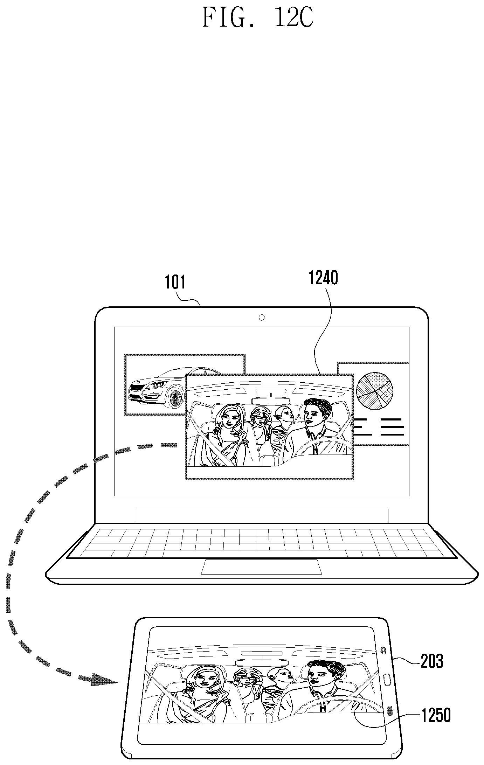

FIGS. 12A, 12B, and 12C illustrate examples of providing an interface based on a change in a locational relation by an electronic device according to various embodiments.

Referring to FIG. 12A, according to an embodiment, FIG. 12A may illustrate an example of executing a dual screen mode based on a first locational relation with an external electronic device 203 by an electronic device 101. For example, the dual screen mode may include displaying through mirroring of an execution screen of the electronic device 101 on the external electronic device 203, or providing each user interface based on the associated same application. The first locational relation may correspond to disposition of the external electronic device 203 on the left side of the electronic device 101. **In** the first locational relation, the electronic device 101 may display at least a part 1210 of the execution screen of the application executed in the electronic device 101, as a first user interface, and may display at least another part 1220 of the execution screen of the application, as a second user interface through the external electronic device 203.

Referring to FIG. 12B, while displaying at least a part 1210 of an execution screen of an application of the electronic device 101, as a first user interface through the external electronic device 203, and displaying at least another part 1220 of the application, as a second user interface, the electronic device 101 may detect whether there is a change in the locational relation with the external electronic device 101.

When the locational relation with the external electronic device 203 is changed, the electronic device 101 may check whether to execute an interaction mode with the user (or inquire of the user about whether to execute an interaction mode), based on a second locational relation with the external electronic device 203. **In** the second locational relation, the external electronic device 203 may be disposed in the front of the electronic device 101. When the locational relation with the external electronic device 203 is changed from the first locational relation to the second locational relation, the electronic device 101 may visually display a notification 1230 for identifying whether to execute an interaction mode according to the second locational relation, and provide the user with the notification.

Referring to FIG. 12C, when identifying the execution of the integration mode, based on an interaction with the user, the electronic device 101 may execute the interaction mode, and in response to the execution of the interaction mode, control the external electronic device 203 to provide the interface by switching the second user interface of the external electronic device 203 into the third user interface according to the interaction mode. The interaction mode may correspond to a mode in which the external electronic device 203 provides a third user interface 1250 in association with the application executed in the electronic device 101.

For example, when a content playing application is executed in the electronic device 101, the electronic device 101 may cause the external electronic device 203 to provide the same screen as that of a content playing application of the electronic device 101, as the third user interface 1250, based on the second locational relation with the external electronic device 203. Alternatively, the electronic device 101 may provide a controller for allowing the external electronic device 203 to control the content playing application of the electronic device 101, as the third user interface 1250, based on the second locational relation with the external electronic device 203.

According to another embodiment, when the application executed in the electronic device 101 is an email application and a content playing application and the locational relation with the external electronic device 203 corresponds to a left side or a right side, the electronic device 101 may provide an email content or a content playing screen as a first interface (e.g., a screen interface and/or a sound interface), and the external electronic device 203 may provide a content playing screen or an email content, which is different from the first interface of the electronic device 101, as a second interface.

According to another embodiment, when the application executed in the electronic device 101 is an email application and a content playing application, and the locational relation with the external electronic device 203 corresponds to a left side or a right side, the electronic device 101 may provide an email content and a content playing screen as the first interface, and the external electronic device 203 may provide an email list or a content list as the second interface.

In the same status above, when the locational relation between the electronic device 101 and the external electronic device 203 is changed and the external electronic device 203 is disposed in front of the electronic device 101, the electronic device may provide an email writing screen and a content playing screen as a third interface, and the external electronic device 203 may provide a keyboard as a fourth interface. According to an embodiment, key information input through the fourth interface of the external electronic device 203 may be reflected in the email writing screen of the electronic device 101 and provided.

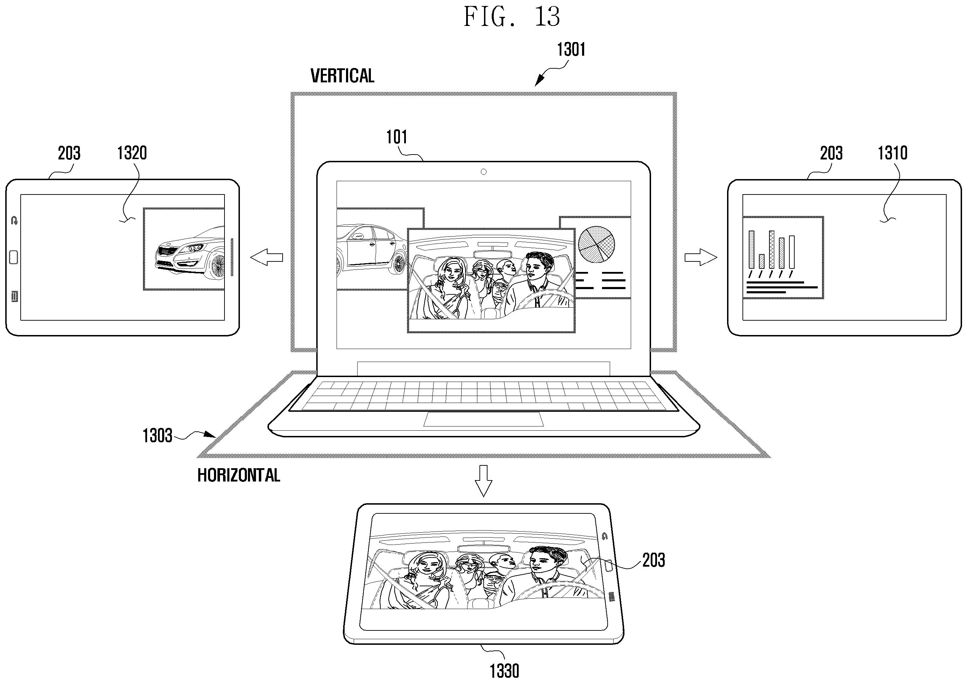

FIG. 13, 14, and 15 illustrate examples of providing an interface based on a change in a locational relation by an electronic device according to various embodiments.

According to an embodiment, in FIG. 13, an electronic device 101 may be a laptop computer, and an external electronic device 203 may be a tablet PC.

Referring to FIG. 13, according to whether the external electronic device 203 is located in a forward, backward, rightward, leftward, upward, or diagonal (or oblique) direction with respect to the electronic device 101 and whether the electronic device 101 is in a vertical orientation 1301 or in a horizontal orientation 1303, the electronic device 101 may operate to cause external electronic devices 203 to provide different interfaces. In an embodiment, the vertical orientation 1301 and the horizontal orientation 1303 may indicate an approximate orientation of the electronic device 101. For example, the vertical orientation 1301 and the horizontal orientation 1303 may be an approximate orientation (or angle) related to a display mode in which the electronic device 101 is displayed in response to a mode close to a portrait or a landscape, the mode being determined based on a middle angle such as about 45 degrees.

For example, when the external electronic device 203 is disposed on the left side with respect to the electronic device 101 and the electronic device 101 is placed in the vertical orientation 1301, the electronic device 101 may operate to cause the external electronic device 203 to provide a first interface 1310. For example, the first interface 1310 may be connected to a user interface displayed on the lefts side of the electronic device 101. According to an embodiment, when the external electronic device 203 is disposed on the left side with respect to the electronic device 101 and the electronic device 101 is placed in the horizontal orientation 1303, the electronic device 101 may operate to cause the external electronic device 203 to provide or not to provide an interface different from the first interface 1310.

In another example, when the external electronic device 203 is disposed on the right side with respect to the electronic device 101 and the electronic device 101 is placed in the vertical direction 1301, the electronic device 101 may operate to cause the external electronic device 203 to provide a second interface 1320. For example, the second interface 1320 may be connected to a user interface displayed on the right side of the electronic device 101. According to an embodiment, when the external electronic device 203 is disposed on the right side with respect to the electronic device 101 and the electronic device 101 is placed in the horizontal orientation 1303, the electronic device 101 may operate to provide or not to provide an interface different from the second interface 1320.

In another example, when the external electronic device 203 is disposed in the front of the electronic device 101 and the electronic device 101 is placed in the horizontal orientation 1303, the electronic device 101 may operate to cause the external electronic device 203 to provide a third interface 1330. For example, the third interface 1330 may be identical to a user interface displayed on the electronic device 101. According to an embodiment, when the external electronic device 203 is disposed in the front with respect to the electronic device 101 and the electronic device 101 is placed in the vertical orientation 1301, the electronic device 101 may operate to cause the external electronic device 203 to provide or not to provide an interface different from the third interface 1330.

According to an embodiment, the electronic device 101 may operate to provide different interfaces based on the status information of the electronic device 101 and/or the external electronic device 203, in addition to the locational relation with the external electronic device 203. For example, the electronic device 101 may determine whether the electronic device 101 is in the vertical orientation 1301 or the horizontal orientation 1303, based on the status information of the electronic device 101, and may operate to cause the external electronic devices 203 to provide different interfaces according to the vertical orientation 1301 or the horizontal orientation 1303 of the electronic device 101.

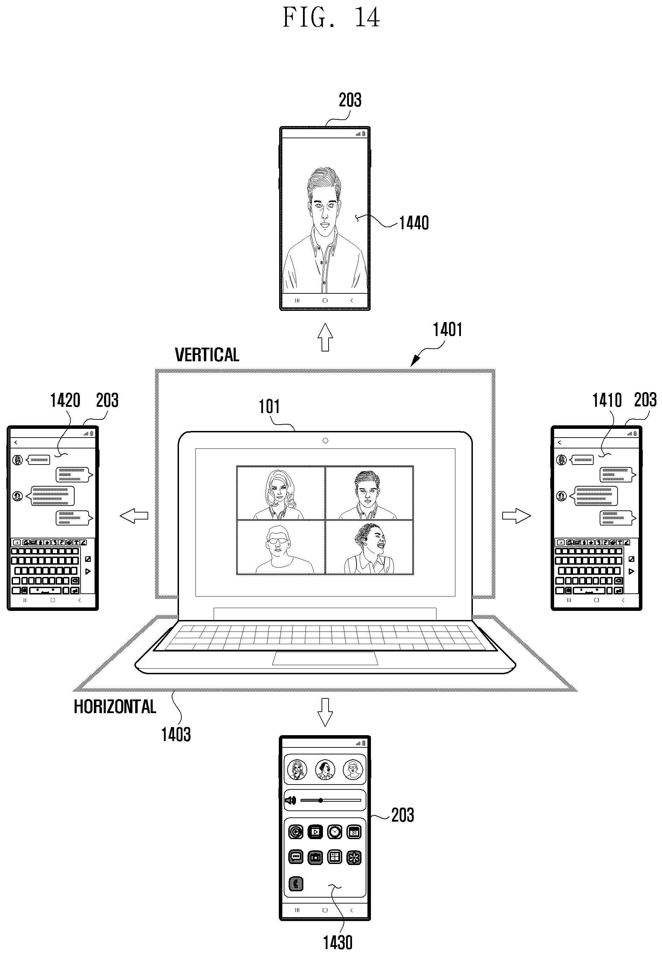

According to an embodiment, in FIG. 14, an electronic device 101 may be a laptop computer, and an external electronic device 203 may be a smartphone.

Referring to FIG. 14, according to whether the external electronic device 203 is located in a forward, backward, leftward, rightward, upward, or a diagonal (or oblique) direction with respect to the electronic device 101 and whether the electronic device 101 is in a vertical orientation 1401 or a horizontal orientation 1403, the electronic device 101 may operate to cause the external electronic device 203 to provide different interfaces. According to an embodiment, the electronic device 101 may determine whether the electronic device 101 is in the vertical orientation 1401 or the horizontal orientation 1403, based on status information of the electronic device 101, and may operate to cause external electronic devices 203 to provide different interfaces or not to provide an interface according to the vertical orientation 1401 or the horizontal orientation 1403 of the electronic device 101.

For example, when the external electronic device 203 is disposed on the left side with respect to the electronic device 101 and the electronic device 101 is placed in the vertical orientation 1401, the electronic device 101 may operate to cause the external electronic device 203 to provide a first interface 1410. For example, the first interface 1410 may be another user interface associated with a user interface displayed on the electronic device 101. According to an embodiment, when the user interface displayed on the electronic device 101 corresponds to a video conference (or a video call), the first interface 1410 provided by the external electronic device 203 may include a chatting window related to the video conference. According to an embodiment, when the external electronic device 203 is disposed on the left side with respect to the electronic device 101 and the electronic device 101 is placed in the horizontal orientation 1403, the electronic device 101 may operate to cause the external electronic device 203 to provide or not to provide an interface that is different from the first interface 1410.

In another example, when the external electronic device 203 is disposed on the right side with respect to the electronic device 101 and the electronic device 101 is placed in the vertical orientation 1401, the electronic device 101 may operate to cause the external electronic device 203 to provide a second interface 1420. For example, the second interface 1420 may be identical to or different from the first interface 1410. According to an embodiment, when the external electronic device 203 is disposed on the right side with respect to the electronic device 101 and the electronic device 101 is placed in the horizontal orientation 1403, the electronic device 101 may operate to cause the external electronic device 203 to provide or not to provide an interface that is different from the second interface 1420.

In another example, when the external electronic device 203 is disposed in the front with respect to the electronic device 101 and the electronic device 101 is placed in the horizontal orientation 1403, the electronic device 101 may operate to cause the external electronic device 203 to provide the third interface 1430. For example, when a user interface displayed on the electronic device 101 corresponds to a video conference (or a video call), the third interface 1430 may include a control window related to the video conference.

In another example, when the external electronic device 203 is disposed at the upper side with respect to the electronic device 101 and the electronic device 101 is placed in the vertical orientation 1401, the electronic device 101 may operate to cause the external electronic device 203 to provide a fourth interface 1440. For example, the fourth interface 1440 may include an image acquired by a rear camera of the electronic device 101 or the external electronic device 203.

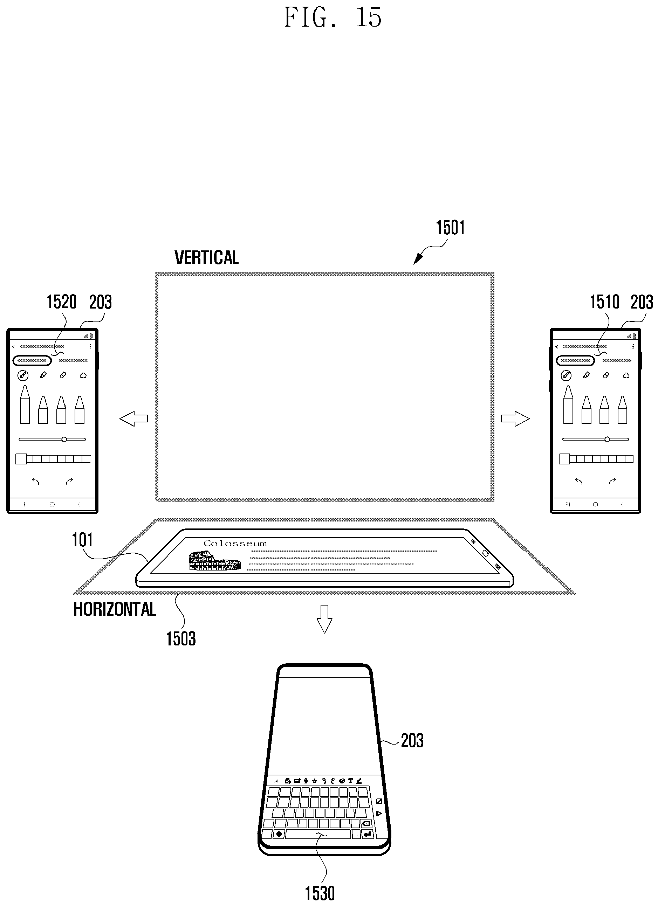

According to an embodiment, in FIG. 15, an electronic device 101 may be a tablet PC and an external electronic device 203 may be a smartphone.

Referring to FIG. 15, according to whether the external electronic device 203 is located in a forward, backward, leftward, rightward, upward, or diagonal (or oblique) direction with respect to the electronic device 101 and whether the electronic device 101 is in a vertical orientation 1501 or a horizontal orientation 1503, the electronic device 101 may operate external electronic devices 203 to provide different interfaces. According to an embodiment, the electronic device 101 may determine whether the electronic device 101 is in the vertical orientation 1501 or the horizontal orientation 1503, based on status information of the electronic device 101, and may operate to cause the external electronic devices 203 to provide different interfaces or not to provide an interface according to the vertical orientation 1501 or the horizontal orientation 1503 of the electronic device 101.

For example, when the external electronic device 203 is disposed on the left side with respect to the electronic device 101 and the electronic device 101 is placed in the horizontal orientation 1503, the electronic device 101 may operate to cause the external electronic device 203 to provide a first interface 1510. For example, the first interface 1510 may be another user interface associated with a user interface displayed on the electronic device 101.

According to an embodiment, when a user interface displayed on the electronic device 101 corresponds to a note application or an editing application, the first interface 1510 provided by the external electronic device 203 may include, as one of control modes (e.g., a palette mode) of an application executed in the electronic device 101, a control object such as a type, a thickness, and a shape of a pen. According to an embodiment, when the external electronic device 203 is disposed on the left side with respect to the electronic device 101 and the electronic device 101 is placed in the vertical orientation 1501, the electronic device may operate to provide or not provide an interface that is different from the first interface 1510.

According to an embodiment, in a case of the tablet PC, when the tablet PC is used while being placed on a table, the electronic device 101 may be placed in the horizontal orientation 1503, or when the tablet PC is held by a user, the electronic device 101 may stand in the vertical orientation 1501. For example, in the case of the tablet PC, a usage environment may vary according to the vertical orientation 1501 or the horizontal orientation 1503, and in response to the usage environment, the interface 1510 for the external electronic device 203 may be differently provided.

In another example, when the external electronic device 203 is disposed on the right side with respect to the electronic device 101 and the electronic device 101 is placed in the horizontal orientation 1503, the electronic device 101 may operate to cause the external electronic device 203 to provide a second interface 1520. For example, the second interface 1520 may be identical to or different from the first interface 1510. According to an embodiment, when the external electronic device 203 is disposed on the right side with respect to the electronic device 101 and the electronic device 101 is placed in the vertical orientation 1530, the electronic device 101 may operate to cause the external electronic device 203 to provide or not to provide an interface that is different from the second interface 1520.

In another example, when the external electronic device 203 is disposed in the front with respect to the electronic device 101 and the electronic device 101 is placed in the horizontal orientation 1503, the electronic device 101 may operate to cause the external electronic device 203 to provide a third interface 1530. For example, the third interface 1530 may include a keyboard for a text input, in association with the application executed in the electronic device 101. According to an embodiment, when the external electronic device 203 is disposed in the front with respect to the electronic device 101 and the electronic device 101 is placed in the vertical orientation 1501, the electronic device 101 may operate to cause the external electronic device 203 to provide or not to provide an interface that is different from the third interface 1530.

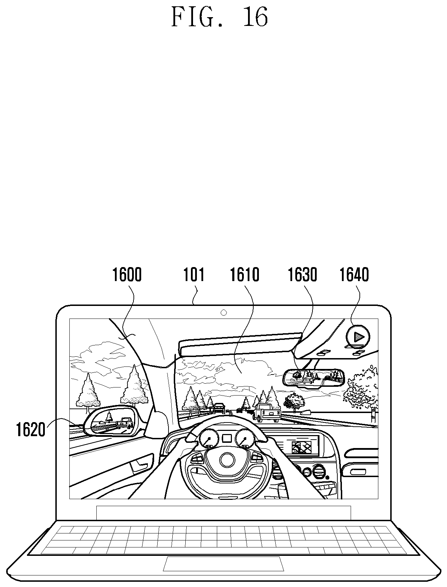

FIGS. 16, 17, 18, and 19 illustrate various examples of providing an interface based on an interaction between an external electronic device and an electronic device according to various embodiments.

According to an embodiment, in FIGS. 16, 17, 18, and 19 may illustrate an example in which while executing an application (e.g., a racing game application) and displaying an execution screen of the application, the electronic device 101 operates through collaboration (or sharing) of a task of an electronic device 101, based on a locational relation between the electronic device 101 and an at least one external electronic device 203.

Referring to FIG. 16, FIG. 16 may indicate the status in which the electronic device 101 operations in a standalone mode. While operating in the standalone mode, the electronic device 101 may provide an interface corresponding to execution of an application (or function) of a user. For example, the electronic device 101 may be in the status of executing a game application (e.g., a racing game application) through a display (e.g., the display module 160 of FIG. 1) and displaying an execution screen 1600 (e.g., a game screen) and/or outputting a sound (e.g., game sound). For example, the electronic device 101 may provide, as a first interface, a screen interface related to the game screen and a sound interface related to the game sound.

In an embodiment, the execution screen 1600 may include a main view 1610 (e.g., a full game screen or a front view 1610 of front glass on the game screen) and sub views 1620 and 1630 (e.g., a first sub view 1620 of a side-view mirror of a car on the game screen and a second sub view 1630 of a room mirror of a car on the game screen). According to an embodiment, the example of FIG. 16 illustrates some elements of the game screen 1600, but the example is merely provided to help understanding of the disclosure, and does not limit the embodiments of the disclosure.

According to an embodiment, while using or before using the electronic device 101, a user may locate the at least one external electronic device 203 in proximity to the electronic device 101. According to an embodiment, when detecting the proximity of the external electronic device 203, the electronic device 101 may provide (e.g., display) an interface 1640 informing of the proximity of the external electronic device 203 in a designated area on the execution screen 1600 (e.g., at the upper-right end of the screen).

For example, the electronic device 101 may provide a user with a guide by displaying a user interface informing of the proximity of the external electronic device 203 through a display (e.g., the display module 160 of FIG. 1). According to an embodiment, when detecting the proximity of the external electronic device 203, the electronic device 101 may perform an operation of establishing a connection with the external electronic device 203, informing the user that a multi-device mode can be executed, executing the multi-device mode, based on a user input, and establishing a connection with the at least external electronic device 203 in proximity. According to an embodiment, the electronic device 101 may inform of the proximity of the external electronic device 203 through vibration or voice.

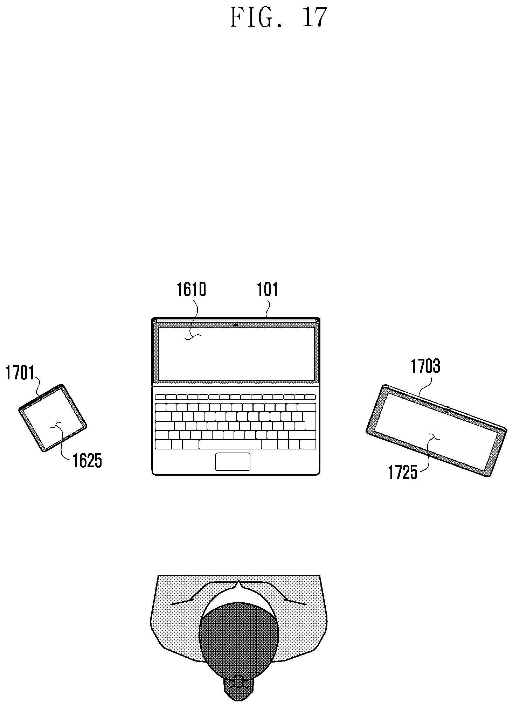

Referring to FIG. 17, FIG. 17 may illustrate an example of a case where multiple external electronic devices 203 (e.g., a first external electronic device 1701 and a second external electronic device 1703) are located in proximity to the electronic device 101. According to an embodiment, the electronic device 101 may detect proximity of the external electronic device 203 (e.g., the first external electronic device 1701 and the second external electronic device 1703) and identify a locational relation with the external electronic device 203. According to an embodiment, the electronic device 101 may operate to configure an interface for the electronic device 101 and an interface for the external electronic device 203, based on the locational relation with the external electronic device 203 and provide an interface corresponding to each of the electronic device 101 and the external electronic device 203. For example, the electronic device 101 may provide an interface for an interaction with the external electronic device 203, based on the locational relation with the external electronic device 203.

According to an embodiment, the first external electronic device 1701 may be located in proximity to a first location with respect to the electronic device 101 (e.g., on the right side with reference to the electronic device 101 or on the left side of the electronic device 101 with reference to the front of the user). According to an embodiment, the second external electronic device 1703 may be located in proximity to a second location with respect to the electronic device 101 (e.g., on the left side with reference to the electronic device 101 or on the right side of the electronic device 101 with reference to the front of the user). For example, the user may locate the first external electronic device 1701 and the second external electronic device 1703 in proximity to the left side and the right side of the electronic device 101 with reference to the electronic device 101.

According to an embodiment, the electronic device 101 may operate to provide a first interface through the electronic device 101, provide a second interface associated with the first interface through the first external electronic device 1701, and provide a third interface associated with the first interface through the second external electronic device 1703.

For example, the electronic device 101 may display a main view 1610 of a game screen through a display (e.g., the display module 160 of FIG. 1) of the electronic device 101, and configure a first interface (e.g., a screen interface and a sound interface) outputting a game sound through an audio module (e.g., the audio module 170 of FIG. 1) (e.g., a speaker) of the electronic device 101. According to an embodiment, the electronic device 101 may configure, as a second interface (e.g., a screen interface based on a first sub view 1620 of a side-view mirror of a car on the game screen in FIG. 16), a screen 1625 corresponding to a part of the game screen (e.g., the first sub view 1620 of the game screen) through a display (e.g., the display module 160 of FIG. 1) of the first external electronic device 1701.

According to an embodiment, the electronic device 101 may configure, as a third interface, an information screen 1725 (e.g., a menu or a list screen related to ranking information and/or game progress information) related to the game through a display (e.g., the display module 160 of FIG. 1) of the second external electronic device 1703. According to an embodiment, the electronic device 101 may also configure, as the third interface for the second external electronic device 1703, a screen 1725 corresponding to another part of the game screen (e.g., a third sub view of the game screen), in the similar manner to that for the first external electronic device 1701.

For example, the electronic device 101 may determine a function corresponding to each of the electronic device 101 and the external electronic device 203, at least based on the locational relation, the operation information, the status information, and/or the information on the number of external electronic devices 203. For example, the electronic device 101 may divide (or segment) a function that is being executed in the electronic device into a first function (e.g., a function for (or allocated to) the electronic device 101) associated with the function that is being executed, a second function (e.g., a function for the first external electronic device 1701) associated with the function that is being executed, and a third function (e.g., a function for the second external electronic device 1703) associated with the function that is being executed.

For example, the electronic device 101 may operate to process a task of the electronic device 101 through collaboration (or sharing) with the first external electronic device 1701 and the second external electronic device 1703 according to a multi-device mode. The electronic device 101 may determine a function to be performed in the first external electronic device 1701 and the second external electronic device 1703 for the collaboration (or sharing) of the task, at least based on the locational relation, the operation information, and/or the status information. For example, the electronic device 101 may divide at least partial configuration (e.g., content) in the first interface of the electronic device 101, based on the number of connected external electronic devices 203, and provide the divided partial configuration through the external electronic device 203 as the corresponding interface (e.g., the screen interface and/or the sound interface).

According to an embodiment, the first external electronic device 1701 may display, as the second interface, the screen 1625 (e.g., a part of a game screen, for example, a screen corresponding to the first sub view 1620) related to the first interface through a display (e.g., the display module 160 of FIG. 1) of the first external electronic device 1701. For example, the first external electronic device 1701 may provide, as the second interface, a content displayed on the side-view mirror of a car on the game screen in FIG. 16, according to the second function divided by the electronic device 101.

According to an embodiment, the second external electronic device 1703 may display, as the third interface, the screen 1725 (e.g., a screen associated with the game screen, for example, a menu or a list screen related to ranking information and/or game progress information) related to the first interface through a display (e.g., the display module 160 of FIG. 1) of the second external electronic device 1703. For example, the second external electronic device 1703 may provide, as the third interface, a content related to the execution of the game in FIG. 16, according to the third function divided by the electronic device 101. According to an embodiment, the second external electronic device 1703 may also provide, as the third interface, the screen 1725 corresponding to another part of the game screen (e.g., a third sub view of the game screen) in the similar manner to the first external electronic device 1701.

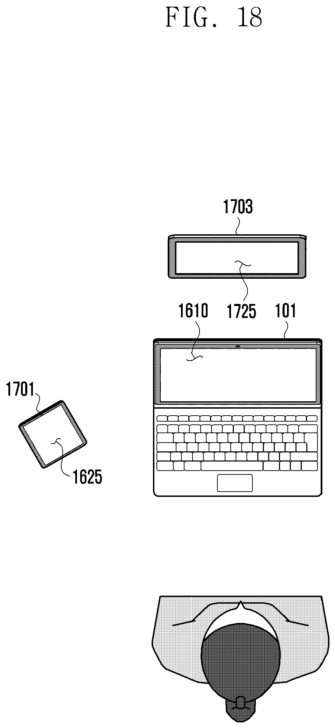

Referring to FIG. 18, FIG. 18 may illustrate an example of a case where the second external electronic device 1703 moves to the upper side of the electronic device 101 and the locational relation between the electronic device 101 and the second external electronic device 1703 is changed. According to an embodiment, the electronic device 101 may detect a change in the locational relation with the external electronic device 203 (e.g., the first external electronic device 1701 and the second external electronic device 1703) in real time.

According to an embodiment, the electronic device 101 may detect the change in the locational relation with the second external electronic device 1703, and in response to the change in the locational relation, configure, as a screen based on a fourth interface (e.g., a second sub view 1630 of a room mirror of a car on the game screen in FIG. 16), a screen 1635 corresponding to a part of the game screen (e.g., the second sub view 1630 of the game screen) through a display (e.g., the display module 160 of FIG. 1) of the second external electronic device 1703. For example, the electronic device 101 divide at least partial configuration (e.g., content) in the first interface of the electronic device 101, and provide the divided partial configuration to the corresponding interface (e.g., the screen interface and/or the sound interface) through the second external electronic device 1703.

For example, the electronic device 101 may divide (or segment) a function that is being executed in the electronic device 101 as a fourth function (e.g., a function for the second external electronic device 1703 according to the change in the locational relation) associated with the function that is being executed. According to an embodiment, the second external electronic device 1703 may display, as the fourth interface, the screen 1635 (e.g., a part of the game screen, for example, a screen corresponding to the second sub view 1630) related to the first interface through a display (e.g., the display module 160 of FIG. 1) of the first external electronic device 1703. For example, the second external electronic device 1703 may provide, as the fourth interface, a content displayed on the room mirror of a car on the game screen in FIG. 16, according to the fourth function divided by the electronic device 101. For example, the second external electronic device 1703 may provide the interface by switching the interface from the third interface into the fourth interface according to the change in the locational relation with the electronic device 101.

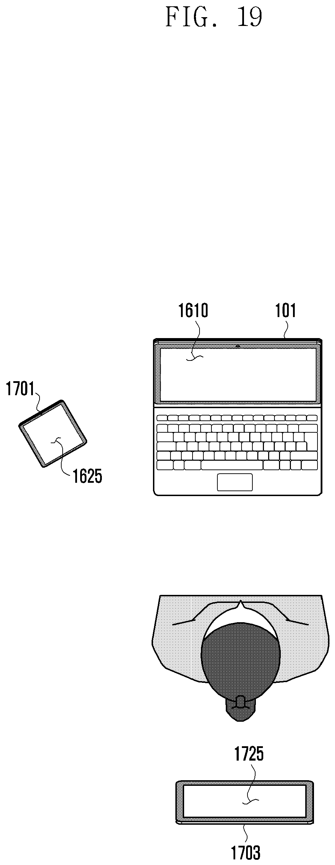

Referring to FIG. 19, FIG. 19 may illustrate an example of a case where the second external electronic device 1703 moves to the front of the electronic device 101 at the location of FIG. 17 or FIG. 18 and the locational relation between the electronic device 101 and the second external electronic device 1703. According to an embodiment, the electronic device 101 may detect a change in the locational relation with the external electronic device 203 (e.g., the first external electronic device 1701 and the second external electronic device 1703) in real time.

According to an embodiment, the electronic device 101 may detect the change in the locational relation with the second external electronic device 1703, and in response to the change in the locational relation, configure, as a fifth interface (e.g., a screen interface based on the second sub view 1630 of a room mirror of a car on the game screen in FIG. 16), at least a part (e.g., a sub sound, for example, a background sound) of a sound related to the game through an audio module (e.g., the audio module 170 of FIG. 1) of the second external electronic device 1703. For example, the electronic device 101 may divide at least partial configuration (e.g., content) in the first interface of the electronic device 101, and provide the divided partial configuration as the corresponding interface (e.g., the screen interface and/or the sound interface) through the second external electronic device 1703.

For example, the electronic device 101 may divide (or segment) a function that is being executed in the electronic device 101, as a fifth function (e.g., another function for the second external electronic device 1703 according to the change in the locational relation) associated with the function that is being executed.

According to an embodiment, the second external electronic device 1703 may provide, as a fifth interface (e.g., a sound interface), a sound related to the first interface through an audio module (e.g., the audio module 170 of FIG. 1) of the first external electronic device 1703. For example, the second external electronic device 1703 may provide, as the fifth interface (e.g., the sound interface), at least partial sound content played in relation to the game that is being executed, according to the fifth function divided by the electronic device 101. For example, the second external electronic device 1703 may provide the interface by switching the interface from the third interface (e.g., the screen interface) or the fourth interface (e.g., the screen interface) into the fifth interface (e.g., the sound interface) according to the change in the locational relation with the electronic device 101. For example, the second external electronic device 1703 may operate as an auxiliary speaker for a sound output related to the first interface of the electronic device 101.

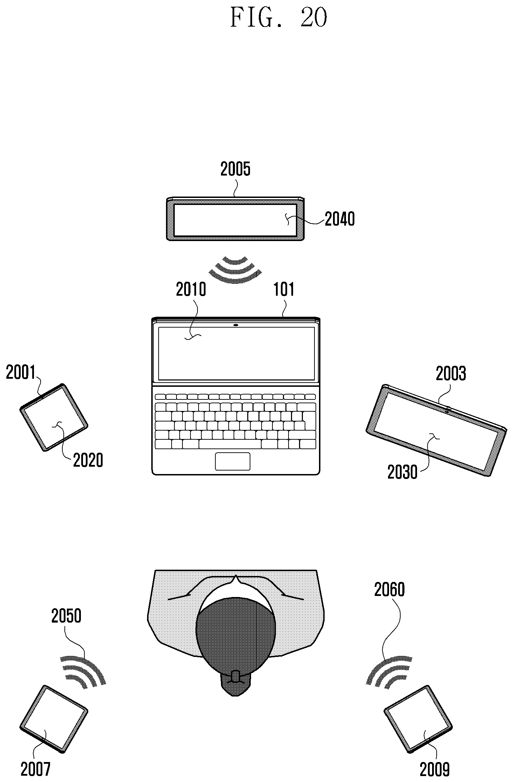

FIG. 20 illustrates an example of providing an interface based on an interaction between an electronic device and multiple external electronic devices according to various embodiments.

According to an embodiment, FIG. 20 may illustrate an example in which multiple external electronic devices 203 (e.g., a first external electronic device 2001, a second external electronic device 2003, a third external electronic device 2005, a fourth external electronic device 2007, and a fifth external electronic device 2009) are located in proximity to the electronic device 101, and different interfaces (e.g., screen interfaces and/or sound interfaces) are provided for the electronic device 101 and the multiple external electronic devices 203, respectively.

Referring to FIG. 20, the electronic device 101 may detect the proximity of the multiple external electronic devices 203 (e.g., the first external electronic device 2001, the second external electronic device 2003, the third external electronic device 2005, the fourth external electronic device 2007, and the fifth external electronic device 2009), based on the multi-device mode, and identify the locational relation with each external electronic device 203. In an embodiment, the electronic device 101 may individually (or independently) configure an interface for the electronic device 101 and an interface for the external electronic device 203, based on the locational relation with the external electronic device 203, and operate to provide an interface corresponding to each of the electronic device 101 and the external electronic device 203. For example, the electronic device 101 may provide multiple different interfaces for an interaction with the external electronic device 203, based on the locational relation with the external electronic device 203.

According to an embodiment, FIG. 20 may illustrate the state in which the first external electronic device 2001 is located in proximity to a first location with respect to the electronic device 101 (e.g., on the right side with reference to the electronic device 101 or on the left side with reference to the electronic device 101 with reference to the front of the user). According to an embodiment, FIG. 20 may illustrate the state in which the second external electronic device 2003 is located in proximity to a second location with respect to the electronic device 101 (e.g., on the left side with reference to the electronic device 101 or on the right side of the electronic device 101 with reference to the front of the user). According to an embodiment, FIG. 20 may illustrate the state in which the third external electronic device 2005 is located in proximity to a third location with respect to the electronic device 101 (e.g., at the upper side with reference to the electronic device 101). According to an embodiment, FIG. 20 may indicate the status in which the fourth external electronic device 2007 is located in proximity to a fourth location (e.g., a right frontal side (or a right diagonal direction) with reference to the electronic device 101) with respect to the electronic device 101. According to an embodiment, FIG. 20 may illustrate the state in which the fifth external electronic device 2009 is located in proximity to a fifth location (e.g., a left frontal side (or a left diagonal direction) with reference to the electronic device 101 or the right side behind the user).

For example, the user may arrange multiple external electronic devices 203 in a space surrounding the user. For example, the user may locate the first external electronic device 2001 and the second external electronic device 2003 in proximity to the left side and the right side of the electronic device 101, and locate the third external electronic device 2005 at the upper side of the electronic device 101, with reference to the electronic device 101 in the front of the user, which is used by the user. In addition, the user may locate the fourth external electronic device 2007 and the fifth external electronic device 2009 in proximity to the left side and the right side behind the user.

According to an embodiment, the electronic device 101 may provide a first interface 2010 (e.g., a screen interface and/or a sound interface) corresponding to execution of an application (or a function) of the user. For example, the electronic device 101 may display an execution screen of an application that is being executed, through a display (e.g., the display module 160 of FIG. 1) of the electronic device 101, and provide the first interface 2010 (e.g., the screen interface and the sound interface) outputting a sound played by the application, through an audio module (e.g., the audio module 170 of FIG. 1) (e.g., a speaker) of the electronic device 101.

According to an embodiment, the electronic device 101 may operate to provide a second interface 2020 (e.g., a screen interface) associated with the first interface 2010 through the first external electronic device 2001, provide a third interface 2030 (e.g., a screen interface) associated with the first interface 2010 through the second external electronic device 2003, and provide a fourth interface 2040 (e.g., a screen interface and/or a sound interface) through the third external electronic device 2005. According to an embodiment, the electronic device 101 may operate to provide a fifth interface 2050 (e.g., a sound interface) through the fourth external electronic device 2007, and provide a sixth interface 2060 (e.g., a sound interface) through the fifth external electronic device 2009.

For example, the electronic device 101 may provide, as the first interface 2010, a main screen and sound of an application through a display of the electronic device 101.

The first external electronic device 2001 may provide, as the second interface 2020, a first sub screen different from the main screen. For example, the first external electronic device 2001 may provide the second interface 2020 (e.g., the screen interface) displaying the first sub screen through the display of the first external electronic device 2001. For example, the first external electronic device 2001 may operate an auxiliary display for the electronic device 101.

The second external electronic device 2003 may provide, as the third interface 2030, a second sub screen that is different from the main screen. For example, the second external electronic device 2003 may provide the third interface 2030 (e.g., the screen interface) of displaying the second sub screen through the display of the second external electronic device 2003. For example, the second external electronic device 2003 may operate as an auxiliary display for the electronic device 101.

The third external electronic device 2005 may provide, as the fourth interface 2040, a part of the sound and the third sub screen that is different from the main screen. For example, the third external electronic device 2005 may display the third sub screen through the display of the third external electronic device 2005, and provide the fourth interface 2040 (e.g., the screen interface and the sound interface) outputting at least a part of the sound played by the application that is being executed in the electronic device 101, through an audio module (e.g., a speaker) of the third external electronic device 2005. For example, the third external electronic device 2005 may operate as an auxiliary display and an auxiliary speaker for the electronic device 101.

The fourth external electronic device 2007 may provide another part of the sound as the fifth interface 2050. For example, the fourth external electronic device 2007 may provide the fifth interface 2050 (e.g., the sound interface) outputting at least a part of the sound played by the application that is being executed by the electronic device 101, through an audio module (e.g., a speaker) of the fourth external electronic device 2007. For example, the fourth external electronic device 2007 may operate as an auxiliary speaker for the electronic device 101.

The fifth external electronic device 2009 may provide another part of the sound as the sixth interface 2060. For example, the fifth external electronic device 2009 may provide the sixth interface 2060 (e.g., the sound interface) outputting at least a part of the sound played by the application that is being executed in the electronic device 101, through an audio module (e.g., a speaker) of the fifth external electronic device 2009. For example, the fifth external electronic device 2009 may operate as an auxiliary speaker for the electronic device 101.

According to an embodiment, the electronic device 101 may determine a function corresponding to each of the electronic device 101 and the external electronic device 203, at least based on the locational relation with the external electronic device 203, the operation information, the status information, and/or information on the number of external electronic devices 203.

For example, the electronic device 101 may divide (or segment) a function (or an application) that is being executed in the electronic device 101 into a first function (e.g., a function for (or allocated to) the electronic device 101) associated with the function that is being executed, a second function (e.g., a function for the first external electronic device 2001) associated with the function that is being executed, a third function (e.g., a function for the second external electronic device 2003) associated with the function that is being executed, a fourth function (e.g., a function for the third external electronic device 2005) associated with the function that is being executed, a fifth function (e.g., a function for the fourth external electronic device 2007) associated with the function that is being executed, and a sixth function (e.g., a function for the fifth external electronic device 2009) associated with the function that is being executed.

For example, the electronic device 101 may operate to process a task of the electronic device 101 through collaboration (or sharing) with the external electronic device 2001, the second external electronic device 2003, the third external electronic device 2005, the fourth external electronic device 2007, and the fifth external electronic device 2009 according to a multi-device mode. The electronic device 101 may determine a function performed by each of the first external electronic device 2001, the second external electronic device 2003, the third external electronic device 2005, the fourth external electronic device 2007, and the fifth external electronic device 2009 for collaboration (or sharing) of the task, at least based on the locational relation, the operation information, and/or the status information.

For example, the electronic device 101 may divide at least partial configuration (e.g., a screen content and/or a sound content) and/or associated configuration (e.g., a sub screen content, a sub sound content, and/or a control content) in the first interface 2010 of the electronic device 101, based on the number of external electronic devices 203, and provide the divided configuration as the corresponding interface (e.g., the screen interface and/or the sound interface) through the external electronic device 203.

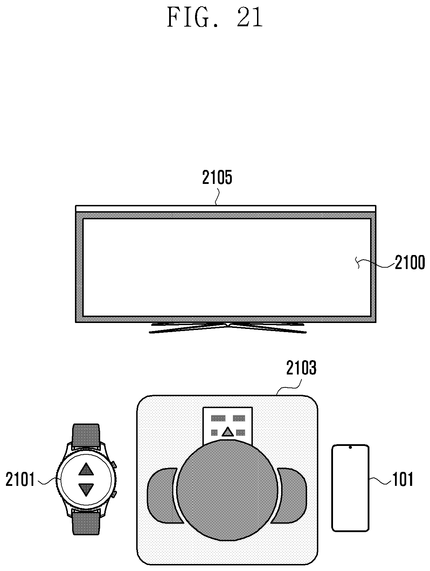

FIG. 21 illustrates an example of providing an interface, based on an interface with an electronic device and multiple external electronic devices according to various embodiments.

Referring to FIG. 21, an electronic device 101 and external electronic devices 203 (e.g., a first external electronic device 2101 and a second external electronic device 2103) may be in proximity to one another. In an embodiment, the electronic device 101 may be a smartphone, the first external electronic device 2101 may be a wearable device (e.g., a watch), and the second external electronic device 2103 may be a smart scale (e.g., InBody scale). This example is merely provided to help understanding of the disclosure, and the embodiments of the disclosure are not limited by the description. For example, FIG. 21 provides an example in which an entity performing an operation of executing a multi-device mode is the electronic device 101, but an entity performing an operation of executing the multi-device mode may be the second external electronic device 2103 and the second external electronic device 2103 may also operate an operation corresponding to the operation of the electronic device 101.

**In** an embodiment, FIG. 21 may illustrate the status in which a user holds the electronic device 101 on the right hand, wears the first external electronic device 2101 (e.g., a wearable device) on the left wrist, and stands on a foothold of the second external electronic device 2103 (e.g., a smart scale). For example, the user may perform InBody measurement through an interaction with the electronic device 101 and the external electronic device 203. For example, the user may be in the status of performing InBody measurement, such as measurement of the user's weight, muscle mass, and/or basal metabolic rate, by using the electronic device 101 and the first external electronic device 2101 while standing on the foothold of the second external electronic device 2103.

When the first external electronic device 2101 and the second external electronic device 2103 are in proximity, the electronic device 101 may establish a connection with each of the first external electronic device 2101 and the second external electronic device 2103. The electronic device 101 may establish the connection with the external electronic device 203 via designated communication. The electronic device 101 may identify a locational relation with the external electronic device 203 via the designated communication, and share operation information and/or status information.

The electronic device 101 may execute an application (e.g., Health application or InBody measurement application) and provide an execution screen thereof as an interface (e.g., a screen interface).

The electronic device 101 may identify the operation information and/or status information of the electronic device 101 and the external electronic device 203. Based on a result of the identification, the electronic device 101 may identify a function (or a task) which can be executed by the external electronic device 203, in association with the application that is being executed by the electronic device 101, and control the external electronic device 203 provide the corresponding interface (e.g., perform the function), based on a result of the identification.

For example, while displaying an execution screen of a Health application, the electronic device 101 may determine execution of a multi-device mode, based on the proximity of the first external electronic device 2101 and the second external electronic device 2103, and operate to process a task of the electronic device 101 through collaboration (or sharing) with the external electronic device 203 according to the multi-device mode. For the collaboration (or sharing) of the task, the electronic device 101 may determine a function to be performed by each of the electronic device 101 and the external electronic device 203, at least based on the locational relation, the operation information, and/or the status information, and may allocate (or divide) at least on function (or task) to be executed by the electronic device 101 and the external electronic device 203.

According to an embodiment, the electronic device 101 may allocate an electrode hand bar function (e.g., a hand electrode measurement function) to the electronic device 101 and the first external electronic device 2101, and allocate an electrode foothold function (e.g., a foot electrode measurement function) for InBody measurement to the second external electronic device 2103. According to an embodiment, while allocation the function, the electronic device 101 may operate to activate a corresponding element (or a module) (e.g., a sensor module) for execution of the allocated function by the electronic device 101 and the external electronic device 203. For example, each of the electronic device 101 and the external electronic device 203 may activate a function (or an application) and/or a hardware element (or a module) (e.g., a sensor module) related to acquisition of biometric information, and acquire biometric information through the function and/or the hardware element.

According to an embodiment, the electronic device 101 may collect data from the electronic device 101, the first external electronic device 2101, and the second external electronic device 2103, and provide an interface corresponding to a result of InBody measurement, based on the collected data. According to an embodiment, as shown in the example in FIG. 21, a third external electronic device 2105 (e.g., a display device such as a TV) may be added, and the electronic device 101 may operate to cause the third external electronic device 2105 to display the interface corresponding to the result of InBody measurement.

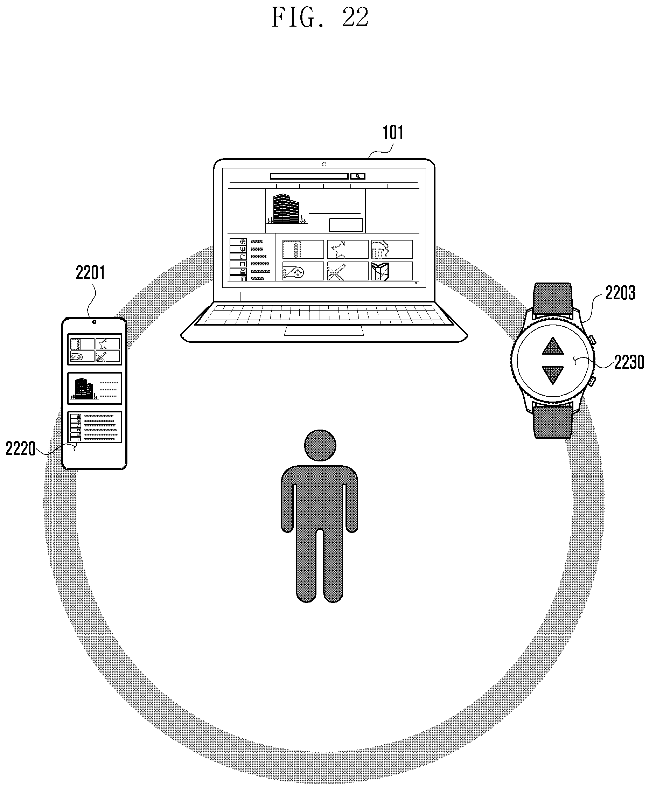

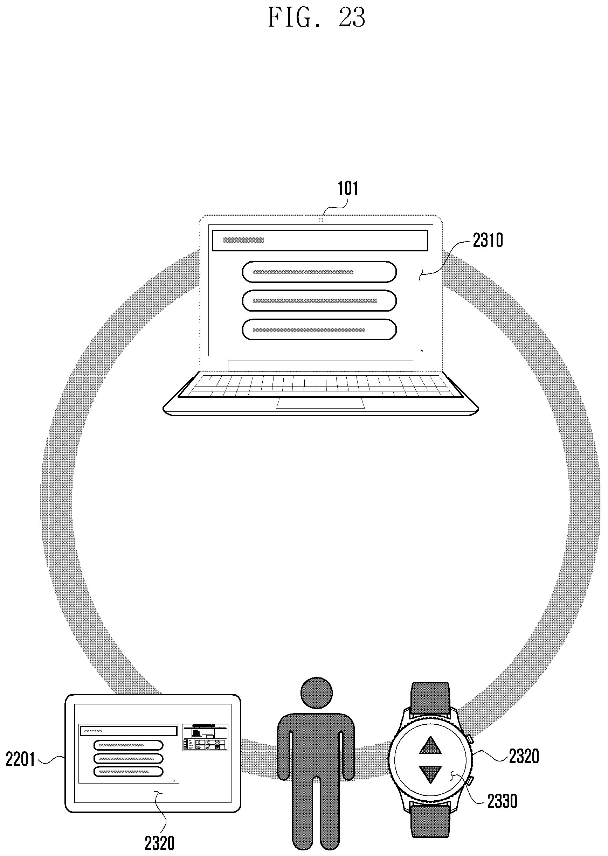

FIGS. 22 and 23 illustrate examples of providing an interface, based on a change in a locational relation between an external electronic device and an electronic device according to various embodiments.

Referring to FIG. 22, when proximity of an external electronic device 203 (e.g., a first external electronic device 2201 or a second external electronic device 2203) is detected, the electronic device 101 may establish a connection with each external electronic device 203 via designated communication. The electronic device 101 may identify a locational relation with the external electronic device 203 via the designated communication, operation information, and/or status information. According to an embodiment, the electronic device 101 may configure an interface for the electronic device 101 and an interface for the external electronic device 203, based on the locational relation with the external electronic device 203, the operation information, and/or the status information, and operate to provide the corresponding interface through each of the electronic device 101 and the external electronic device 203.

According to an embodiment, the first external electronic device 2201 may be located in proximity to a first location with respect to the electronic device 101 (e.g., on the right side with reference to the electronic device 101 or on the left side of the electronic device 101 with reference to the front of the user). According to an embodiment, the second external electronic device 2203 may be located in proximity to a second location with respect to the electronic device 101 (e.g., on the left side with reference to the electronic device 101 or on the right side of the electronic device 101 with reference to the front of the user). For example, the user may locate the first external electronic device 2201 and the second external electronic device 2203 in proximity to the left side and the right side of the electronic device 101 with reference to the electronic device 101.

The electronic device 101 may provide (or display) an execution screen of a designated application, as a first interface 2210. While the electronic device 101 provides the first interface 2210, the first external electronic device 2201 located on the left side of the electronic device 101 may provide a second interface 2220, and the second external electronic device 2203 located on the right side of the electronic device 101 may provide a third interface 2230. The first interface 2210, the second interface 2220, and the third interface 2230 may be different user interfaces related to the application of the electronic device 101.

For example, the electronic device 101 may provide, as the first interface 2210, an execution screen of an application (e.g., Word application) through a display of the electronic device 101. The first external electronic device 2201 may provide, as the second interface 2220, a slide preview or a tool bar of the application through a display of the first external electronic device 2201. The second external electronic device 2203 may provide, as the third interface 2230, a tool bar (or a controller) for control (e.g., screen control) of the application through a display of the second external electronic device 2203.

Referring to FIG. 23, while the electronic device 101 provides the first interface 2210, the first external electronic device 2201 provides the second interface 2202, and the second external electronic device 2203 provides the third interface 2230, the first external electronic device 2201 and the second external electronic device 2203 may move to the front of the electronic device 101, and may be located on the left and right sides of the user, respectively. For example, a locational relation between the electronic device 101 and the first external electronic device 2201 and a locational relation between the electronic device 101 and the second external electronic device 2203 may be changed. According to an embodiment, the electronic device may detect a change in the locational relation with the external electronic device 203 (e.g., the first external electronic device 2201 or the second external electronic device 2203) in real time.

According to an embodiment, the electronic device 101 may detect the change in the location relation with each of the first external electronic device 2201 and the second external electronic device 2203, and in response to each change in the locational relation, may operate to change (or reconfigure) interfaces 2210, 2220, and 2230 of the first external electronic device 2201 and the second external electronic device 2203.

For example, the electronic device 101 may provide the interface by changing the interface of the electronic device 101 and/or the external electronic device, based on the change in the locational relation. According to an embodiment, the electronic device 101 may change the first interface 2210 (e.g., an execution screen of an application) to the fourth interface 2310 (e.g., a presentation screen or a slideshow) and provide the same. According to an embodiment, the electronic device 101 may change the second interface 2220 (e.g., a slide preview) of the first external electronic device 2201 to a fifth interface 2320 (e.g., a user control screen) and provide the same, and may change the third interface 2230 (e.g., a tool bar for screen control) of the second external electronic device 2203 to a sixth interface 2330 (e.g., a pointer and a screen switch tool bar) and provide the same.

According to an embodiment, the first interface 2210 to the sixth interface 2330 may be different interfaces of the same application. For example, when the locational relation with the external electronic device 203 is changed, the electronic device 101 may perform control to change the interface of the external electronic device 203, based on the changed locational relation.

According to various embodiments, the electronic device 101 may provide different interfaces for a function (or an application) that is being executed in the electronic device 101, based on the locational relation with the external electronic device 203, and in response the change in the locational relation with the external electronic device 203, may automatically change the interface to another interface optimized for the corresponding usage environment, and provide the same.

An operation method of an electronic device 101 according to an embodiment of the disclosure may include detecting proximity of at least one external electronic device (e.g., the second electronic device 203 of FIG. 2) through a communication module (e.g., the communication module 190 of FIG. 1), identifying a locational relation with the external electronic device, based on the detection of the proximity of the external electronic device, sharing operation information and/or status information with the external electronic device, and providing an interface for each of the electronic device and the external electronic device, based on at least one of the locational relation, the operation information, the status information, and/or information on a number of external electronic devices.

According to an embodiment, the detecting of the proximity of the external electronic device may include providing an interface informing of the proximity of the external electronic device, based on the detection of the proximity of the external electronic device.

According to an embodiment, the providing of the interface may include controlling the external electronic device to provide another interface, based on the locational relation between the electronic device and the external electronic device.

According to an embodiment, the providing of the interface may include controlling the external electronic device to provide a first interface when the external electronic device is at a first location with respect to the electronic device, and controlling the external electronic device to provide a second interface that is different from the first interface when the external electronic device is at a second location with respect to the electronic device, the second location being different from the first location. According to an embodiment, the first interface and the second interface may be different from each other, and each of the first interface and the second interface may include a screen interface and/or a sound interface.

According to an embodiment, the providing of the interface may include detecting a change in the locational relation between the electronic device and the external electronic device, and performing control, based on the change in the locational relation, to change an interface of the external electronic device to an interface corresponding to the changed locational relation, and provide the changed interface.

According to an embodiment, the detecting of the proximity of the external electronic device may include detecting execution of a multi-device mode, searching for one or more external electronic devices that are in proximity to the electronic device within a designated distance threshold or less, via designated communication, based on the execution of the multi-device mode. According to an embodiment, the electronic device and the external electronic device may indicate user account-based devices which are grouped by a user account.

According to an embodiment, the identifying of the locational relation may include collecting data related to the electronic device and the external electronic device, and extracting and analyzing status information, operation information, and/or a relative location of the external electronic device, from the collected data. According to an embodiment, the data may include location data for determination of the locational relation with the external electronic device, and operation data for interface configuration.

According to an embodiment, the identifying of the locational relation may include mapping the relative location of the external electronic device to a designated matrix for locational relation identification, based on a result of the analysis, and identifying the locational relation with the external electronic device, based on analysis of the matrix.

According to an embodiment, the providing of the interface may include determining, based on at least one of the locational relation, the operational information, the status information, and/or the information on the number of external electronic devices, a first function for the electronic device and a second function for the external electronic device, the functions being associated with a function that is being executed by the electronic device, configuring a first interface and a first control command which correspond to the first function related to the electronic device, and a second interface and a second control command which correspond to the second function related to the external electronic device, controlling the electronic device to execute the first function and provide the first interface corresponding to the first function, based on the first control command, and controlling the external electronic device to execute the second function and provide the second interface corresponding to the second function, based on transmission of the second control command to the external electronic device.

Various embodiments of the disclosure described and shown in the specification and the drawings have presented specific examples in order to easily explain the technical contents and help understanding of the disclosure, and are not intended to limit the scope of the disclosure.

## Claims

1. An electronic device (101) comprising:
a communication module (190) including a short-range wireless communication module;
a display (160);
a processor (120); and
memory (130) storing instructions that, when executed by the processor (120), cause the electronic device (101) to:
detect whether at least one external electronic device (203) is in proximity to the electronic device (101) through the short-range wireless communication module,
identify a distance between the electronic device (101) and the at least one external electronic device (203) through the short-range wireless communication module, **characterized in that**
when the identified distance is equal to or less than a designated distance threshold, establish a connection with the at least one external electronic device (203) through designated wireless communication,
based on the connection with the at least one external electronic device (203), obtain location data related to the at least one external electronic device (203), operation data related to the at least one external electronic device (203) and information on a number of the at least one external electronic device (203), wherein the operation data comprises operation information and status information,
identify a relative position of the at least one external electronic device (203) with respect to the electronic device (101) based on the location data,
determine a first interface for the electronic device (101) and a second interface, different from the first interface, for each of the at least one external electronic device (203), based on the relative position of the at least one external electronic device (203), the operation information, the status information, and the information on the number of the at least one external electronic device (203), and
display the first interface on the display and transmit control information to the at least one external electronic device to display the second interface on each of the at least one external electronic device.

2. The electronic device (101) of claim 1, wherein the instructions, when executed by the processor, cause the electronic device to provide an interface, the interface indicating the proximity of the at least one external electronic device, when detecting the at least one external electronic device is in proximity to the electronic device.

3. The electronic device (101) of claim 1, wherein the instructions, when executed by the processor, cause the electronic device to:
identify a status of the electronic device when the at least one external electronic device is detected to be in proximity to the electronic device, and
establish a wireless connection with the at least one external electronic device, when the status of the electronic device is a designated status.

4. The electronic device (101) of claim 1, wherein the instructions, when executed by the processor, cause the electronic device to transmit information for another interface to the at least one external electronic device, based on the relative position of the at least one external electronic device with respect to the electronic device.

5. The electronic device (101) of claim 4, wherein the instructions, when executed by the processor, cause the electronic device to:
transmit information for the first interface when the at least one external electronic device is at a first location with respect to the electronic device, and
transmit information for the second interface that is different from the first interface when the at least one external electronic device is at a second location with respect to the electronic device, the second location being different from the first location,
wherein the first interface and the second interface are different from each other, and each of the first interface and the second interface comprises at least one of a screen interface and a sound interface.

6. The electronic device (101) of claim 1, wherein the instructions, when executed by the processor, cause the electronic device to:
detect a change in the relative position of the at least one external electronic device with respect to the electronic device, and
change, based on the change in the relative position of the at least one external electronic device with respect to the electronic device, the second interface for the at least one external electronic device to another interface corresponding to the changed relative position of the at least one external electronic device, and provide the another interface to the at least one external electronic device.

7. The electronic device (101) of claim 1, wherein the instructions, when executed by the processor, cause the electronic device to:
detect a multi-device mode, and
search for the at least one external electronic device that are in proximity to the electronic device within a designated distance threshold, and
wherein the electronic device and the at least one external electronic device are associated with a user account.

8. The electronic device (101) of claim 1, wherein the instructions, when executed by the processor, cause the electronic device to:
map a relative location of the at least one external electronic device to a designated matrix, and
identify the relative position of the at least one external electronic device with respect to the electronic device, based on analysis of the matrix.

9. The electronic device (101) of claim 8, wherein the instructions, when executed by the processor, cause the electronic device to:
display the matrix on the display, wherein the displayed matrix informs a user of the relative location of the at least one external electronic device, and
move at least one external electronic device on the matrix displayed on the display to correct the relative position of the at least one external electronic device with respect to the electronic device in response to a user input.

10. The electronic device (101) of claim 1, wherein the instructions, when executed by the processor, cause the electronic device to:
determine, based on at least one of the relative position of the at least one external electronic device, the operation information, the status information, and the information on the number of the at least one external electronic device, a first function for the electronic device and a second function for the at least one external electronic device, the first function and the second function being associated with a function that is being executed by the electronic device,
configure the first interface and a first control command which correspond to the first function related to the electronic device, and the second interface and a second control command which correspond to the second function related to the at least one external electronic device,
execute the first function and provide the first interface corresponding to the first function, based on the first control command, and
transmit the second control command causing the at least one external electronic device to execute the second function and provide the second interface corresponding to the second function.

11. An operation method of an electronic device (101), the method comprising:
detecting whether at least one external electronic device (203) is in proximity to the electronic device (101) through a short-range wireless communication module;
**characterized by**
identifying a distance between the electronic device (101) and the at least one external electronic device (203) through the short-range wireless communication module;
when the identified distance is equal to or less than a designated distance threshold, establishing a connection with the at least one external electronic device (203) through designated wireless communication;
based on the connection with the at least one external electronic device (203), obtaining location data related to the at least one external electronic device (203), operation data related to the at least one external electronic device (203) and information on a number of the at least one external electronic device (203), wherein the operation data comprises operation information and status information;
identifying a relative position of the at least one external electronic device (203) with respect to the electronic device (101) based on the location data,;
determining a first interface for the electronic device (101) and a second interface, different from the first interface, for each of the at least one external electronic device (203), based on the relative position of the at least one external electronic device (203), the operation information, the status information, and the information on the number of the at least one external electronic device (203), and
displaying the first interface on the display and transmitting control information to the at least one external electronic device to display the second interface on each of the at least one external electronic device.

12. The method of claim 11, wherein the detecting of the at least one external electronic device comprises providing an interface, the interface indicating the proximity of the at least one external electronic device, when detecting the at least one external electronic device is in proximity to the electronic device.

13. The method of claim 11, wherein displaying of the first interface comprises transmitting information for another interface to the at least one external electronic device, based on the relative position of the at least one external electronic device with respect to the electronic device.

14. The method of claim 11, wherein displaying of the first interface comprises:
detecting a change in the relative position of the at least one external electronic device with respect to the electronic device, and
changing, based on the change in the relative position of the at least one external electronic device with respect to the electronic device, the second interface for the at least one external electronic device to another interface corresponding to the changed relative position of the at least one external electronic device, and provide the another interface to the at least one external electronic device.

15. The method of claim 11, wherein detecting of the at least one external electronic device comprises:
detecting execution of a multi-device mode, and
searching for the at least one external electronic device that are in proximity to the electronic device within a designated distance threshold, and
wherein the electronic device and the at least one external electronic device are associated with a user account.

## Patentansprüche

1. Elektronische Vorrichtung (101), umfassend:
ein Kommunikationsmodul (190), das ein drahtloses Nahbereichs-Kommunikationsmodul beinhaltet;
eine Anzeige (160);
einen Prozessor (120); und
Speicher (130), der Anweisungen speichert, die bei Ausführung durch den Prozessor (120) die elektronische Vorrichtung (101) zu Folgendem veranlassen:
Erkennen, ob sich mindestens eine externe elektronische Vorrichtung (203) in der Nähe der elektronischen Vorrichtung (101) befindet, durch das drahtlose Nahbereichs-Kommunikationsmodul,
Identifizieren eines Abstands zwischen der elektronischen Vorrichtung (101) und der mindestens einen externen elektronischen Vorrichtung (203) durch das drahtlose Nahbereichs-Kommunikationsmodul, **dadurch gekennzeichnet, dass**, wenn der identifizierte Abstand gleich einem festgelegten Abstandsschwellenwert oder kleiner als ein festgelegter Abstandsschwellenwert ist, eine Verbindung mit der mindestens einen externen elektronischen Vorrichtung (203) durch festgelegte drahtlose Kommunikation hergestellt wird,
basierend auf der Verbindung mit der mindestens einen externen elektronischen Vorrichtung (203) Standortdaten im Zusammenhang mit der mindestens einen externen elektronischen Vorrichtung (203), Betriebsdaten im Zusammenhang mit der mindestens einen externen elektronischen Vorrichtung (203) und Informationen über eine Nummer der mindestens einen externen elektronischen Vorrichtung (203) erhalten werden, wobei die Betriebsdaten Betriebsinformationen und Statusinformationen umfassen,
eine relative Position der mindestens einen externen elektronischen Vorrichtung (203) in Bezug auf die elektronische Vorrichtung (101) basierend auf den Standortdaten identifiziert wird,
eine erste Schnittstelle für die elektronische Vorrichtung (101) und eine zweite Schnittstelle, die sich von der ersten Schnittstelle unterscheidet, für jede der mindestens einen externen elektronischen Vorrichtung (203) basierend auf der relativen Position der mindestens einen externen elektronischen Vorrichtung (203), den Betriebsinformationen, den Statusinformationen und den Informationen über die Nummer der mindestens einen externen elektronischen Vorrichtung (203) bestimmt werden und die erste Schnittstelle auf der Anzeige angezeigt wird und Steuerungsinformationen an die mindestens eine externe elektronische Vorrichtung übertragen werden, um die zweite Schnittstelle auf jeder der mindestens einen externen elektronischen Vorrichtung anzuzeigen.

2. Elektronische Vorrichtung (101) nach Anspruch 1, wobei die Anweisungen bei Ausführung durch den Prozessor die elektronische Vorrichtung dazu veranlassen, eine Schnittstelle bereitzustellen, wobei die Schnittstelle die Nähe der mindestens einen externen elektronischen Vorrichtung angibt, wenn erkannt wird, dass sich die mindestens eine externe elektronische Vorrichtung in der Nähe der elektronischen Vorrichtung befindet.

3. Elektronische Vorrichtung (101) nach Anspruch 1, wobei die Anweisungen bei Ausführung durch den Prozessor die elektronische Vorrichtung zu Folgendem veranlassen:
Identifizieren eines Status der elektronischen Vorrichtung, wenn erkannt wird, dass sich die mindestens eine externe elektronische Vorrichtung in der Nähe der elektronischen Vorrichtung befindet, und
Herstellen einer drahtlosen Verbindung mit der mindestens einen externen elektronischen Vorrichtung, wenn der Status der elektronischen Vorrichtung ein festgelegter Status ist.

4. Elektronische Vorrichtung (101) nach Anspruch 1, wobei die Anweisungen bei Ausführung durch den Prozessor die elektronische Vorrichtung dazu veranlassen, Informationen für eine andere Schnittstelle an die mindestens eine externe elektronische Vorrichtung basierend auf der relativen Position der mindestens einen externen elektronischen Vorrichtung in Bezug auf die elektronische Vorrichtung zu übertragen.

5. Elektronische Vorrichtung (101) nach Anspruch 4, wobei die Anweisungen bei Ausführung durch den Prozessor die elektronische Vorrichtung zu Folgendem veranlassen: Übertragen von Informationen für die erste Schnittstelle, wenn sich die mindestens eine externe elektronische Vorrichtung an einem ersten Standort in Bezug auf die elektronische Vorrichtung befindet, und Übertragen von Informationen für die zweite Schnittstelle, die sich von der ersten Schnittstelle unterscheidet, wenn sich die mindestens eine externe elektronische Vorrichtung an einem zweiten Standort in Bezug auf die elektronische Vorrichtung befindet, wobei sich der zweite Standort von dem ersten Standort unterscheidet,
wobei sich die erste Schnittstelle und die zweite Schnittstelle voneinander unterscheiden und jede von der ersten Schnittstelle und der zweiten Schnittstelle mindestens eine von einer Bildschirmschnittstelle und einer Tonschnittstelle umfasst.

6. Elektronische Vorrichtung (101) nach Anspruch 1, wobei die Anweisungen bei Ausführung durch den Prozessor die elektronische Vorrichtung zu Folgendem veranlassen:
Erkennen einer Änderung der relativen Position der mindestens einen externen elektronischen Vorrichtung in Bezug auf die elektronische Vorrichtung, und
Ändern, basierend auf der Änderung der relativen Position der mindestens einen externen elektronischen Vorrichtung in Bezug auf die elektronische Vorrichtung, der zweiten Schnittstelle für die mindestens eine externe elektronische Vorrichtung zu einer anderen Schnittstelle, die der geänderten relativen Position der mindestens einen externen elektronischen Vorrichtung entspricht, und Bereitstellen der anderen Schnittstelle für die mindestens eine externe elektronische Vorrichtung.

7. Elektronische Vorrichtung (101) nach Anspruch 1, wobei die Anweisungen bei Ausführung durch den Prozessor die elektronische Vorrichtung zu Folgendem veranlassen:
Erkennen eines Mehrgerätemodus, und
Suchen nach der mindestens einen externen elektronischen Vorrichtung, die sich in der Nähe der elektronischen Vorrichtung befindet, innerhalb eines festgelegten Abstandsschwellenwerts, und
wobei die elektronische Vorrichtung und die mindestens eine externe elektronische Vorrichtung einem Benutzerkonto zugeordnet sind.

8. Elektronische Vorrichtung (101) nach Anspruch 1, wobei die Anweisungen bei Ausführung durch den Prozessor die elektronische Vorrichtung zu Folgendem veranlassen:
Zuordnen eines relativen Standorts der mindestens einen externen elektronischen Vorrichtung zu einer festgelegten Matrix, und
Identifizieren der relativen Position der mindestens einen externen elektronischen Vorrichtung in Bezug auf die elektronische Vorrichtung basierend auf einer Analyse der Matrix.

9. Elektronische Vorrichtung (101) nach Anspruch 8, wobei die Anweisungen bei Ausführung durch den Prozessor die elektronische Vorrichtung zu Folgendem veranlassen:
Anzeigen der Matrix auf der Anzeige, wobei die angezeigte Matrix einen Benutzer über den relativen Standort der mindestens einen externen elektronischen Vorrichtung informiert, und
Bewegen mindestens einer externen elektronischen Vorrichtung auf der Matrix, die auf der Anzeige angezeigt wird, um die relative Position der mindestens einen externen elektronischen Vorrichtung in Bezug auf die elektronische Vorrichtung als Reaktion auf eine Benutzereingabe zu korrigieren.

10. Elektronische Vorrichtung (101) nach Anspruch 1, wobei die Anweisungen bei Ausführung durch den Prozessor die elektronische Vorrichtung zu Folgendem veranlassen:
basierend auf mindestens einer von der relativen Position der mindestens einen externen elektronischen Vorrichtung, den Betriebsinformationen, den Statusinformationen und den Informationen über die Nummer der mindestens einen externen elektronischen Vorrichtung Bestimmen einer ersten Funktion für die elektronische Vorrichtung und einer zweiten Funktion für die mindestens eine externe elektronische Vorrichtung, wobei die erste Funktion und die zweite Funktion einer Funktion zugeordnet sind, die durch die elektronische Vorrichtung ausgeführt wird,
Konfigurieren der ersten Schnittstelle und eines ersten Steuerbefehls, der der ersten Funktion im Zusammenhang mit der elektronischen Vorrichtung entspricht, und der zweiten Schnittstelle und eines zweiten Steuerbefehls, der der zweiten Funktion im Zusammenhang mit der mindestens einen externen elektronischen Vorrichtung entspricht,
Ausführen der ersten Funktion und Bereitstellen der ersten Schnittstelle, die der ersten Funktion entspricht, basierend auf dem ersten Steuerbefehl, und
Übertragen des zweiten Steuerbefehls, der die mindestens eine externe elektronische Vorrichtung veranlasst, die zweite Funktion auszuführen und die zweite Schnittstelle bereitzustellen, die der zweiten Funktion entspricht.

11. Betriebsverfahren einer elektronischen Vorrichtung (101), wobei das Verfahren Folgendes umfasst:
Erkennen, ob sich mindestens eine externe elektronische Vorrichtung (203) in der Nähe der elektronischen Vorrichtung (101) befindet, durch ein drahtlose Nahbereichs-Kommunikationsmodul;
**gekennzeichnet durch** das Identifizieren eines Abstands zwischen der elektronischen Vorrichtung (101) und der mindestens einen externen elektronischen Vorrichtung (203) durch das drahtlose Nahbereichs-Kommunikationsmodul;
wenn der identifizierte Abstand gleich einem festgelegten Abstandsschwellenwert oder kleiner als ein festgelegter Abstandsschwellenwert ist, das Herstellen einer Verbindung mit der mindestens einen externen elektronischen Vorrichtung (203) durch festgelegte drahtlose Kommunikation;
basierend auf der Verbindung mit der mindestens einen externen elektronischen Vorrichtung (203) das Erhalten von Standortdaten im Zusammenhang mit der mindestens einen externen elektronischen Vorrichtung (203), Betriebsdaten im Zusammenhang mit der mindest ens einen externen elektronischen Vorrichtung (203) und Informationen über eine Nummer der mindestens einen externen elektronischen Vorrichtung (203), wobei die Betriebsdaten Betriebsinformationen und Statusinformationen umfassen;
das Identifizieren einer relativen Position der mindestens einen externen elektronischen Vorrichtung (203) in Bezug auf die elektronische Vorrichtung (101) basierend auf den Standortdaten;
das Bestimmen einer ersten Schnittstelle für die elektronische Vorrichtung (101) und einer zweiten Schnittstelle, die sich von der ersten Schnittstelle unterscheidet, für jede der mindestens einen externen elektronischen Vorrichtung (203) basierend auf der relativen Position der mindestens einen externen elektronischen Vorrichtung (203), den Betriebsinformationen, den Statusinformationen und den Informationen über die Nummer der mindestens einen externen elektronischen Vorrichtung (203) und
das Anzeigen der ersten Schnittstelle auf der Anzeige und das Übertragen von Steuerungsinformationen an die mindestens eine externe elektronische Vorrichtung, um die zweite Schnittstelle auf jeder der mindestens einen externen elektronischen Vorrichtung anzuzeigen.

12. Verfahren nach Anspruch 11, wobei das Erkennen der mindestens einen externen elektronischen Vorrichtung das Bereitstellen einer Schnittstelle umfasst, wobei die Schnittstelle die Nähe der mindestens einen externen elektronischen Vorrichtung angibt, wenn erkannt wird, dass sich die mindestens eine externe elektronische Vorrichtung in der Nähe der elektronischen Vorrichtung befindet.

13. Verfahren nach Anspruch 11, wobei das Anzeigen der ersten Schnittstelle das Übertragen von Informationen für eine andere Schnittstelle an die mindestens eine externe elektronische Vorrichtung basierend auf der relativen Position der mindestens einen externen elektronischen Vorrichtung in Bezug auf die elektronische Vorrichtung umfasst.

14. Verfahren nach Anspruch 11, wobei das Anzeigen der ersten Schnittstelle Folgendes umfasst:
Erkennen einer Änderung der relativen Position der mindestens einen externen elektronischen Vorrichtung in Bezug auf die elektronische Vorrichtung, und
Ändern, basierend auf der Änderung der relativen Position der mindestens einen externen elektronischen Vorrichtung in Bezug auf die elektronische Vorrichtung, der zweiten Schnittstelle für die mindestens eine externe elektronische Vorrichtung zu einer anderen Schnittstelle, die der geänderten relativen Position der mindestens einen externen elektronischen Vorrichtung entspricht, und Bereitstellen der anderen Schnittstelle für die mindestens eine externe elektronische Vorrichtung.

15. Verfahren nach Anspruch 11, wobei das Erkennen der mindestens einen externen elektronischen Vorrichtung Folgendes umfasst:
Erkennen der Ausführung eines Mehrgerätemodus, und
Suchen nach der mindestens einen externen elektronischen Vorrichtung, die sich in der Nähe der elektronischen Vorrichtung befindet, innerhalb eines festgelegten Entfernungsschwellenwerts, und
wobei die elektronische Vorrichtung und die mindestens eine externe elektronische Vorrichtung einem Benutzerkonto zugeordnet sind.

## Revendications

1. Dispositif électronique (101) comprenant :
un module de communication (190) comprenant un module de communication sans fil à courte portée ;
un dispositif d'affichage (160) ;
un processeur (120) ; et
une mémoire (130) stockant des instructions qui, lorsqu'elles sont exécutées par le processeur (120), amènent le dispositif électronique (101) à :
détecter si au moins un dispositif électronique externe (203) est à proximité du dispositif électronique (101) par l'intermédiaire du module de communication sans fil à courte portée,
identifier une distance entre le dispositif électronique (101) et l'au moins un dispositif électronique externe (203) par l'intermédiaire du module de communication sans fil à courte portée, **caractérisé en ce que** lorsque la distance identifiée est inférieure ou égale à un seuil de distance désigné, établir une connexion avec l'au moins un dispositif électronique externe (203) par l'intermédiaire d'une communication sans fil désignée,
sur la base de la connexion avec l'au moins un dispositif électronique externe (203), obtenir des données d'emplacement relatives à l'au moins un dispositif électronique externe (203), des données de fonctionnement relatives à l'au moins un dispositif électronique externe (203) et des informations sur un nombre de l'au moins un dispositif électronique externe (203), lesdites données de fonctionnement comprenant des informations de fonctionnement et des informations d'état,
identifier une position relative de l'au moins un dispositif électronique externe (203) par rapport au dispositif électronique (101) sur la base des données d'emplacement,
déterminer une première interface pour le dispositif électronique (101) et une seconde interface, différente de la première interface, pour chacun de l'au moins un dispositif électronique externe (203), sur la base de la position relative de l'au moins un dispositif électronique externe (203), des informations de fonctionnement, des informations d'état et des informations sur le nombre des au moins un dispositifs électroniques externes (203), et afficher la première interface sur le dispositif d' affichage et transmettre des informations de commande à l'au moins un dispositif électronique externe pour afficher la seconde interface sur chacun de l'au moins un dispositif électronique externe.

2. Dispositif électronique (101) de la revendication 1, lesdites instructions, lorsqu'elles sont exécutées par le processeur, amenant le dispositif électronique à fournir une interface, l'interface indiquant la proximité de l'au moins un dispositif électronique externe, lors de la détection de l'au moins un dispositif électronique externe à proximité du dispositif électronique.

3. Dispositif électronique (101) de la revendication 1, lesdites instructions, lorsqu'elles sont exécutées par le processeur, amenant le dispositif électronique à :
identifier un état du dispositif électronique lorsque l'au moins un dispositif électronique externe est détecté comme étant à proximité du dispositif électronique, et
établir une connexion sans fil avec l'au moins un dispositif électronique externe, lorsque l'état du dispositif électronique est un état désigné.

4. Dispositif électronique (101) de la revendication 1, lesdites instructions, lorsqu'elles sont exécutées par le processeur, amenant le dispositif électronique à transmettre des informations pour une autre interface à l'au moins un dispositif électronique externe, sur la base de la position relative de l'au moins un dispositif électronique externe par rapport au dispositif électronique.

5. Dispositif électronique (101) de la revendication 4, lesdites instructions, lorsqu'elles sont exécutées par le processeur, amenant le dispositif électronique à : transmettre des informations pour la première interface lorsque l'au moins un dispositif électronique externe se trouve au niveau d'un premier emplacement par rapport au dispositif électronique, et transmettre des informations pour la seconde interface qui est différente de la première interface lorsque l'au moins un dispositif électronique externe se trouve au niveau d'un second emplacement par rapport au dispositif électronique, le second emplacement étant différent du premier emplacement,
ladite première interface et ladite seconde interface étant différentes l'une de l'autre, et chacune de ladite première interface et de ladite seconde interface comprenant au moins l'une d'une interface d'écran et d'une interface sonore.

6. Dispositif électronique (101) de la revendication 1, lesdites instructions, lorsqu'elles sont exécutées par le processeur, amenant le dispositif électronique à :
détecter un changement de la position relative de l'au moins un dispositif électronique externe par rapport au dispositif électronique, et
changer, sur la base du changement de la position relative de l'au moins un dispositif électronique externe par rapport au dispositif électronique, la seconde interface pour l'au moins un dispositif électronique externe en une autre interface correspondant à la position relative changée de l'au moins un dispositif électronique externe, et fournir l'autre interface à l'au moins un dispositif électronique externe.

7. Dispositif électronique (101) de la revendication 1, lesdites instructions, lorsqu'elles sont exécutées par le processeur, amenant le dispositif électronique à :
détecter un mode multidispositif, et
rechercher l'au moins un dispositif électronique externe qui est à proximité du dispositif électronique dans les limites d'un seuil de distance désigné, et
ledit dispositif électronique et ledit au moins un dispositif électronique externe étant associés à un compte d'utilisateur.

8. Dispositif électronique (101) de la revendication 1, lesdites instructions, lorsqu'elles sont exécutées par le processeur, amenant le dispositif électronique à :
cartographier un emplacement relatif de l'au moins un dispositif électronique externe sur une matrice désignée, et
identifier la position relative de l'au moins un dispositif électronique externe par rapport au dispositif électronique, sur la base de l'analyse de la matrice.

9. Dispositif électronique (101) de la revendication 8, lesdites instructions, lorsqu'elles sont exécutées par le processeur, amenant le dispositif électronique à :
afficher la matrice sur le dispositif d'affichage, ladite matrice affichée informant un utilisateur de l'emplacement relatif de l'au moins un dispositif électronique externe, et
déplacer au moins un dispositif électronique externe sur la matrice affichée sur le dispositif d'affichage pour corriger la position relative de l'au moins un dispositif électronique externe par rapport au dispositif électronique en réponse à une entrée utilisateur.

10. Dispositif électronique (101) de la revendication 1, lesdites instructions, lorsqu'elles sont exécutées par le processeur, amenant le dispositif électronique à :
déterminer, sur la base d'au moins l'une de la position relative de l'au moins un dispositif électronique externe, des informations de fonctionnement, des informations d'état et des informations sur le nombre des au moins un dispositifs électroniques externes, une première fonction pour le dispositif électronique et une seconde fonction pour l'au moins un dispositif électronique externe, la première fonction et la seconde fonction étant associées à une fonction qui est exécutée par le dispositif électronique,
configurer la première interface et une première instruction de commande qui correspondent à la première fonction liée au dispositif électronique, et la seconde interface et une seconde instruction de commande qui correspondent à la seconde fonction liée à l'au moins un dispositif électronique externe,
exécuter la première fonction et fournir la première interface correspondant à la première fonction, sur la base de la première instruction de commande, et
transmettre la seconde instruction de commande amenant l'au moins un dispositif électronique externe à exécuter la seconde fonction et à fournir la seconde interface correspondant à la seconde fonction.

11. Procédé de fonctionnement d'un dispositif électronique (101), le procédé comprenant :
la détection pour savoir si au moins un dispositif électronique externe (203) est à proximité du dispositif électronique (101) par l'intermédiaire du module de communication sans fil à courte portée ;
**caractérisé par** l'identification d'une distance entre le dispositif électronique (101) et l'au moins un dispositif électronique externe (203) par l'intermédiaire du module de communication sans fil à courte portée ;
lorsque la distance identifiée est inférieure ou égale à un seuil de distance désigné, l'établissement d'une connexion avec l'au moins un dispositif électronique externe (203) par l'intermédiaire d'une communication sans fil désignée ;
sur la base de la connexion avec l'au moins un dispositif électronique externe (203), l'obtention de données d'emplacement relatives à l'au moins un dispositif électronique externe (203), de données de fonctionnement relatives à l'au moins un dispositif électronique externe (203) et d'informations sur un nombre des au moins un dispositifs électroniques externes (203), lesdites données de fonctionnement comprenant des informations de fonctionnement et des informations d'état,
l'identification d'une position relative de l'au moins un dispositif électronique externe (203) par rapport au dispositif électronique (101) sur la base des données d'emplacement ;
la détermination d'une première interface pour le dispositif électronique (101) et d'une seconde interface, différente de la première interface, pour chacun de l'au moins un dispositif électronique externe (203), sur la base de la position relative de l'au moins un dispositif électronique externe (203), des informations de fonctionnement, des informations d'état et des informations sur le nombre des au moins un dispositifs électroniques externes (203), et
l'affichage de la première interface sur le dispositif d'affichage et la transmission des informations de commande à l'au moins un dispositif électronique externe pour afficher la seconde interface sur chacun de l'au moins un dispositif électronique externe.

12. Procédé de la revendication 11, ladite détection de l'au moins un dispositif électronique externe comprenant la fourniture d'une interface, ladite interface indiquant la proximité de l'au moins un dispositif électronique externe, lors de la détection de l'au moins un dispositif électronique externe à proximité du dispositif électronique.

13. Procédé de la revendication 11, ledit affichage de la première interface comprenant la transmission d'informations pour une autre interface à l'au moins un dispositif électronique externe, sur la base de la position relative de l'au moins un dispositif électronique externe par rapport au dispositif électronique.

14. Procédé de la revendication 11, ledit affichage de la première interface comprenant :
la détection d'un changement de la position relative de l'au moins un dispositif électronique externe par rapport au dispositif électronique ; et
le changement, sur la base du changement de la position relative de l'au moins un dispositif électronique externe par rapport au dispositif électronique, de la seconde interface pour l'au moins un dispositif électronique externe en une autre interface correspondant à la position relative changée de l'au moins un dispositif électronique externe, et fournir l'autre interface à l'au moins un dispositif électronique externe.

15. Procédé de la revendication 11, ladite détection de l'au moins un dispositif électronique externe comprenant :
la détection de l'exécution d'un mode multidispositif, et
la recherche de l'au moins un dispositif électronique externe qui est à proximité du dispositif électronique dans les limites d'un seuil de distance désigné, et
ledit dispositif électronique et ledit au moins un dispositif électronique externe étant associés à un compte d'utilisateur.
